(19) Europäisches Patentamt
European Patent Office
Office européen des brevets

(11) EP 3 323 505 B1

(12) **EUROPEAN PATENT SPECIFICATION**

(45) Date of publication and mention of the grant of the patent:
**17.07.2024 Bulletin 2024/29**

(21) Application number: **16824346.7**

(22) Date of filing: **06.07.2016**

(51) International Patent Classification (IPC):
***B01J 31/18*** (2006.01) ***B01J 31/22*** (2006.01)
***C07F 7/04*** (2006.01) ***C07F 7/08*** (2006.01)
***C07B 61/00*** (2006.01) ***B01J 31/02*** (2006.01)
***B01J 31/04*** (2006.01) ***C07F 7/07*** (2006.01)
*B01J 31/12* (2006.01) *B01J 31/14* (2006.01)

(52) Cooperative Patent Classification (CPC):
**C07F 7/04; B01J 31/0235; B01J 31/04; B01J 31/1805; B01J 31/22; C07F 7/0879;**
B01J 31/0272; B01J 31/0274; B01J 31/122; B01J 31/143; B01J 31/146; B01J 2231/323; B01J 2531/842; B01J 2531/845; C07F 7/07

(86) International application number:
**PCT/JP2016/069989**

(87) International publication number:
**WO 2017/010366 (19.01.2017 Gazette 2017/03)**

(54) **HYDROSILYLATION REACTION CATALYST**

HYDROSILYLIERUNGSREAKTIONSKATALYSATOR

CATALYSEUR POUR LA RÉACTION D'HYDROSILYLATION

(84) Designated Contracting States:
**DE FR GB**

(30) Priority: **14.07.2015 JP 2015140722**

(43) Date of publication of application:
**23.05.2018 Bulletin 2018/21**

(73) Proprietors:
- **Kyushu University, National University Corporation Fukuoka-shi, Fukuoka 812-8581 (JP)**
- **Shin-Etsu Chemical Co., Ltd. Tokyo 100-0004 (JP)**

(72) Inventors:
- **NAGASHIMA Hideo Fukuoka-shi Fukuoka 812-8581 (JP)**
- **SUNADA Yusuke Fukuoka-shi Fukuoka 812-8581 (JP)**
- **TAHARA Atsushi Fukuoka-shi Fukuoka 812-8581 (JP)**
- **NODA Daisuke Fukuoka-shi Fukuoka 812-8581 (JP)**
- **SAKUTA Koji Annaka-shi Gunma 379-0224 (JP)**

(74) Representative: **Mewburn Ellis LLP Aurora Building Counterslip Bristol BS1 6BX (GB)**

(56) References cited:
**EP-A1- 3 406 616**
**WO-A1-2014/133017**
**WO-A1-2016/024607**
**JP-A- H02 791**
**US-A1- 2012 130 106**

- **HAJIME ITO ET AL: "Design and Synthesis of Isocyanide Ligands for Catalysis: Application to Rh-Catalyzed Hydrosilylation of Ketones", CHEMISTRY - AN ASIAN JOURNAL, vol. 2, no. 11, 5 November 2007 (2007-11-05), DE, pages 1436 - 1446, XP055552639, ISSN: 1861-4728, DOI: 10.1002/asia.200700215**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- TANABIKI M ET AL: "NICKEL(II) ISOCYANIDE COMPLEXES AS ETHYLENE POLYMERIZATION CATALYSTS", ORGANOMETALLICS, AMERICAN CHEMICAL SOCIETY, US, vol. 23, no. 16, 2 August 2004 (2004-08-02), pages 3976 - 3981, XP001200010, ISSN: 0276-7333, DOI: 10.1021/OM0498394
- YOSHIDA H ET AL: "ADDITION OF SILICON-SILICON SIGMA-BONDS TO ARYNES OR BISARYNES CATALYZED BY A PALLADIUM COMPLEX", ORGANOMETALLICS, AMERICAN CHEMICAL SOCIETY, US, vol. 24, no. 1, 3 January 2005 (2005-01-03), pages 156 - 162, XP001235666, ISSN: 0276-7333, DOI: 10.1021/OM049276W
- HAGIWARA,TOSHIKAZU ET AL.: "Hydrosilylation of a-methylstyrene and ketones catalyzed by group 10 and rhodium isocyanide complexes", JOURNAL OF MOLECULAR CATALYSIS, vol. 54, 1989, pages 165 - 170, XP055348155, ISSN: 0304-5102
- ADAMS K. PAIGE ET AL.: "The Catalytic Activity of Transition Metal Complexes of Sterically Hindered Isocyanides", JOURNAL OF MOLECULAR CATALYSIS, vol. 29, 1985, pages 201 - 208, XP055348157, ISSN: 0304-5102
- DAISUKE NODA ET AL.: "Sen'i Kinzokuen no Hydrosilane ni yoru Kasseika o Riyo shita Alkene no Hydrosilyl-ka", CSJ: THE CHEMICAL SOCIETY OF JAPAN DAI 95 SHUNKI NENKAI KOEN YOKOSHU II, 11 March 2015 (2015-03-11), pages 284, XP009508377, ISSN: 0285-7626
- SUNADA, YUSUKE ET AL.: "Combinatorial Approach to the Catalytic Hydrosilylation of Styrene Derivatives: Catalyst Systems Composed of Organoiron(0) or (II) Precursors and Isocyanides", ORGANOMETALLICS, vol. 34, 3 June 2015 (2015-06-03), pages 2896 - 2906, XP055348163, ISSN: 0276-7333
- NODA,DAISUKE ET AL.: "Non-Precious-Metal Catalytic Systems Involving Iron or Cobalt Carboxylates and Alkyl Isocyanides for Hydrosilylation of Alkenes with Hydrosiloxanes", JOURNAL OF THE AMERICAN CHEMICAL SOCIETY, vol. 138, 13 January 2016 (2016-01-13), pages 2480 - 2483, XP055348165, ISSN: 0002-7863

## Description

### TECHNICAL FIELD

This invention relates to a hydrosilylation reaction catalyst and more particularly, to a hydrosilylation reaction catalyst formed from a metal compound serving as a catalyst precursor, an isocyanide compound serving as a ligand component, and a promoter.

### BACKGROUND ART

Hydrosilylation reaction which is addition reaction of a Si-H functional compound to a compound having a carbon-carbon double bond or triple bond is a useful method for the synthesis of organosilicon compounds and an industrially important synthesis reaction.

As the catalyst for hydrosilylation reaction, Pt, Pd and Rh compounds are known. Among others, Pt compounds as typified by Speier's catalyst and Karstedt's catalyst are most commonly used.

While several problems arise with reaction in the presence of Pt compounds as the catalyst, one problem is that upon addition of a Si-H functional compound to terminal olefin, a side reaction due to internal rearrangement of olefin takes place. Since this system does not exert addition reactivity to the internal olefin, unreacted olefin is left in the addition product. To drive the reaction to completion, it is necessary to use an excess amount of olefin in advance by taking into account the left by the side reaction.

Another problem is that the selectivity of $\alpha$- and $\beta$-adducts is low depending on the type of olefin.

The most serious problem is that all the center metals Pt, Pd and Rh are quite expensive noble metal elements. As metal compound catalysts which can be used at lower cost are desired, a number of research works have been made thereon.

For example, reaction in the presence of iron-carbonyl complexes (Fe(CO)s, $Fe_3(CO)_{12}$) is known from Non-Patent Document 1, although this reaction requires reaction conditions including as high a temperature as 160°C or photo-irradiation (Non-Patent Document 2).

For these iron-carbonyl complexes, it is reported in Non-Patent Document 3 and Patent Document 1 that products formed by dehydrogenative silylation are obtained rather than the addition reaction.

Also, Non-Patent Document 4 and Patent Document 2 report a reaction of methylvinyldisiloxane and methylhydrogendisiloxane in the presence of an iron-carbonyl complex coordinated with a cyclopentadienyl group. Since dehydrogenative silylation reaction takes place along with the relevant reaction, the selectivity of addition reaction is low.

Non-Patent Document 5 refers to reaction in the presence of an iron catalyst having a terpyridine ligand. Although $PhSiH_3$ and $Ph_2SiH_2$ add to olefins, more useful trialkylsilanes, alkoxysilanes and siloxanes have poor addition reactivity to olefins.

Non-Patent Document 6 reports that from reaction in the presence of an iron catalyst having a terpyridine ligand and a bistrimethylsilylmethyl group, an addition reaction product is obtained in high yields. This method needs some steps until the catalyst is synthesized, including first synthesizing a terpyridine-iron complex as a catalyst precursor and introducing a bistrimethylsilylmethyl group therein at a low temperature, which steps are not easy industrially.

Also, Non-Patent Documents 7 and 8 report iron complexes having a bisiminopyridine ligand. It is disclosed that they exhibit high reactivity to alkoxysilanes and siloxanes under mild conditions.

The reaction using the complex, however, suffers from several problems including low reactivity with internal olefin, the use of sodium amalgam consisting of water-sensitive sodium and highly toxic mercury and requiring careful handling for complex synthesis, low stability of the complex compound itself, a need for a special equipment like a glove box for handling, and a need for storage in an inert gas atmosphere such as nitrogen at low temperature.

Non-Patent Documents 9 to 14 report examples of reaction in the presence of cobalt-carbonyl complexes (e.g., Coz(CO)a), but they are unsatisfactory in the product yield and molar ratio of the catalyst per reactant. No comment is made on the addition reaction of hydrosiloxanes with alkenes.

Also an example of reaction of olefin with trialkylsilane in the presence of a cobalt-carbonyl complex having a trialkylsilyl group is reported in Non-Patent Document 15, but the yield is low and the selectivity is low.

Non-Patent Document 16 reports reaction of olefin with trialkylsilane in the presence of a cobalt-phosphite complex coordinated with a cyclopentadienyl group, and Non-Patent Document 17 reports reaction of olefin with trihydrophenylsilane in the presence of a cobalt complex coordinated with N-heterocyclic carbene. Because of low stability, these complex compounds require a special equipment like a glove box for handling and an inert gas atmosphere and a low temperature for storage.

Also Patent Documents 3 to 6 report iron, cobalt and nickel catalysts having terpyridine, bisiminopyridine and bisiminoquinoline ligands. Like the above-cited Non-Patent Documents 6 to 8, there are problems including industrial difficulty of synthesis of a catalyst precursor or synthesis of the complex catalyst from the precursor, low stability of the

complex compound itself, and a need for a special equipment for handling.

Patent Document 7 discloses a method of conducting reaction in the presence of a complex catalyst having a bisiminoquinoline ligand, using Mg(butadiene)·2THF or $NaEt_3BH$ as the catalyst activator. Likewise, the synthesis is industrially difficult, and the yield of the desired product is less than satisfactory.

Many examples of the nickel complex catalyst are reported. For example, a catalyst having a phosphine ligand (Non-Patent Document 18) lacks in selectivity and requires careful handling and storage.

With a vinylsiloxane-coordinated catalyst (Non-Patent Document 19), a product due to the dehydrogenative becomes predominant, indicating low selectivity of addition reaction.

With an allylphosphine-coordinated catalyst (Non-Patent Document 20), the yield is low, and trihydrophenylsilane is not a reaction substrate of industrial worth.

A metal bisamide catalyst (Non-Patent Document 21) needs careful handling and storage, and dihydrodiphenylsilane is not a reaction substrate of industrial worth.

A catalyst having N-heterocyclocarbene ligand (Non-Patent Document 22) has low selectivity of reaction, and trihydrophenylsilane is not of industrial worth.

Many rhodium complex catalysts are reported. For catalysts having a carbonyl or cyclooctadienyl (COD) group and aN-heterocyclic carbene ligand (Non-Patent Documents 23, 24), for example, there is a need for handling and storage in an inert gas atmosphere because of low stability of these complexes.

Non-Patent Document 25 discloses to conduct reaction in the presence of an ionic liquid in order to enhance reactivity. The step of separating the ionic liquid from the reaction product is necessary. Since the catalyst used therein has a COD group and a N-heterocarbene group as the ligand, the same problems as described above are left.

Also Non-Patent Document 26 reports an exemplary catalyst which allows for preferential progress of dehydrogenation silylation reaction.

Furthermore, Non-Patent Document 27 reports an example in which an aryl isocyanide compound is added to a rhodium complex to form a catalyst, which is used in hydrosilylation reaction without isolation. A study on reactivity with three types of silanes shows that the order of reactivity is from dimethylphenylsilane, which gives the highest yield (yield 81%), next triethylsilane (yield 66%), to triethoxysilane (yield 40%). The reactivity with triethoxysilane which is of the most industrial worth among the three types of silanes is not so high, while the reactivity with siloxanes is reported nowhere.

In addition, the precursor catalyst having a COD group as the ligand requires careful handling and storage.

On the other hand, Non-Patent Document 28 reports that a rhodium catalyst having an acetylacetonato or acetate group enables addition reaction of triethoxysilane in high yields.

Although this method has the advantage of easy storage and handling of the catalyst, no study is made on reactivity with siloxanes which are more useful from the industrial standpoint.

In addition, rhodium is likewise an expensive noble metal element. Its catalytic function must be further increased to a higher activity before it can be used in practice as a platinum substitute.

The catalysts with their application to organopolysiloxanes being borne in mind include a catalyst having a phosphine ligand (Patent Document 8), a catalyst having an aryl-alkyl-triazenide group (Patent Document 9), a colloidal catalyst (Patent Document 10), a catalyst coordinated with a sulfide group (Patent Document 11), and a catalyst coordinated with an amino, phosphino or sulfide group and an organosiloxane group (Patent Document 12).

However, reactivity is empirically demonstrated with respect to only platinum, palladium, rhodium and iridium which are expensive metal elements. Thus the method is not regarded cost effective.

In Examples of Patent Documents 13 and 14, only well-known platinum catalysts are demonstrated to exert a catalytic effect while the structure which is combined with another metal to exert catalytic activity is indicated nowhere.

Patent Documents 15 to 17 disclose catalysts coordinated with N-heterocyclic carbene. Patent Document 15 does not discuss whether or not the catalyst is effective to hydrosilylation reaction.

Patent Documents 16 and 17 disclose catalysts coordinated with N-heterocyclic carbene and vinylsiloxane, but describe only platinum catalysts in Examples.

In addition, the metal catalysts coordinated with N-heterocyclic carbene require careful handling because the complex compounds have low storage stability.

Patent Documents 18 and 19 disclose ruthenium catalysts coordinated with $\eta^6$-arene or $\eta^6$-triene. These catalysts have inferior reactivity to platinum catalysts and require careful handling because the complex compounds have low storage stability.

Patent Documents 20 to 26 disclose a method of mixing a metal salt with a compound which coordinates to the metal and using the product as a catalyst rather than the use of metal complexes as the catalyst. Although these Patent Documents describe the progress of hydrosilylation with several exemplary combinations, the yield and other data are described nowhere, and the extent to which the reaction takes place is not evident. In addition, ionic salts or hydride reducing agents are used as the activator in all examples. Nevertheless, almost all examples exhibit no catalytic activity.

PRIOR ART DOCUMENTS

PATENT DOCUMENTS

| | |
|---|---|
| Patent Document 1: | WO 2013/081794 |
| Patent Document 2: | WO 2010/016416 |
| Patent Document 3: | JP-A 2012-532885 |
| Patent Document 4: | JP-A 2012-532884 |
| Patent Document 5: | JP-A 2013-544824 |
| Patent Document 6: | JP-A 2014-502271 |
| Patent Document 7: | JP-A 2014-503507 |
| Patent Document 8: | JP-A H06-136126 |
| Patent Document 9: | JP-A H06-263780 |
| Patent Document 10: | JP-A H01-315344 |
| Patent Document 11: | JP 3174616 |
| Patent Document 12: | JP-A H07-149780 |
| Patent Document 13: | JP-A 2001-131231 |
| Patent Document 14: | JP 4007467 |
| Patent Document 15: | JP 3599669 |
| Patent Document 16: | JP 3854151 |
| Patent Document 17: | JP 4249702 |
| Patent Document 18: | JP 4934190 |
| Patent Document 19: | JP 5032561 |
| Patent Document 20: | WO 2013/043846 |
| Patent Document 21: | WO 2013/043783 |
| Patent Document 22: | WO 2013/043912 |
| Patent Document 23: | WO 2014/021908 |
| Patent Document 24: | WO 2013/081794 |
| Patent Document 25: | WO 2013/043785 |
| Patent Document 26: | WO 2013/043787 |

NON-PATENT DOCUMENTS

| | |
|---|---|
| Non-Patent Document 1: | A. N. Nesmeyanov et al., Tetrahedron, 1962, 17, 61 |
| Non-Patent Document 2: | M. S. Wrighton et al., J. Organomet. Chem., 1977, 128, 345 |
| Non-Patent Document 3: | F. Kakiuchi et al., J. Organomet. Chem., 1993, 456, 45 |
| Non-Patent Document 4: | H. Nakazawa et al., J. Am. Chem. Soc., 2012, 134, 804 |
| Non-Patent Document 5: | H. Nakazawa et al., Organometallics, 2012, 31, 3825 |
| Non-Patent Document 6: | P. J. Chirik et al., Organometallics, 2012, 31, 4886 |
| Non-Patent Document 7: | P. J. Chirik et al., J. Am. Chem. Soc., 2004, 126, 13794 |
| Non-Patent Document 8: | P. J. Chirik et al., Science, 2012, 335, 567 |
| Non-Patent Document 9: | A. J. Chalk et al., J. Am. Chem. Soc., 1965, 87, 1133 |
| Non-Patent Document 10: | A. J. Chalk et al., J. Am. Chem. Soc., 1967, 89, 1640 |
| Non-Patent Document 11: | A. J. Chalk et al., J. Organomet. Chem., 1970, 21, 207 |
| Non-Patent Document 12: | B. A. Izmailov et al., J. Organomet. Chem., 1978, 149, 29 |
| Non-Patent Document 13: | N. Sonoda et al., J. Org. Chem., 1987, 52, 4864 |
| Non-Patent Document 14: | S. Murai et al., Chem. Lett., 2000, 14 |
| Non-Patent Document 15: | M. S. Wrighton et al., Inorg. Chem., 1980, 19, 3858 |
| Non-Patent Document 16: | B. E. Grant et al., J. Am. Chem. Soc., 1993, 115, 2151 |

(continued)


| | |
|---|---|
| Non-Patent Document 17: | L. Deng et al., Angew. Chem. Int. Ed., 2013, 52, 10845 |
| Non-Patent Document 18: | M. Umeno et al., J. Organomet. Chem., 1973, 50, 297 |
| Non-Patent Document 19: | I. Kownacki et al., J. Organomet. Chem., 2000, 597, 175 |
| Non-Patent Document 20: | P. Valerga et al., Dalton Trans., 2007, 3000 |
| Non-Patent Document 21: | T. D. Tilley et al., Chem. Commun., 2012, 48, 7146 |
| Non-Patent Document 22: | P. Valerga et al., Organometallics, 2012, 31, 2175 |
| Non-Patent Document 23 : | T. A. Nile et al., J. Organomet. Chem., 1977, 137, 293 |
| Non-Patent Document 24: | M. R. Buchmeiser et al., J. Organomet. Chem., 2005, 690, 4433 |
| Non-Patent Document 25: | X. Li et al., J. Organomet. Chem., 2011, 696, 2116 |
| Non-Patent Document 26: | S. P. Nolan et al., Dalton Trans., 2013, 42, 270 |
| Non-Patent Document 27: | J. M. Walters et al., J. Molecular Catalysis, 1985, 29, 201 |
| Non-Patent Document 28: | M. F. Lappert et al., J. Organomet. Chem., 1979, 172, 153 |


## SUMMARY OF THE INVENTION

## PROBLEMS TO BE SOLVED BY THE INVENTION

An object of the invention, which has been made under the above-mentioned circumstances, is to provide a hydrosilylation reaction catalyst which helps hydrosilylation reaction take place under mild conditions and is good in handling and shelf storage; and a method for preparing an addition compound by hydrosilylation reaction using the same.

## MEANS FOR SOLVING THE PROBLEMS

Making extensive investigations to attain the above objects, the inventors have found that a catalyst which is obtained using a specific metal compound as the catalyst precursor, an isocyanide compound as the ligand component, and a specific metal or metal compound serving as the promoter exerts a high activity to hydrosilylation reaction and helps addition reaction take place under mild conditions. The invention is predicated on this finding.
The invention provides a catalyst, a method and a use as defined in the claims.

## ADVANTAGEOUS EFFECTS OF THE INVENTION

The metal compound from which the hydrosilylation reaction catalyst of the invention is prepared is readily available as a commercial product or by synthesis in a well-known way. The metal compound is quite easy to handle because of no need for storage at low temperature or in an inert gas atmosphere and no need for handling (e.g., metering) in a glove box, and maintains high activity even after long-term exposure to air.
On the other hand, the isocyanide compound serving as the ligand can also be stored at room temperature, and requires no special equipment upon handling.
Furthermore, the compound serving as the promoter is readily available as a commercial product or by synthesis in a well-known way.
Also, since the inventive catalyst does not possess such a ligand as carbonyl group, $\eta^4$-diene group, $\eta^5$-cyclopentadienyl group, $\eta^6$-arene or triene group, it has advantages including shelf stability, ease of handling and high reactivity.
The catalyst prepared from the metal compound, isocyanide compound and promoter may be used after isolation as a metal complex compound, or it may be prepared in a hydrosilylation reaction system and used therein without isolation.
If hydrosilylation reaction between a compound containing an aliphatic unsaturated group and a silane or polysiloxane having a Si-H group is carried out in the presence of the catalyst prepared from the metal compound, isocyanide compound and promoter, addition reaction is possible under such conditions as room temperature to 100°C. The catalyst allows the reaction temperature to be lowered or the reaction time to be shortened, as compared with the catalyst prepared without using the promoter. In particular, addition reaction with industrially useful polysiloxanes, trialkoxysilanes and dialkoxysilanes takes place effectively.
Although the cited documents describe that addition reaction to an unsaturated group and reaction to produce an unsaturated compound by dehydrogenative silylation reaction often take place at the same time as the relevant reaction, the use of the inventive catalyst ensures selective progress of addition reaction to an unsaturated group.
Further, in the reaction with internal olefin which is difficult with the prior art catalysts, an addition reaction

product accompanied with the migration of an unsaturated group to the terminal is obtainable. The invention is thus quite useful in the silicone industry.

## BRIEF DESCRIPTION OF THE DRAWINGS

[FIG. 1] FIG. 1 is a model showing the results of x-ray crystallographic analysis on Iron complex A obtained in Synthesis Example 3.

## EMBODIMENT FOR CARRYING OUT THE INVENTION

Below the invention is described in more detail.

The invention provides a hydrosilylation reaction catalyst which is prepared from (A) a metal compound as a catalyst precursor, (B) an isocyanide compound as a ligand, and (C) a metal or metal compound as a promoter.

The metal compound (A) serving herein as a catalyst precursor is at least one compound selected from a neutral metal salt having the formula (1), an anionic complex ion having the formula (2), and a cationic complex ion having the formula (3). With the availability, cost and other factors of the metal compound taken into account, it is preferred to use the neutral metal salt having formula (1).

$$(M)^{1+}\{(A)^{m-}\}_n \qquad (1)$$

$$\{(B)^{j+}\}_k(M)^{1+}\{(A)^{m-}\}_{n'} \qquad (2)$$

$$(M)^{1+}(L)_p\{(A)^{m-}\}_n \qquad (3)$$

In formulae (1) to (3), M is at least one element selected from manganese, iron, ruthenium, cobalt, nickel, and palladium. With the availability and cost of the metal salt, catalytic activity and the like taken into account, manganese, iron, ruthenium, cobalt, and nickel are preferred, and manganese, iron, cobalt, and nickel which are first-row transition metals are more preferred.

It is noted that each of the metal compounds of formulae (1) to (3) may be either a mononuclear species consisting of a single transition metal or a polynuclear species consisting of identical or different transition metals.

Provided that a compound consisting of an acid and a base is represented by $\{H^+\}_m(A)^{m-}$, A in formulae (1) to (3) corresponds to the conjugate base. Where a plurality of A's are included, they may be identical or different.

In formula (1), l is an integer of 1 to 8 and equal to the valence number of the transition metal M, m is an integer of 1 to 3, satisfying $l = m \times n$.

Notably, in the metal compound (metal salt) having formula (1), water or a solvent may coordinate with the metal element (M).

In formula (2), $(B)^{j+}$ is at least one selected from a lithium ion, sodium ion, potassium ion, tetraalkylammonium ion and tetraalkylphosphonium ion.

The subscript j is an integer of 1 to 3,1 and m are as defined above, n' is an integer of 2 to 9, satisfying $(j \times k) + 1 = m \times n'$, the overall molecule being neutral.

The tetraalkylammonium ions containing $C_1$-$C_5$ alkyl and the tetraalkylphosphonium ions containing $C_1$-$C_5$ alkyl are preferred.

It is noted that four alkyl groups on the nitrogen or phosphorus atom may be identical or different.

In formula (3), L is a neutral ligand selected from water, tetrahydrofuran, dimethoxyethane, acetonitrile, pyridine, benzene, toluene, p-cymene, cyclooctane, 1,5-hexadiene, 1,5-cyclooctadiene, norbornadiene, and ammonia, l, m and n are as defined above, satisfying $l = m \times n$, and p is an integer of 1 to 6.

With the stability and cost of the catalyst precursor taken into account, water, tetrahydrofuran, dimethoxyethane, acetonitrile and pyridine are preferred.

It is noted that the metal compound having formula (1) is a neutral compound in which metal element M and conjugate base A are in a direct bond, whereas the metal compound having formula (3) is a cationic complex ion in which M and A are not in a direct bond.

In formulae (1) to (3), l represents the valence number of the metal M. Specifically, l is preferably 1 to 7, more preferably 2 to 3 when M is manganese;

l is preferably 1 to 4, more preferably 2 to 3 when M is iron;
l is preferably 1 to 4, more preferably 2 to 3 when M is ruthenium, with a mixed valence compound wherein l is 2 and 3 being acceptable;
l is preferably 1 to 3, more preferably 2 to 3 when M is cobalt;

l is preferably 1 to 2, more preferably 2 when M is nickel; and
l is preferably 1, 2 or 4, more preferably 2 when M is palladium.

In formula (1) to (3), A corresponds to the conjugate base $(A)^{m-}$. $\{H^+\}_m(A)^{m-}$ is selected from hydrogen halide, nitric acid, sulfuric acid, carboxylic acid, dicarboxylic acid, tricarboxylic acid, sulfonic acid, dithiocarbamic acid, aliphatic alcohol, aromatic alcohol, organosilanol, heterocyclic alcohol, primary amine, and secondary amine.

It is noted that when the compound is an acid in the form of oxide, nitride, sulfide or phosphide, it is acceptable that the ratio to the metal element is not an integral ratio. Also water or a coordinatable organic compound as mentioned above may coordinate to the metal.

Of the compounds $\{H^+\}_m(A)^{m-}$, hydrogen halides of the formula wherein m is 1 and A is halogen are preferred, with hydrogen chloride or hydrogen bromide of the formula wherein A is chlorine or bromine being more preferred.

Of the compounds $\{H^+\}_m(A)^{m-}$, carboxylic acids of the formula wherein m is 1 and A is a conjugate base of carboxylic acid as represented by formula (6) are also preferred.

[Chemical Formula 4]

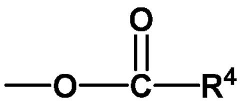 (6)

In formula (6), $R^4$ is an optionally substituted $C_1$-$C_{20}$ monovalent organic group, or a monovalent organic group having the formula (6-1).

$-(Z)_r-R^5$ (6-1)

The $C_1$-$C_{20}$ monovalent organic groups are preferably $C_1$-$C_{20}$ monovalent hydrocarbon groups, though not limited thereto.

Suitable monovalent hydrocarbon groups include alkyl, alkenyl, alkynyl, aryl and aralkyl groups.

The alkyl groups may be straight, branched or cyclic. Examples include straight or branched alkyl groups such as methyl, ethyl, n-propyl, isopropyl, n-butyl, isobutyl, s-butyl, t-butyl, n-pentyl, n-hexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, and n-eicosanyl; and cycloalkyl groups such as cyclopropyl, cyclobutyl, cyclopentyl, cyclohexyl, cycloheptyl, cyclooctyl, cyclononyl, norbornyl, and adamantyl.

Examples of the alkenyl group include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl, n-1-pentenyl, n-1-decenyl, and n-1-eicosenyl.

Examples of the alkynyl group include ethynyl, n-1-propynyl, n-2-propynyl, n-1-butynyl, n-2-butynyl, n-3-butynyl, 1-methyl-2-propynyl, n-1-pentynyl, n-2-pentynyl, n-3-pentynyl, n-4-pentynyl, 1-methyl-n-butynyl, 2-methyl-n-butynyl, 3-methyl-n-butynyl, 1,1-dimethyl-n-propynyl, n-1-hexynyl, n-1-decynyl, n-1-pentadecynyl, and n-1-eicosynyl.

Examples of the aryl group include phenyl, 1-naphthyl, 2-naphthyl, anthryl, phenanthryl, o-biphenylyl, m-biphenylyl, and p-biphenylyl.

Examples of the aralkyl group include benzyl, phenylethyl, phenylpropyl, naphthylmethyl, naphthylethyl, and naphthylpropyl.

Also, the $C_1$-$C_{20}$ monovalent organic group may have a substituent or a plurality of identical or different substituents at an arbitrary position(s), and the substituents are selected from halogen atoms such as fluorine, chlorine, bromine and iodine, alkoxy groups such as methoxy, ethoxy and propoxy, and amino groups such as dialkylamino.

In formula (6-1), Z is a $C_1$-$C_{20}$ divalent organic group, and r is an integer of 0 or 1.

The $C_1$-$C_{20}$ divalent organic groups are preferably $C_1$-$C_{20}$ divalent hydrocarbon groups, but not limited thereto.

Suitable divalent hydrocarbon groups include alkylene, arylene and aralkylene groups.

The alkylene groups may be straight, branched or cyclic ones, preferably $C_1$-$C_{10}$ alkylene groups. Examples include straight or branched alkylene groups such as methylene, ethylene, propylene, trimethylene, n-butylene, isobutylene, s-butylene, n-octylene, 2-ethylhexylene, n-decylene, n-undecylene, n-dodecylene, n-tridecylene, n-tetradecylene, n-pentadecylene, n-hexadecylene, n-heptadecylene, n-octadecylene, n-nonadecylene, and n-eicosanylene; and cycloalkylene groups such as 1,4-cyclohexylene.

Examples of the arylene group include o-phenylene, m-phenylene, p-phenylene, 1,2-naphthylene, 1,8-naphthylene, 2,3-naphthylene, and 4,4'-biphenylene.

Examples of the aralkylene group include $-(CH_2)_w-Ar-$ wherein Ar is a $C_6$-$C_{20}$ arylene group and w is an integer of 1 to 10, $-Ar-(CH_2)_w-$ wherein Ar and w are as defined above, and $-(CH_2)_w-Ar-(CH_2)_w-$ wherein Ar is as defined above and w is each independently as defined above.

$R^5$ is a silyl or polyorganosiloxane group having the formula (6-2).

$$-\{Si(R^6)_2-R^7\}_s-Si(R^6)_t\{[(OSi(R^6)_2)]_u-R^6\}_v \qquad (6\text{-}2)$$

In formula (6-2), $R^6$ is each independently a $C_1$-$C_{20}$ alkyl group, $C_1$-$C_{20}$ alkoxy group, $C_6$-$C_{20}$ aryl group, or $C_7$-$C_{20}$ aralkyl group, $R^7$ is a $C_1$-$C_{10}$ divalent hydrocarbon group, s is an integer of 0 or 1, t is an integer of 0 to 3, v is an integer of 0 to 3, satisfying t+v = 3, and u is an integer of 1 to 300. Preferred is a silyl or polyorganosiloxane group having the formula (6-3) corresponding to formula (6-2) wherein s=0.

$$-Si(R^6)_t\{[(OSi(R^6)_2)]_u-R^6\}_v \qquad (6\text{-}3)$$

The $C_1$-$C_{20}$ alkoxy groups are preferably $C_1$-$C_{10}$ alkoxy groups. Examples include methoxy, ethoxy, n-propoxy, i-propoxy, n-butoxy, i-butoxy, s-butoxy, t-butoxy, n-pentoxy, n-hexoxy, n-heptyloxy, n-octyloxy, n-nonyloxy, and n-decyloxy.

Suitable alkyl, aryl and aralkyl groups are as exemplified above for $R^4$.

Examples of the $C_1$-$C_{10}$ divalent hydrocarbon group represented by $R^7$ include alkylene groups such as ethylene, trimethylene, and propylene, preferably ethylene.

Examples of the silyl or polyorganosiloxane group having formula (6-2) include, but are not limited to, trimethylsilyl, triethylsilyl, phenyldimethylsilyl, trimethoxysilyl, triethoxysilyl, pentamethyldisiloxy, bistrimethylsiloxymethylsilyl, tristrimethylsiloxysilyl, polydimethylsiloxy groups of the formula: $-Si(Me)_2\{OSi(Me)_2\}_{t-1}-OSiMe_3$ wherein t is as defined above, and polydimethylsiloxy groups of the formula:
$-Si(Me)_2\{OSi(Me)_2\}_{t-1}-OSiMe_2nBu$ wherein t is as defined above.

Besides the groups of formula (6-2), $R^5$ may be a siloxane group of dendrimer type which is highly branched via silethylene groups.

Of the foregoing, $R^4$ is preferably an optionally halo-substituted $C_1$-$C_{10}$ alkyl group, and more preferably an optionally halo-substituted $C_1$-$C_5$ alkyl group.

It is preferred that in formula (1), m is 1 and A is a conjugate base represented by the formula (7).

[Chemical Formula 5]

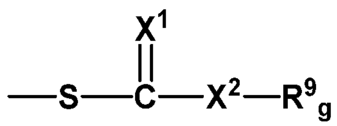

(7)

In formula (7), $X^1$ is an oxygen or sulfur atom, $X^2$ is a carbon, oxygen, sulfur or nitrogen atom, g is equal to 3 when $X^2$ is carbon, equal to 2 when $X^2$ is nitrogen, and equal to 1 when $X^2$ is oxygen or sulfur, $R^9$ is an optionally substituted $C_1$-$C_{20}$ monovalent organic group. Suitable $C_1$-$C_{20}$ monovalent organic groups are as exemplified above.

Examples include conjugate bases of thioacetic acid, thiopropionic acid, thiobenzoic acid, N,N-dimethyldithiocarbamic acid, N,N-diethyldithiocarbamic acid, N,N-dibutyldithiocarbamic acid, N,N-dibenzyldithiocarbamic acid, and N,N-ethylphenyldithiocarbamic acid.

Preferred as the conjugate base of formula (7) are conjugate bases of $C_1$-$C_{20}$ diorganodithiocarbamic acids, more preferably conjugate bases of $C_1$-$C_5$ dialkyldithiocarbamic acids.

Further preferably, in formula (1), m is 1 and A is a conjugate base capable of forming a metal-oxygen bond as represented by O-D wherein D is an optionally substituted $C_1$-$C_{20}$ monovalent organic group.

Suitable $C_1$-$C_{20}$ monovalent organic groups are as exemplified above, and preferably include alkyl groups such as methyl, ethyl, propyl and butyl and aryl groups such as phenyl, 1-naphthyl and 2-naphthyl, with isopropyl or phenyl being more preferred.

In these groups, one or more or all hydrogen atoms may be substituted by substituents. Examples of the substituent include halogen atoms such as fluorine and chlorine, alkoxy groups such as methoxy, ethoxy and propoxy, and amino groups such as dialkylamino.

Further, the salts of formula (1) wherein m is 1 and A is a conjugate base capable of forming a metal-oxygen bond as represented by O-E are advantageously used.

Herein E is a monovalent organic group providing a 1,3-diketonate structure of formula (5).

[Chemical Formula 6]

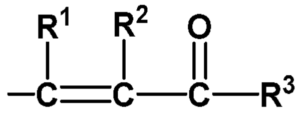

(5)

In formula (5), $R^1$ to $R^3$ are each independently hydrogen or an optionally substituted $C_1$-$C_{20}$ monovalent organic group.

Suitable $C_1$-$C_{20}$ monovalent organic groups are as exemplified above.

$R^1$ to $R^3$ are preferably hydrogen or $C_1$-$C_5$ alkyl groups. More preferably $R^1$ and $R^3$ are methyl, and $R^2$ is hydrogen, indicating that O-E is acetylacetonate.

Examples of the metal compound of formula (1) wherein $(A)^{m-}$ is a conjugate base of inorganic acid include $FeCl_2$, $FeBr_2$, $FeCl_3$, $FeBr_3$, $FeI_3$, $MnCl_2$, $MnBr_2$, $MnI_2$, $CoCl_2$, $CoBr_2$, $CoI_2$, $NiCl_2$, $NiBr_2$, $NiI_2$, $RuCl_2$, $RuCl_3$, $PdCl_2$, $PdBr_2$, $PdI_2$; $Mn(NO_3)_2$, $Fe(NO_3)_3$, $Co(NO_3)_2$, $Ni(NO_3)_2$; $MnSO_4$, $FeSO_4$, $CoSO_4$, $Fe_2(SO_4)_3$, $NiSO_4$.

Examples of the metal compound of formula (1) wherein $(A)^{m-}$ is a conjugate base of organic acid include monocarboxylic salts such as manganese(II) acetate (abbreviated as $Mn(OAc)_2$, hereinafter),

$Mn(OAc)_3$, manganese biscyclohexanebutyrate, $Fe(OAc)_2$, iron(II) lactate, iron(II) pivalate, iron(III) stearate, iron(III) acrylate, $Co(OAc)_2$, cobalt pivalate, cobalt benzoate, cobalt 2-ethylhexanoate, cobalt biscyclohexanebutyrate, nickel formate, $Ni(OAc)_2$, nickel biscyclohexanebutyrate, nickel stearate, $Ru_2(OAc)_4Cl$, and $Pd(OAc)_2$;

dicarboxylic salts such as iron(II) fumarate, iron(II) oxalate, iron(II) ammonium citrate, iron(III) oxalate, and iron(III) tartrate; tricarboxylic salts such as iron(III) citrate;

1,3-diketonates such as bis(acetylacetonato)manganese (abbreviated as $Mn(acac)_2$, hereinafter), bis(hexafluoroacetylacetonato)manganese, $Fe(acac)_2$, $Mn(acac)_3$, tris(2,2,6,6-tetramethyl-3,5-heptadionato)iron, tris(hexafluoroacetylacetonato)iron, Co(acac)z, $Co(acac)_3$, tris(2,2,6,6-tetramethyl-3,5-heptadionato)cobalt, tris(hexafluoroacetylacetonato)cobalt, $Ni(acac)_3$,

bis(2,2,6,6-tetramethyl-3,5-heptadionato)nickel, bis(hexafluoroacetylacetonato)nickel, $Ru(acac)_3$, $Pd(acac)_3$; sulfonic salts such as

bis(p-toluenesulfonic acid)iron, bis(camphorsulfonic acid)iron,

bis(trifluoromethanesulfonic acid)iron, tris(trifluoromethanesulfonic acid)iron, bis(benzenesulfonic acid)nickel.

Examples of the metal compound of formula (1) wherein $(A)^{m-}$ is an organic weak acid include alkoxide salts such as $Mn(OMe)_2$, $Fe(OMe)_2$, $Fe(OEt)_3$, $Fe(O^iPr)_3$, and $Co(O^iPr)_2$.

It is noted that these metal salts are available as commercial products or via synthesis by the methods described in the literature (e.g., J. Cluster, Sci., 2005, 16, 331; Inorganic Chemistry, 2007, 46, 3378; Organometallics, 1993, 12, 2414; Russ. Chem. Bull., 1999, 48, 1751; J. Inorg. Nucl. Chem., 1966, 28, 2285).

Examples of the metal compound of formula (2) wherein $(A)^{m-}$ is a conjugate base of an inorganic acid include lithium tetrabromonickelate(II), potassium hexachlororhenate, potassium hexachlororuthenate(III), lithium tetrachloropalladate(II),

sodium tetrachloropalladate(II), sodium tetrabromopalladate(II),

potassium tetrachloropalladate(II), potassium tetrabromopalladate(II);

tetraethylammonium tetrachloromanganate(II), tetraethylammonium tetrachlorocobaltate(II), tetraethylammonium tetrachloronickelate(II), tetraethylammonium tetrachloroferrate(II), and tetra-n-butylammonium tetrachloroferrate(II).

Exemplary of the metal compound of formula (2) wherein $(A)^{m-}$ is a conjugate base of an organic acid is Iron complex A: sodium tris(1,1,1,3,3,3-hexafluoroisopropoxy)ferrate(II) dimer-2THF.

Examples of the oxide include lithium permanganate, potassium permanganate, lithium ferrate, lithium cobaltate, and potassium ruthenate.

Of these metal compounds, the halides, carboxylic salts, alkoxide salts, and 1,3-diketonate salts having formula (1) are preferred when catalytic activity, cost, and stability are taken into account.

The isocyanide compound used as the ligand (B) in the invention is at least one compound selected from isocyanide compounds having the formula (4a).

$$Y^1\text{-}(NC)_q \qquad (4a)$$

In formula (4a), $Y^1$ is a $C_1$-$C_{30}$ monovalent hydrocarbon group, q is 1.

Suitable monovalent hydrocarbon groups include alkyl, alkenyl, alkynyl, aryl and aralkyl groups. Examples of the alkyl, alkenyl, alkynyl, aryl and aralkyl groups are as exemplified above.

Examples of the isocyanide compound having formula (4a) which can be advantageously used herein as the ligand include, but are not limited to, alkyl isocyanides such as methyl isocyanide, ethyl isocyanide, n-propyl isocyanide, cyclopropyl isocyanide, n-butyl isocyanide, isobutyl isocyanide, sec-butyl isocyanide, t-butyl isocyanide, n-pentyl isocyanide, isopentyl isocyanide, neopentyl isocyanide, n-hexyl isocyanide, cyclohexyl isocyanide, cycloheptyl isocyanide, 1,1-dimethylhexyl isocyanide, 1-adamantyl isocyanide, and 2-adamantyl isocyanide; aryl isocyanides such as phenyl isocyanide, 2-methylphenyl isocyanide, 4-methylphenyl isocyanide, 2,4-dimethylphenyl isocyanide, 2,5-dimethylphenyl isocyanide, 2,6-dimethylphenyl isocyanide, 2,4,6-trimethylphenyl isocyanide, 2,4,6-tri-t-butylphenyl isocyanide, 2,6-diisopropylphenyl isocyanide, 1-naphthyl isocyanide, 2-naphthyl isocyanide, 2-methyl-1-naphthyl isocyanide; aralkyl isocyanides such as benzyl isocyanide and phenylethyl isocyanide.

These isocyanide compounds may be synthesized, for example, by the method involving formylation and dehydration reactions using an amine compound corresponding to the isocyanide, or by the method described in Organometallics, 2013, 21, 7153-7162, using a benzoxazole.

Furthermore, the hydrosilylation promoter used herein is a metal compound which becomes a catalyst precursor when added to the reaction system, or a compound which reacts with a complex resulting from complex formation between a metal compound and an isocyanide ligand, to produce a catalytic active species efficiently and strengthen the catalytic action of catalytic active species to enhance its activity.

The promoters used in the hydrosilylation reaction catalyst of the present invention as defined in claims 1-15 are selected from the formulae (8) to (10) and (12) to (14), while the promoter of formula (11) is for the use of a compound of the present invention as defined in claim 18.

$$(M^1)^{+}\{(G^1)^{-}\}_1 \qquad (8)$$

$$(M^2)^{2+}\{(G^2)^{-}\}_2 \qquad (9)$$

$$(M^3)^{3+}\{(G^3)^{-}\}_3 \qquad (10)$$

$$(M^4)^{4+}\{(G^4)^{-}\}_4 \qquad (11)$$

$$\{(J)^{b+}\}_d\{(M^5)^{a+}\}_e\{(G^5)^{-}\}_{\{(a\times e)+(b\times d)\}} \qquad (12)$$

$$(M^6)^{c+}(G^6)^{-}_c \qquad (13)$$

$$M^7 \qquad (14)$$

In formula (8), $M^1$ is lithium, sodium or potassium.

$G^1$ is hydrogen or a $C_1$-$C_{20}$ monovalent hydrocarbon group, $C_1$-$C_{20}$ alkoxy group, $C_6$-$C_{20}$ aryloxy group, or $C_1$-$C_{20}$ organosiloxy group. Suitable $C_1$-$C_{20}$ monovalent hydrocarbon groups are as exemplified above.

Examples of the $C_6$-$C_{20}$ aryloxy group include phenoxy and naphthoxy.

Examples of the $C_1$-$C_{20}$ organosiloxy group include trimethylsiloxy, triethylsiloxy and triphenylsiloxy.

Examples of the promoter having formula (8) include methyllithium, n-butyllithium, phenyllithium, lithium acetylide, and lithium hydride.

In formula (9), $M^2$ is magnesium or zinc.

$G^2$, which may be identical or different, is each independently halogen, or a $C_1$-$C_{20}$ monovalent hydrocarbon group. Examples of the halogen, and monovalent hydrocarbon are as exemplified above.

Preferably $G^2$ is halogen, $C_1$-$C_5$ alkyl, or phenyl.

Examples of the promoter having formula (9) include methylmagnesium chloride, methylmagnesium bromide, ethylmagnesium chloride, ethylmagnesium bromide, n-butylmagnesium chloride, n-butylmagnesium bromide, phenylmagnesium chloride, phenylmagnesium bromide, diethylmagnesium, diphenylmagnesium, dimethylzinc, diethylzinc, diisopropylzinc, diphenylzinc, methylzinc chloride, isopropylzinc bromide, propylzinc bromide, butylzinc bromide, isobutylzinc bromide, and phenylzinc bromide.

In formula (10), $M^3$ is boron or aluminum.

$G^3$ is each independently hydrogen, halogen, or a $C_1$-$C_{20}$ monovalent hydrocarbon group, $C_1$-$C_{20}$ alkoxy group, or $C_6$-$C_{20}$ aryloxy group. Examples of the halogen, monovalent hydrocarbon, alkoxy, and aryloxy groups are as exemplified above.

$G^3$ is preferably hydrogen, halogen or $C_1$-$C_{20}$ monovalent hydrocarbon group, more preferably hydrogen,

halogen, $C_1$-$C_5$ alkyl or phenyl.

Examples of the promoter having formula (10) include diisobutylaluminum hydride; organic boron hydrides such as borane, pinacol borane, catechol borane, 9-borabicyclo[3,3,1]nonane; organoaluminum compounds such as trimethylaluminum, triethylaluminum, triisobutylaluminum, ethylaluminum dichloride, dimethylaluminum chloride, diethylaluminum chloride, and isobutylaluminum dichloride; organic boranes such as trimethlborane, triethylborane and triphenylborane.

In formula (11), $M^4$ is silicon.

$G^4$ is each independently hydrogen, a $C_1$-$C_{20}$ monovalent hydrocarbon group, $C_1$-$C_{20}$ alkoxy group, $C_1$-$C_{20}$ organosiloxy group, with the proviso that at least one of four groups $G^4$ is hydrogen. Examples of these groups are as exemplified above.

Preferably, at least one of four groups $G^4$ is hydrogen and the remaining is a $C_1$-$C_{20}$ hydrocarbon group or $C_1$-$C_{20}$ alkoxy group. More preferably, at least one $G^4$ is hydrogen and the remaining is a $C_1$-$C_5$ alkyl, phenyl or $C_1$-$C_5$ alkoxy group.

Examples of the promoter having formula (11) include hydrosilanes such as phenylsilane, diphenylsilane, dimethylphenylsilane, ethyldimethylsilane, 1,1,3,3-tetramethyldisiloxane, 1,1,1,3,3-pentamethyldisiloxane, 1,1,1,3,5,5,5-heptamethyltrisiloxane, trimethoxysilane, triethoxysilane, dimethoxymethylsilane, diethoxymethylsilane, and ethoxydimethylsilane.

Of the hydrosilane promoters, alkoxysilanes such as trimethoxysilane, triethoxysilane, dimethoxymethylsilane, diethoxymethylsilane, and ethoxydimethylsilane are preferred from the standpoint of promoting ability.

Understandably, when the hydrosilane promoter is used in the practice of the invention, a hydrosilane of different type from the hydrosilane used as the substrate in hydrosilylation reaction is chosen.

In the ate complex having formula (12), $(J)^{b+}$ is lithium ion, sodium ion, or potassium ion.

$M^5$ is boron or aluminium.

$G^5$ is each independently hydrogen, or a $C_1$-$C_{20}$ monovalent hydrocarbon group. Examples of these groups are as exemplified above.

The subscript a is an integer of 3, b, d and e are each independently an integer of 1.

Examples of the promoter having formula (12) include sodium tetraphenylborate, lithium tetrakis(pentafluorophenyl)borate, lithium tetrakis(3,5-bistrifluoromethylphenyl)borate, sodium tetrakis(3,5-bistrifluoromethylphenyl)borate, lithium borohydride, sodium borohydride, lithium triethylborohydride, lithium tri-sec-butylborohydride, sodium triethylborohydride, sodium tri-sec-butylborohydride, potassium triethylborohydride, potassium tri-sec-butylborohydride, lithium aluminum hydride, lithium aluminum tri-t-butoxyhydride.

In formula (13), $M^6$ is lithium, sodium, potassium or silver.

$G^6$ is a group: $-O-(CO)-R^8$, or a group: $-N(R^9)-C(R^9)=N(R^9)$, wherein $R^8$ is a $C_1$-$C_{20}$ monovalent organic group, $R^9$ is each independently $C_1$-$C_{10}$ monovalent alkyl group or phenyl group.

c is an integer of 1.

Preferably, $R^8$ is a $C_1$-$C_5$ alkyl group which may be substituted with halogen.

Suitable metal alkoxides include lithium methoxide, sodium methoxide, potassium methoxide, lithium t-butoxide, sodium t-butoxide, potassium t-butoxide, and potassium trimethylsiloxide; suitable metal carboxylates include lithium acetate, sodium acetate, potassium acetate, silver acetate, sodium pivalate, and potassium pivalate; suitable metal amidinates include lithium N,N'-diisopropylacetamidinate, lithium N,N'-dicyclohexylacetamidinate, lithium N,N'-diisopropylbenzamidinate, and lithium N,N'-dicyclohexylbenzamidinate.

In formula (14), $M^7$ is a zero-valent metal selected from one or more of lithium, sodium, potassium, magnesium, and zinc.

Although the amounts of the metal compound, isocyanide compound and promoter used in preparing the hydrosilylation reaction catalyst of the invention are not particularly limited, preferably 1 equivalent of the metal compound is combined with about 0.5 to 20 equivalents of the isocyanide compound and about 1 to 50 equivalents of the promoter, more preferably about 1 to 10 equivalents of the isocyanide compound and about 1 to 20 equivalents of the promoter, even more preferably about 2 to 8 equivalents of the isocyanide compound and about 2 to 10 equivalents of the promoter.

Although no upper limit is imposed on the amount of the metal compound used, the upper limit is preferably about 10 mol%, more preferably 5 mol% of the metal compound per mole of the substrate, unsaturated aliphatic compound as viewed from the economical aspect.

When hydrosilylation reaction is performed in the presence of the inventive hydrosilylation reaction catalyst, the amount of the catalyst used is not particularly limited. In order that the reaction take place under mild conditions of the order of room temperature to about 100°C to form the desired compound in high yields, the catalyst is preferably used in an amount of at least 0.01 mol%, more preferably at least 0.05 mol% of metal compound per mole of the substrate, unsaturated aliphatic compound.

Although no upper limit is imposed on the amount of the metal compound used, the upper limit is preferably about 10 mol%, more preferably 5 mol% of the metal compound per mole of the substrate as viewed from the economical

aspect.

A well-known two-electron donative ligand may be used in combination with the inventive hydrosilylation reaction catalyst as long as the activity of the catalyst is not impaired. Although the two-electron donative ligand is not particularly limited, ligands other than carbonyl are preferred, for example, ammonia molecules, ether compounds, amine compounds, phosphine compounds, phosphite compounds, and sulfide compounds.

In a preferred embodiment, the hydrosilylation reaction catalyst is prepared from the metal compound, isocyanide compound and promoter in a reaction system where hydrosilylation reaction of an unsaturated aliphatic compound with a hydrosilane compound or organohydropolysiloxane compound having a Si-H group is carried out, and used in the reaction system.

In this embodiment, once the catalyst is prepared from the metal compound, isocyanide compound and promoter, the unsaturated aliphatic compound and the hydrosilane compound or organohydropolysiloxane compound having a Si-H group may be added thereto, or separate sets of some components may be fed, or all components may be fed at a time.

Although the hydrosilylation reaction conditions are not particularly limited, generally the reaction temperature is about 10 to about 100°C, preferably 20 to 80°C and the reaction time is about 1 to about 48 hours.

Although catalyst preparation and hydrosilylation reaction may be conducted in a solventless system, an organic solvent may be used if necessary.

The organic solvent, if used, may be of any type as long as the reaction is not affected. Examples include aliphatic hydrocarbons such as pentane, hexane, heptane, octane, and cyclohexane, ethers such as diethyl ether (referred to as Et$_2$O, hereinafter), diisopropyl ether, dibutyl ether, cyclopentyl methyl ether, tetrahydrofuran (referred to as THF, hereinafter), 1,4-dioxane, and dimethoxyethane (referred to as DME, hereinafter); and aromatic hydrocarbons such as benzene, toluene, xylene, and mesitylene.

In conducting hydrosilylation reaction in the presence of the inventive hydrosilylation reaction catalyst, as long as a compound having an aliphatic unsaturated bond such as an olefin, silane or organopolysiloxane compound having an aliphatic unsaturated bond and a silane or organopolysiloxane compound having a Si-H bond are used in combination, no limit is imposed on the structure of the respective compounds.

The hydrosilylation reaction in the presence of the inventive hydrosilylation reaction catalyst is applicable to all applications which are industrially implemented using prior art platinum catalysts, including silane coupling agents obtained from an olefin compound having an aliphatic unsaturated bond and a silane compound having a Si-H bond, and modified silicone oils obtained from an olefin compound having an aliphatic unsaturated bond and an organopolysiloxane having a Si-H bond, as well as silicone cured products obtained from an organopolysiloxane compound having an aliphatic unsaturated bond and an organopolysiloxane having a Si-H bond.

## EXAMPLES

Synthesis Examples, Examples, Reference Examples and Comparative Examples are given below by way of illustration.

All solvents were deoxygenated and dehydrated by well-known methods before they were used in the preparation of metal compounds.

The metal compounds obtained were stored in a nitrogen gas atmosphere at 25°C until they were used in reaction.

Hydrosilylation reaction and solvent purification of alkenes were always carried out in an inert gas atmosphere. The solvents and other ingredients were purified, dried and deoxygenated by well-known methods before they were used in various reactions.

Analysis of $^1$H-NMR spectroscopy was performed by JNM-LA 400 of JEOL Ltd., IR spectroscopy by FT/IR-550 of JASCO Corp., and x-ray crystallography analysis by VariMax (MoK $\alpha$-ray 0.71069 angstrom) of Rigaku Corp.

It is understood that hydrogen atoms are omitted from the chemical structural formula, shown below, according to the conventional expression. OAc stands for an acetoxy group ($CH_3CO_2$), OPv for pivaloxy group [$(CH_3)_3CO_2$], acac for acetylacetonato anion, Me for methyl, iPr for isopropyl, and Ph for phenyl.

(1) Synthesis of metal compounds

[Synthesis Example 1] Synthesis of iron pivalate

With reference to J. Cluster Sci., 2005, 16, 331, the compound was synthesized by the following procedure.

A 50 mL two-neck recovery flask equipped with a reflux tube was charged with 0.86 g (15.4 mmol) of reduced iron (Kanto Kagaku Co., Ltd.) and 3.50 g (34.3 mmol) of pivalic acid (Tokyo Chemical Industry Co., Ltd.), which were stirred at 160°C for 12 hours. On this occasion, the reaction solution turned from colorless to green. Further 2.50 g (24.5

mmol) of pivalic acid was added to the solution, which was stirred at 160°C for 19 hours. Thereafter, the reaction solution was filtered, and the filtrate was combined with the recovered supernatant and dried in vacuum at 80°C. The resulting solid was washed with EtzO, obtaining a green solid (2.66 g, yield 67%).
FT-IR (KBr) ν : 2963, 2930, 2868, 1583, 1523, 1485, 1457, 1427, 1379, 1362, 1229, 1031, 938, 900, 790, 608, 576, 457 $cm^{-1}$

[Synthesis Example 2] Synthesis of cobalt pivalate

With reference to Russ. Chem. Bull., 1999, 48, 1751, the compound was synthesized by the following procedure.

A 50 mL two-neck recovery flask equipped with a reflux tube was charged with 1.15 g (6.5 mmol) of cobalt acetate (Wako Pure Chemical Industries, Ltd.), 1.55 g (15.2 mmol) of pivalic acid, and 0.5 mL (2.5 mmol) of pivalic anhydride (Tokyo Chemical Industry Co., Ltd.), which were stirred at 160°C for 1 hour. On this occasion, the reaction solution turned from thin purple to purple. Thereafter, the reaction solution was dried in vacuum at 80°C. The resulting solid was washed with pentane and EtzO and dried, obtaining a purple solid (1.15 g, yield 68%).
FT-IR (KBr) ν : 2963, 2929, 2868, 1599, 1524, 1485, 1457, 1420, 1379, 1363, 1229, 1032, 938, 900, 792, 613, 585, 460 $cm^{-1}$

[Synthesis Example 3] Synthesis of iron complex A

A 100 mL two-neck recovery flask with a stirrer was charged with 550 mg (12.6 mmol) of NaH (55%) in paraffin and 20 mL of EtzO, and cooled down to 0°C. To the flask, 2.50 mL (24.1 mmol) of 1,1,1,3,3,3-hexafluoroisopropanol was slowly added dropwise, followed by stirring at 25°C for 1 hour. Thereafter, the reaction product was dried in vacuum and washed 3 times with hexane, obtaining 2.45 g of sodium 1, 1, 1,3,3,3-hexafluoroisopropoxide (abbreviated as NaHFIP, hereinafter).

In a nitrogen-blanketed glove box, 0.10 g (0.79 mmol) of $FeCl_2$ and 5 mL of toluene were added to a screw-top vial with a stirrer. A solution of 0.33 g (1.71 mmol) of NaHFIP in 1 mL of THF was added dropwise to the vial, followed by stirring at 25°C for 1 week. Thereafter, the solid was removed by centrifugation, and the reaction product was recrystallized at -30°C, obtaining iron complex A (78 mg, yield 15%). The result of x-ray crystallography analysis on iron complex A is depicted in FIG. 1.

[Synthesis Example 4] Synthesis of iron camphorsulfonate

An argon-purged 20 mL two-neck recovery flask equipped with a reflux tube was charged with 0.99 g (17.7 mmol) of mass iron, 8.30 g (35.7 mmol) of camphorsulfonic acid, and 9 mL of distilled water, which were stirred at 150°C for 17.5 hours. Thereafter, the solution without cooling was passed through a Celite filter to remove the iron residue, and the filtrate was cooled, allowing crystals to precipitate. The precipitate was collected by filtration, obtaining 2.26 g of yellow crystals.

The yellow crystals, 2.04 g, was placed in a 20 mL Schlenk flask and vacuum dried at 160°C for 1 hour, obtaining a yellow solid (1.41 g, yield 15%).

[Synthesis Example 5] Synthesis of Cobalt carboxylate A

A 1 L flask equipped with a reflux tube was charged with 184.0 g (1.0 mol) of 10-undecylenic acid and 150.0 g of toluene and heated at 80°C. To the solution, 100.6 g (0.625 mol) of hexamethyldisilazane was added dropwise. After the addition was complete, the solution was heated at 80°C for further 3 hours. The volatile was removed by heating at 100°C under reduced pressure, obtaining $CH_2=CH(CH_2)_8COOSiMe_3$ (Silylated compound A) (254.4 g, yield 99.4%).

A 1 L flask equipped with a reflux tube was charged with 254.4 g (0.99 mol) of Silylated compound A and 100.0 g of toluene and heated at 90°C. To the solution, 0.5 g of a 0.5 wt% toluene solution of chloroplatinic acid was added, and 264.7 g (1.19 mol) of 1,1,1,3,5,5,5-heptamethyltrisiloxane was added dropwise. After the addition was complete, the solution was heated at 100°C for further 2 hours. The volatile was removed by heating at 120°C under reduced pressure, obtaining $(Me_3SiO)_2MeSi(CH_2)_{10}COOSiMe_3$ (Addition compound B) (451.2 g, yield 95.0%).

A 1 L flask was charged with 239.0 g (0.5 mol) of Addition compound B and 140.0 g of methanol, which were stirred at room temperature for 14 hours. By distillation, the target compound: $(Me_3SiO)_2MeSi(CH_2)_{10}COOH$ was obtained (b.p. 175.0-176.0°C/0.3 kPa, 162.4 g, yield 80.0%). It had a purity of 99.5% as analyzed by gas chromatography.

Then a 20 mL recovery flask was charged with 0.43 g (2.41 mmol) of cobalt acetate and 2.0 g (4.92 mmol) of the above-synthesized $(Me_3SiO)_2MeSi(CH_2)_{10}COOH$, which were stirred at 180°C for 1 hour. Thereafter, the product was dried in vacuum at the temperature for 1 hour, obtaining Cobalt carboxylate A.
FT-IR (KBr) ν : 2958, 2924, 2583, 1555, 1413, 1257, 1078, 1049, 842, 799, 783, 754, 687 $cm^{-1}$

[Synthesis Example 6] Synthesis of Cobalt carboxylate B

A 500 mL flask equipped with a reflux tube was charged with 100.0 g (1.16 mol) of 3-butenoic acid and 80.0 g of hexane and heated at 70°C. To the solution, 117.0 g (0.73 mol) of hexamethyldisilazane was added dropwise. After the addition was complete, the solution was heated at 70°C for further 3 hours. The reaction solution was distilled, obtaining the desired compound: $CH_2=CHCH_2COOSiMe_3$ (Silylated compound B) (b.p. 60.0-62.0°C/5.3 kPa, amount 155.1 g, yield 84.6%). It had a purity of 94.4% as analyzed by gas chromatography.

A 500 mL flask equipped with a reflux tube was charged with 155.1 g (0.98 mol) of Silylated compound B and 150.0 g of toluene and heated at 90°C. To the solution, 0.5 g of a 0.5 wt% toluene solution of chloroplatinic acid was added, and 239.8 g (1.08 mol) of 1,1,1,3,5,5,5-heptamethyltrisiloxane was added dropwise. After the addition was complete, the solution was heated at 100°C for further 2 hours. The reaction solution was distilled, obtaining the desired compound: $(Me_3SiO)_2MeSi(CH_2)_3COOSiMe_3$ (Addition compound B) (b.p. 97.0-98.5°C/0.3 kPa, amount 253.8 g, yield 68.1%). It had a purity of 98.7% as analyzed by gas chromatography.

Next, a 500 mL flask was charged with 207.5 g (0.55 mol) of Addition compound B and 100.0 g of methanol, which were stirred at room temperature for 14 hours. By distillation, the target compound: $(Me_3SiO)_2MeSi(CH_2)_3COOH$ was obtained (b.p. 119.5-121.0°C/0.3 kPa, amount 109.5 g, yield 64.6%). It had a purity of 98.6% as analyzed by gas chromatography.

Then a 20 mL recovery flask was charged with 0.20 g (1.13 mmol) of cobalt acetate and 0.70 g (2.28 mmol) of $(Me_3SiO)_2MeSi(CH_2)_3COOH$, which were stirred at 160°C for 1 hour. Thereafter, the product was dried in vacuum at the temperature for 1 hour, obtaining Cobalt carboxylate B (amount 0.40 g).
FT-IR (KBr) ν : 2958, 2901, 2880, 1686, 1561, 1413, 1259, 1176, 1078, 1041, 842, 797, 755 $cm^{-1}$

[Synthesis Example 7] Synthesis of Cobalt carboxylate C

A 1 L flask equipped with a reflux tube was charged with 184.0 g (1.0 mol) of 10-undecylenic acid and 150.0 g of toluene and heated at 80°C. To the solution, 100.6 g (0.625 mol) of hexamethyldisilazane was added dropwise. After the addition was complete, the solution was heated at 80°C for further 3 hours. The volatile was removed by heating at 100°C under reduced pressure, obtaining $CH_2=CH(CH_2)_8COOSiMe_3$ (same as the above Silylated compound A) (amount 254.3 g, yield 99.3%).

A 1 L flask equipped with a reflux tube was charged with 51.2 g (0.20 mol) of Silylated compound A and heated at 90°C. To the flask, 0.2 g of a 0.5 wt% toluene solution of chloroplatinic acid was added, and 94.5 g (0.23 mol) of $nBu(Me_2)SiO(Me_2SiO)_3Si(Me_2)H$ was added dropwise. After the addition was complete, the solution was heated at 100°C for further 2 hours. The unreacted compounds were removed by heating at 200°C under reduced pressure, obtaining the desired compound: $nBu(Me_2)SiO(Me_2SiO)_3Si(Me_2)(CH_2)_{10}COOSiMe_3$ (Addition compound C) (amount 127.0 g, yield 95.0%).

A 500 mL flask was charged with 127.0 g (0.19 mol) of Addition compound C and 100.0 g of methanol, which were stirred at room temperature for 14 hours. The volatiles were removed by heating at 100°C under reduced pressure, obtaining the desired compound: $nBu(Me_2)SiO(Me_2SiO)_3Si(Me_2)(CH_2)_{10}COOH$ (amount 111.0 g, yield 98.0%). It had a purity of 99.8% as analyzed by gas chromatography.

Then a 20 mL recovery flask was charged with 0.20 g (1.13 mmol) of cobalt acetate and 1.35 g (2.26 mmol) of $nBu(Me_2)SiO(Me_2SiO)_3Si(Me_2)(CH_2)_{10}COOH$, which were stirred at 160°C for 1 hour. Thereafter, the product was dried in vacuum at the temperature for 1 hour, obtaining Cobalt carboxylate C (amount 0.93 g).
FT-IR (KBr) ν : 2960, 2924, 2854, 1560, 1457, 1412, 1259, 1088, 1037, 840, 798 $cm^{-1}$

[Synthesis Example 8] Synthesis of Cobalt carboxylate D

A 20 mL recovery flask was charged with 0.50 g (2.87 mmol) of cobalt acetate and 1.47 g (5.74 mmol) of palmitic acid, which were stirred at 170°C for 1 hour. Thereafter, the product was dried in vacuum at the temperature for 1 hour, obtaining Cobalt carboxylate D (amount 1.50 g).

FT-IR (KBr) ν : 2915, 2849, 1543, 1467, 141, 1317, 720 $cm^{-1}$

HRMS (FAB+) m/z calcd. for $C_{32}H_{63}O_4Co$: 570.4053, found 570.4056

[Synthesis Example 9] Synthesis of Cobalt carboxylate E

A 20 mL recovery flask was charged with 0.50 g (2.84 mmol) of cobalt acetate and 1.46 g (5.70 mmol) of isopalmitic acid, which were stirred at 170°C for 1 hour.

Thereafter, the product was dried in vacuum at the temperature for 1 hour, obtaining Cobalt carboxylate E (amount 1.50 g).

FT-IR (KBr) v : 2954, 1922, 2853, 1603, 1577, 1457, 1417, 1260, 1276, 765 $cm^{-1}$

HRMS (FAB+) m/z calcd. for $C_{32}H_{63}O_4Co$: 570.4053, found 570.4029

[Synthesis Example 10] Synthesis of Cobalt carboxylate F

A 20 mL recovery flask was charged with 0.51 g (2.89 mmol) of cobalt acetate and 1.62 g (5.71 mmol) of isostearic acid (isomer mixture, Nissan Chemical Industries Ltd.), which were stirred at 170°C for 1 hour. Thereafter, the product was dried in vacuum at the temperature for 1 hour, obtaining Cobalt carboxylate F (amount 1.50 g).
FT-IR (KBr) ν: 2952, 2867, 1618, 1576, 1457, 1424, 1363, 1276, 765 $cm^{-1}$

[Synthesis Example 11] Synthesis of Iron carboxylate A

First [(Fe(mesityl)(μ-mesityl)]$_2$ was synthesized. A 100 mL Schlenk flask was charged with 2.63 g (20.7 mmol) of $FeCl_2$, 30 mL of THF, and 10 mL of 1,4-dioxane and cooled down to -78°C. A THF solution of mesitylmagnesium bromide Grignard reagent was slowly added to the flask, followed by stirring at 25°C for 2 hours. On this occasion, the reaction solution turned from a brown suspension to a red suspension. Thereafter, the precipitated solid was separated by centrifugation and dried in vacuum. The resulting red solid was dissolved in diethyl ether, after which the solid was separated again by centrifugation and recrystallized at -30°C, obtaining a crystal (4.36 g, yield 72%). The crystal was identified by $^1$H-NMR analysis in $C_6D_6$.

Next, 0.20 g (0.34 mmol) of the thus obtained [(Fe(mesityl)(μ-mesityl)]$_2$ was fed to a vial and dissolved in 10 mL of EtzO. With stirring, 0.56 g (1.37 mmol) of $(Me_3SiO)_2MeSi(CH_2)_{10}COOH$ was slowly added dropwise. This was followed by distillation under reduced pressure, obtaining brown Iron carboxylate A (amount 0.72 g).
FT-IR (KBr) v : 2958, 2923, 2854, 1524, 1441, 1257, 1050, 843, 783, 754 $cm^{-1}$

[Synthesis Example 12] Synthesis of Iron carboxylate B

To a vial, 0.20 g (0.34 mmol) of [(Fe(mesityl)(μ-mesityl)]$_2$ in Synthesis Example 11 was fed and dissolved in 10 mL of EtzO. With stirring, 0.42 g (1.37 mmol) of $(Me_3SiO)_2MeSi(CH_2)_3COOH$ was slowly added dropwise. This was followed by distillation under reduced pressure, obtaining brown Iron carboxylate B (amount 0.60 g).
FT-IR (KBr) v : 2957, 1609, 1576, 1542, 1457, 1406, 1257, 1038, 835, 795, 780, 751 $cm^{-1}$

[Synthesis Example 13] Synthesis of Iron carboxylate C

To a vial, 0.20 g (0.34 mmol) of [(Fe(mesityl)(μ-mesityl)]$_2$ in Synthesis Example 11 was fed and dissolved in 10 mL of EtzO. With stirring, 0.82 g (1.37 mmol) of $nBu(Me_2)SiO(Me_2SiO)_3Si(Me_2)(CH_2)_{10}COOH$ was slowly added dropwise. This was followed by distillation under reduced pressure, obtaining brown Iron carboxylate C (amount 1.02 g).
FT-IR (KBr) v : 2959, 2922, 2853, 1558, 1542, 1457, 1417, 1276, 1258, 1057, 1029, 838, 792, 765, 750 $cm^{-1}$

[Synthesis Example 14] Synthesis of Iron carboxylate D

To a vial, 0.20 g (0.34 mmol) of [(Fe(mesityl)(μ-mesityl)]$_2$ in Synthesis Example 11 was fed and dissolved in 10 mL of EtzO. With stirring, 0.35 g (1.37 mmol) of palmitic acid was slowly added dropwise. This was distilled under reduced pressure, obtaining brown Iron carboxylate D (amount 0.35 g).
FT-IR (KBr) v : 2959, 2922, 2853, 1558, 1542, 1457, 1406, 1257, 1038, 835, 795, 780, 751 $cm^{-1}$

[Synthesis Example 15] Synthesis of Iron carboxylate E

To a vial, 0.20 g (0.34 mmol) of [(Fe(mesityl)(μ-mesityl)]$_2$ in Synthesis Example 11 was fed and dissolved in 10 mL of EtzO. With stirring, 0.35 g (1.37 mmol) of isopalmitic acid was slowly added dropwise. This was distilled under reduced pressure, obtaining brown Iron carboxylate E (amount 0.52 g).
FT-IR (KBr) v : 2954, 2922, 2853, 1560, 1523, 1456, 1418, 1276, 1260, 764, 723 $cm^{-1}$

[Synthesis Example 16] Synthesis of Iron carboxylate F

To a vial, 0.20 g (0.34 mmol) of $[(Fe(mesityl)(\mu\text{-mesityl})]_2$ in Synthesis Example 11 was fed and dissolved in 10 mL of EtzO. With stirring, 0.39 g (1.36 mmol) of isostearic acid (isomer mixture, Nissan Chemical Industries Ltd.) was slowly added dropwise. This was distilled under reduced pressure, obtaining brown Iron carboxylate F (amount 0.62 g).
FT-IR (KBr) ν : 2952, 2905, 2867, 1557, 1542, 1523, 1457, 1418, 1363, 1276, 1260, 764, 750 $cm^{-1}$

[Synthesis Example 17] Synthesis of Isocyanide L-1 (not part of the present invention)

The compound was synthesized by the following procedure while conducting N-formylation of an amine compound with reference to Org. Synth., 2013, 90, 358-366 and conversion of an N-formylated compound to isocyanide with reference to Organometallics, 2004, 23, 3976-3981.
A 300 mL flask was charged with 57.1 g (0.56 mol) of acetic anhydride and cooled to an internal temperature of 5°C. To the flask, 51.5 g (1.12 mol) of formic acid was added dropwise. The mixture was stirred for 30 minutes with the flask kept cool, further stirred for 2 hours at an internal temperature of 40°C, and cooled to room temperature.
A 500 mL flask was charged with 106.0 g (0.30 mol) of 3-aminopropyl-tristrimethylsiloxysilane and 120.0 g of tetrahydrofuran and cooled to an internal temperature of -15°C. The reaction solution prepared above was added dropwise to the flask at such a rate that the internal temperature might not exceed -5°C. After the completion of dropwise addition, stirring was continued at -15°C for further 2 hours. Then the volatile was removed by an evaporator, obtaining 118.2 g of a N-formylated crude product.
A 2 L flask was charged with 118.2 g of the N-formylated product, 120.0 g of methylene chloride, and 109.5 g (1.08 mol) of diisopropylamine, and cooled to an internal temperature of 5°C. To the flask, 52.3 g (0.34 mol) of phosphoryl chloride was added dropwise. The mixture was stirred for 2 hours with the flask kept cool. Then 750.0 g of 20 wt% sodium carbonate aqueous solution was added dropwise such that the internal temperature might not exceed 20°C. After the completion of dropwise addition, the solution was stirred at room temperature for 15 hours. The resulting salt was filtered off and the water layer was separated. The organic layer was washed with water 3 times, dried over magnesium sulfate, filtered, and distilled, obtaining the target compound: $(Me_3SiO)_3SiCH_2CH_2CH_2NC$ (amount 62.7 g, yield 57.6%, b.p. 95.5-96.0°C/0.3 kPa). It had a purity of 99.6% as analyzed by gas chromatography.

[Synthesis Example 18] Synthesis of Isocyanide L-2 (not part of the present invention)

The compound was synthesized by the same procedure as in Synthesis Example 17.
A 300 mL flask was charged with 26.5 g (0.26 mol) of acetic anhydride and cooled to an internal temperature of 5°C. To the flask, 23.9 g (0.52 mol) of formic acid was added dropwise. The mixture was stirred for 30 minutes with the flask kept cool, further stirred for 2 hours at an internal temperature of 40°C, and cooled to room temperature.
A 500 mL flask was charged with 65.4 g (0.14 mol) of $nBu(Me_2)SiO(Me_2SiO)_3Si(Me_2)CH_2CH_2CH_2NH_2$ and 100.0 g of tetrahydrofuran and cooled to an internal temperature of -15°C. The reaction solution prepared above was added dropwise to the flask at such a rate that the internal temperature might not exceed -5°C. After the completion of dropwise addition, stirring was continued at -15°C for further 2 hours. Then the volatile was removed by an evaporator, obtaining 69.1 g of a N-formylated crude product.
A 1 L flask was charged with 69.1 g of the N-formylated product, 120.0 g of methylene chloride, and 49.3 g (0.49 mol) of diisopropylamine, and cooled to an internal temperature of 5°C. To the flask, 23.6 g (0.15 mol) of phosphoryl chloride was added dropwise. The mixture was stirred for 2 hours with the flask kept cool. Then 350.0 g of 20 wt% sodium carbonate aqueous solution was added dropwise such that the internal temperature might not exceed 20°C. After the completion of dropwise addition, the solution was stirred at room temperature for 15 hours. The resulting salt was filtered off and the water layer was separated. The organic layer was washed with water 3 times, dried over magnesium sulfate, filtered, and distilled, obtaining the target compound: $nBu(Me_2)SiO(Me_2SiO)_3Si(Me_2)CH_2CH_2CH_2NC$ (amount 52.2 g, yield 77.8%, b.p. 145-147°C/0.3 kPa). It had a purity of 97.2% as analyzed by gas chromatography.

[Synthesis Example 19] Synthesis of Isocyanide L-3 (not part of the present invention)

The compound was synthesized by the same procedure as in Synthesis Example 17.
A 300 mL flask was charged with 57.1 g (0.56 mol) of acetic anhydride and cooled to an internal temperature of 5°C. To the flask, 51.5 g (1.12 mol) of formic acid was added dropwise. The mixture was stirred for 30 minutes with the flask kept cool, further stirred for 2 hours at an internal temperature of 40°C, and cooled to room temperature.
A 500 mL flask was charged with 37.2 g (0.15 mol) of $H_2NCH_2CH_2CH_2(Me_2)SiOSi(Me_2)CH_2CH_2CH_2NH_2$ and 100.0 g of tetrahydrofuran and cooled to an internal temperature of -15°C. The reaction solution prepared above was

added dropwise to the flask at such a rate that the internal temperature might not exceed -5°C. After the addition was complete, stirring was continued at -15°C for further 2 hours. Then the volatile was removed by an evaporator, obtaining 46.7 g of a N-formylated crude product.

A 2 L flask was charged with 46.7 g of the N-formylated product, 120.0 g of methylene chloride, and 106.1 g (1.05 mol) of diisopropylamine, and cooled to an internal temperature of 5°C. To the flask, 50.7 g (0.33 mol) of phosphoryl chloride was added dropwise. The mixture was stirred for 2 hours with the flask kept cool. Then 750.0 g of 20 wt% sodium carbonate aqueous solution was added dropwise such that the internal temperature might not exceed 20°C. After the addition was complete, the solution was stirred at room temperature for 15 hours. The resulting salt was filtered off and the water layer was separated. The organic layer was washed with water 3 times, dried over magnesium sulfate, filtered, and distilled, obtaining the target compound: $CNCH_2CH_2CH_2(Me_2)SiOSi(Me_2)CH_2CH_2CH_2NC$ (amount 17.4 g, yield 43.3%, b.p. 133-134°C/0.3 kPa). It had a purity of 97.8% as analyzed by gas chromatography.

[Synthesis Example 20] Synthesis of cobalt 2-ethylhexanoate

A 20 mL recovery flask was charged with 1.00 g (5.65 mmol) of cobalt acetate and 1.63 g (11.3 mmol) of 2-ethylhexanoic acid, which were stirred at 170°C for 2 hours. The reaction product was dried under reduced pressure at the temperature for 1 hour, then at 190°C for 2 hours, obtaining cobalt 2-ethylhexanoate (amount 1.93 g).

(2) Hydrosilylation reaction of styrene with 1,1,3,3,3-pentamethyldisiloxane using iron pivalate, 1-isocyanoadamantane, and borane as hydrosilylation promoter

[Chemical Formula 7]

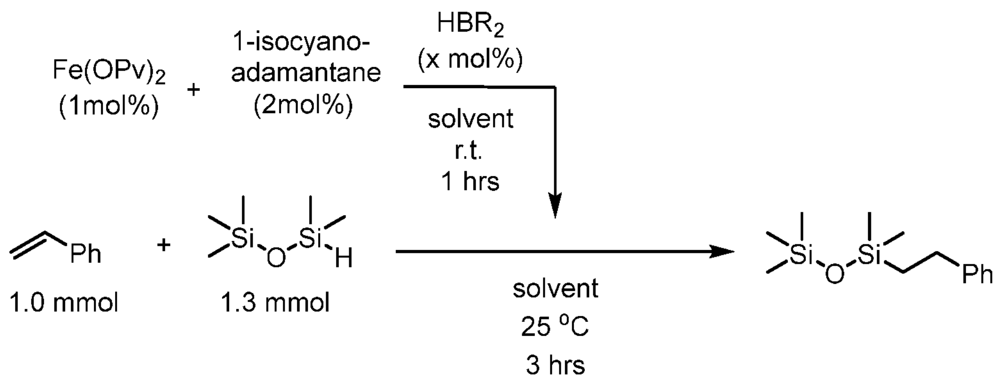


[Example 1] Hydrosilylation reaction using pinacol borane as promoter

A reactor was charged with 3 mg (0.01 mmol) of iron pivalate in Synthesis Example 1, 3 mg (0.02 mmol) of 1-isocyanoadamantane, and 0.1 mL of THF, which were dissolved. To the solution, 5 mg (0.04 mmol) of pinacol borane (abbreviated as HBpin, hereinafter) was added, followed by stirring at room temperature for 1 hour. On this occasion, the yellow solution turned dark red. Thereafter, 115 μL (1.0 mmol) of styrene and 254 μL (1.3 mmol) of 1,1,3,3,3-pentamethyldisiloxane were added to the solution, which was stirred at 25°C for 3 hours. At the end of reaction, 1.0 mmol of anisole as an internal standard was added to the reaction solution and stirred. A small amount of the solution was separated from the reaction mixture, and dissolved in deuteronchloroform, passed through an alumina column to remove the catalyst, and analyzed by $^1$H-NMR spectroscopy to determine the structure and yield of the product. (It is noted that in the following Examples, a test sample was prepared by the same procedure and analyzed by $^1$H-NMR spectroscopy.) As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 1.
$^1$H-NMR (396 MHz, $CDCl_3$) δ:
7.28 (t, J=7.2, 2H), 7.23-7.14 (m, 3H), 2.69-2.62 (m, 2H), 0.93-0.87 (m, 2H), 0.10 (s, 9H), 0.08 (s, 6H)

[Example 2] Hydrosilylation reaction using 9-borabicyclo[3,3,1]nonane dimer (abbreviated as 9-BBN, hereinafter) as promoter

A reactor was charged with 3 mg (0.01 mmol) of iron pivalate in Synthesis Example 1, 3 mg (0.02 mmol) of 1-isocyanoadamantane, and 0.1 mL of DME, which were dissolved. To the solution, 2 mg (0.01 mmol) of 9-BBN was added, followed by stirring at room temperature for 1 hour. On this occasion, the yellow solution turned dark red. Thereafter, 115 μL (1.0 mmol) of styrene and 254 μL (1.3 mmol) of 1,1,3,3,3-pentamethyldisiloxane were added to the solution, which was stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 1.

[Example 3] Hydrosilylation reaction using catechol borane as promoter

A reactor was charged with 3 mg (0.01 mmol) of iron pivalate in Synthesis Example 1, 3 mg (0.02 mmol) of 1-isocyanoadamantane, and 0.1 mL of DME, which were dissolved. To the solution, 5 mg (0.04 mmol) of catechol borane (abbreviated as HBcat, hereinafter) was added, followed by stirring at room temperature for 1 hour. On this occasion, the yellow solution turned dark red. Thereafter, 115 μL (1.0 mmol) of styrene and 254 μL (1.3 mmol) of 1,1,3,3,3-pentamethyldisiloxane were added to the solution, which was stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 1.

[Comparative Example 1] Hydrosilylation reaction without addition of promoter

A reactor was charged with 3 mg (0.01 mmol) of iron pivalate in Synthesis Example 1, 3 mg (0.02 mmol) of 1-isocyanoadamantane, and 0.1 mL of THF, which were dissolved. Thereafter, 115 μL (1.0 mmol) of styrene and 254 μL (1.3 mmol) of 1,1,3,3,3-pentamethyldisiloxane were added to the solution, which was stirred at 25°C for 3 hours. At the end of reaction, the product was analyzed by $^1$H-NMR spectroscopy to determine its structure and yield. As a result, substantially only the signals assigned to the reactants were observed. The results are shown in Table 1.

[Table 1]

| | Borane | x (mol%) | Solvent | Conversion (%) | Yield (%) |
|---|---|---|---|---|---|
| Example 1 | HBpin | 4 | THF | >99 | >99 |
| Example 2 | 9-BBN | 1 | DME | >99 | >99 |
| Example 3 | HBcat | 4 | DME | 13 | 13 |
| Comparative Example 1 | - | - | THF | 2 | 2 |

(3) Hydrosilylation reaction in solventless system of styrene with 1,1,3,3,3-pentamethyldisiloxane using iron pivalate, various isocyanide ligands, and HBpin as hydrosilylation promoter

[Chemical Formula 8]

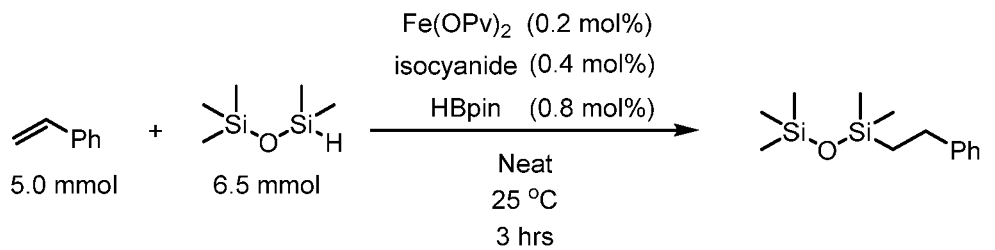

[Example 4] Hydrosilylation reaction of Example 1 in solventless system

A reactor was charged with 3 mg (0.01 mmol) of iron pivalate in Synthesis Example 1, 3 mg (0.02 mmol) of 1-isocyanoadamantane, 5 mg (0.04 mmol) of HBpin, 521 mg (5.0 mmol) of styrene, and 964 mg (6.5 mmol) of 1,1,3,3,3-pentamethyldisiloxane, which were stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 2.

[Example 5] Hydrosilylation reaction using t-butyl isocyanide as isocyanide ligand

Reaction was carried out by the same procedure as in Example 4 aside from using 2 mg (0.02 mmol) of t-butyl isocyanide as the isocyanide ligand. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 2.

[Example 6] Hydrosilylation reaction using n-butyl isocyanide as isocyanide ligand

Reaction was carried out by the same procedure as in Example 4 aside from using 2 mg (0.02 mmol) of n-butyl isocyanide as the isocyanide ligand. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 2.

[Example 7] Hydrosilylation reaction using cyclohexyl isocyanide as isocyanide ligand

Reaction was carried out by the same procedure as in Example 4 aside from using 2 mg (0.02 mmol) of cyclohexyl isocyanide as the isocyanide ligand. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 2.

[Table 2]

| | Isocyanide | Conversion (%) | Yield (%) |
|---|---|---|---|
| Example 4 | 1-isocyanoadamantane | >99 | >99 |
| Example 5 | t-butyl isocyanide | >99 | >99 |
| Example 6 | n-butyl isocyanide | >99 | >99 |
| Example 7 | cyclohexyl isocyanide | >99 | >99 |

(4) Hydrosilylation reaction of styrene with 1,1,3,3,3-pentamethyldisiloxane using various iron salts, 1-isocyanoadamantane, and 9-BBN as hydrosilylation promoter

[Chemical Formula 9]

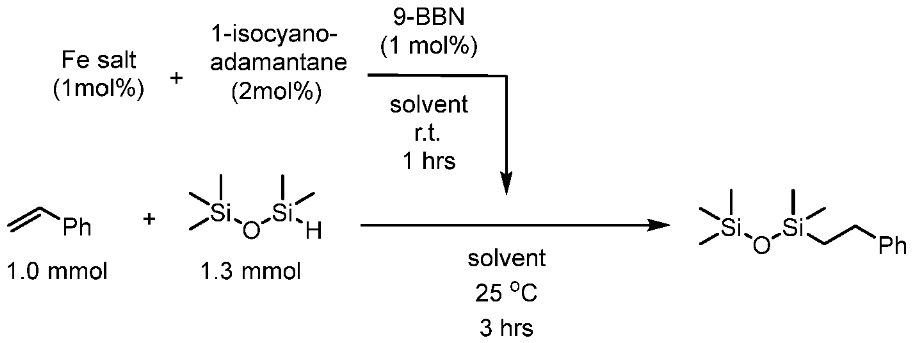


[Example 8] Hydrosilylation reaction using $FeCl_2$ as iron catalyst

A reactor was charged with 1 mg (0.01 mmol) of FeClz (Aldrich), 3 mg (0.02 mmol) of 1-isocyanoadamantane, and 0.1 mL of DME, which were dissolved. To the solution, 2 mg (0.01 mmol) of 9-BBN was added, followed by stirring at room temperature for 1 hour. On this occasion, the yellow solution turned dark red. Thereafter, 115 μL (1.0 mmol) of styrene and 254 μL (1.3 mmol) of 1,1,3,3,3-pentamethyldisiloxane were added to the solution, which was stirred at 25°C for 3 hours. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 3.

[Example 9] Hydrosilylation reaction using $FeBr_2$ as catalyst

Reaction was carried out by the same procedure as in Example 8 aside from using 2 mg (0.01 mmol) of $FeBr_2$ (Aldrich) as the catalyst. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 3.

[Table 3]

| | Iron salt | Conversion (%) | Yield (%) |
|---|---|---|---|
| Example 8 | $FeCl_2$ | 80 | 80 |
| Example 9 | $FeBr_2$ | >99 | >99 |

(5) Hydrosilylation reaction of α-methylstyrene with 1,1,3,3,3-pentamethyldisiloxane using cobalt pivalate, 1-isocyanoadamantane, and borane as hydrosilylation promoter

[Chemical Formula 10]

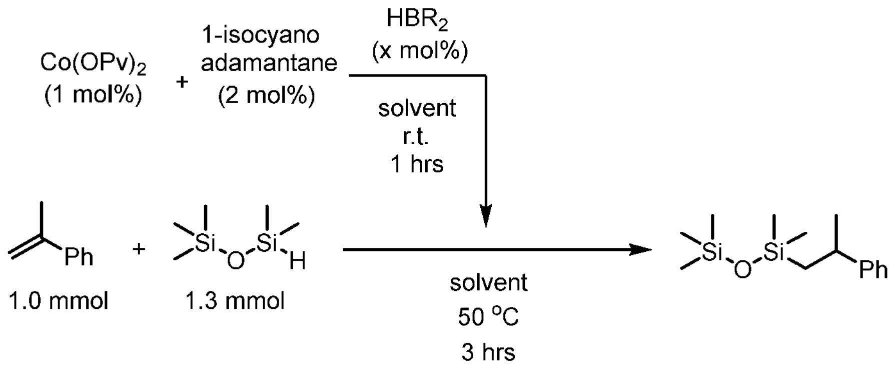


[Example 10] Hydrosilylation reaction using HBpin as promoter

A reactor was charged with 3 mg (0.01 mmol) of cobalt pivalate in Synthesis Example 2, 3 mg (0.02 mmol) of 1-isocyanoadamantane, and 0.1 mL of DME, which were dissolved. To the solution, 4 mg (0.04 mmol) of HBpin was added, followed by stirring at room temperature for 1 hour. On this occasion, the purple solution turned dark brown. Thereafter, 130 $\mu$L (1.0 mmol) of $\alpha$-methylstyrene and 254 $\mu$L (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 4.
$^1$H-NMR (396 MHz, $CDCl_3$) $\delta$:
7.30-7.26 (m, 2H), 7.23-7.21 (m, 2H), 7.19-7.14 (m, 1H), 2.97-2.88 (m, 1H), 1.29 (d, J=6.8, 3H), 0.91-1.02 (m, 2H), 0.07 (s, 9H), -0.04 (s, 3H), -0.05 (s, 3H)

[Example 11] Hydrosilylation reaction using 9-BBN as promoter

Reaction was carried out by the same procedure as in Example 10 aside from using 2 mg (0.01 mmol) of 9-BBN as the promoter. At the end of reaction, the product was analyzed by $^1$H-NMR spectroscopy to determine its structure and yield. As a result, it was confirmed that the signals assigned to the reactants disappeared completely. Instead, a multiplet at 0.96 ppm indicative of the signal assigned to methylene protons adjoining the silyl group in the desired product was observed, and the yield was determined. The results are shown in Table 4.

[Example 12] Hydrosilylation reaction using HBcat as promoter

Reaction was carried out by the same procedure as in Example 10 aside from using 5 mg (0.04 mmol) of HBcat as the promoter. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 4.

[Comparative Example 2] Hydrosilylation reaction without addition of promoter

A reactor was charged with 3 mg (0.01 mmol) of cobalt pivalate in Synthesis Example 2, 3 mg (0.02 mmol) of 1-isocyanoadamantane, 130 $\mu$L (1.0 mmol) of $\alpha$-methylstyrene, and 254 $\mu$L (1.3 mmol) of 1,1,3,3,3-pentamethyldisiloxane, which were stirred at 50°C for 3 hours. At the end of reaction, the product was analyzed by $^1$H-NMR spectroscopy to determine its structure and yield. As a result, substantially only the signals assigned to the reactants were observed. The results are shown in Table 4.

[Table 4]

| | Borane | x (mol%) | Solvent | Conversion (%) | Yield (%) |
|---|---|---|---|---|---|
| Example 10 | HBpin | 4 | DME | 10 | 10 |

(continued)

| | Borane | x (mol%) | Solvent | Conversion (%) | Yield (%) |
|---|---|---|---|---|---|
| Example 11 | 9-BBN | 1 | DME | >99 | >99 |
| Example 12 | HBcat | 4 | THF | 36 | 36 |
| Comparative Example 2 | - | - | - | 9 | 9 |

(6) Hydrosilylation reaction in solventless system of octene with 1,1,3,3,3-pentamethyldisiloxane using cobalt pivalate, various isocyanide ligands, and HBpin as hydrosilylation promoter

[Chemical Formula 11]

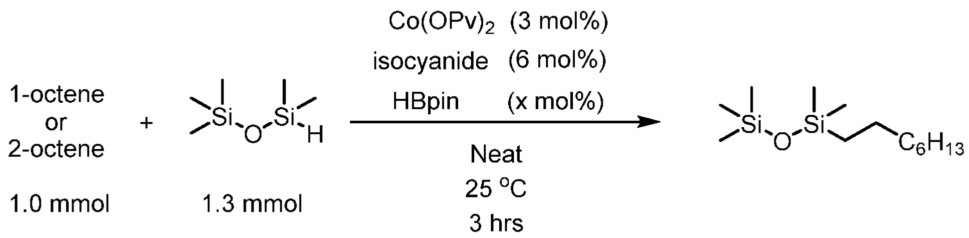


[Example 13] Hydrosilylation reaction of 1-octene using cobalt pivalate, 1-isocyanoadamantane, and HBpin as promoter

A reactor was charged with 8 mg (0.03 mmol) of cobalt pivalate in Synthesis Example 2, 10 mg (0.06 mmol) of 1-isocyanoadamantane, 8 mg (0.06 mmol) of HBpin, 157 μL (1.0 mmol) of 1-octene, and 254 μL (1.3 mmol) of 1,1,3,3,3-pentamethyldisiloxane, which were stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a multiplet near 0.50 ppm indicative of the signal assigned to methylene protons adjoining the silyl group in the desired product was observed, and the yield was determined. The results are shown in Table 5.
$^1$H-NMR (396 MHz, $CDCl_3$) δ:
1.34-1.19 (m, 12H), 0.88 (t, J=6.8, 3H), 0.50 (t, J=7.7, 2H), 0.06 (s, 9H), 0.03 (s, 6H)

[Example 14] Hydrosilylation reaction of Example 13 using 2-octene as alkene

Reaction was carried out by the same procedure as in Example 13 aside from using 157 μL (1.0 mmol) of 2-octene as the alkene. At the end of reaction, the product was analyzed by $^1$H-NMR spectroscopy to determine its structure and yield. As a result, it was confirmed that the signals assigned to the reactants diminished. Instead, a multiplet at 0.50 ppm indicative of the signal assigned to methylene protons adjoining the silyl group in the desired product was observed, and the yield was determined. The results are shown in Table 5.

[Example 15] Hydrosilylation reaction using a 4-fold amount of HBpin as promoter

Reaction was carried out by the same procedure as in Example 13 aside from using 15 mg (0.12 mmol) of HBpin. At the end of reaction, the product was analyzed by $^1$H-NMR spectroscopy to determine its structure and yield. As a result, it was confirmed that the signals assigned to the reactants diminished. Instead, a multiplet at 0.50 ppm indicative of the signal assigned to methylene protons adjoining the silyl group in the desired product was observed, and the yield was determined. The results are shown in Table 5.

[Example 16] Hydrosilylation reaction of 1-octene using cobalt pivalate, t-butyl isocyanide, and HBpin as promoter

Reaction was carried out by the same procedure as in Example 13 aside from using 5 mg (0.06 mmol) of t-butyl isocyanide as the isocyanide ligand. At the end of reaction, the product was analyzed by $^1$H-NMR spectroscopy to determine its structure and yield. As a result, it was confirmed that the signals assigned to the reactants disappeared completely. Instead, a multiplet at 0.50 ppm indicative of the signal assigned to methylene protons adjoining the silyl group in the desired product was observed, and the yield was determined. The results are shown in Table 5.

[Example 17] Hydrosilylation reaction of 1-octene using cobalt pivalate, n-butyl isocyanide, and HBpin as promoter

Reaction was carried out by the same procedure as in Example 13 aside from using 5 mg (0.06 mmol) of n-butyl isocyanide as the isocyanide ligand. At the end of reaction, the product was analyzed by $^1$H-NMR spectroscopy to determine its structure and yield. As a result, it was confirmed that the signals assigned to the reactants disappeared completely. Instead, a multiplet at 0.50 ppm indicative of the signal assigned to methylene protons adjoining the silyl group in the desired product was observed, and the yield was determined. The results are shown in Table 5.

[Example 18] Hydrosilylation reaction of 1-octene using cobalt pivalate, cyclohexyl isocyanide, and HBpin as promoter

Reaction was carried out by the same procedure as in Example 13 aside from using 7 mg (0.06 mmol) of cyclohexyl isocyanide as the isocyanide ligand. At the end of reaction, the product was analyzed by $^1$H-NMR spectroscopy to determine its structure and yield. As a result, it was confirmed that the signals assigned to the reactants disappeared completely. Instead, a multiplet at 0.50 ppm indicative of the signal assigned to methylene protons adjoining the silyl group in the desired product was observed, and the yield was determined. The results are shown in Table 5.

[Table 5]

| | Alkene | x (mol%) | Isocyanide | Conversion (%) | Yield (%) |
|---|---|---|---|---|---|
| Example 13 | 1-octene | 6 | 1-isocyanoadamantane | >99 | 52 |
| Example 14 | 2-octene | 6 | 1-isocyanoadamantane | 50 | 50 |
| Example 15 | 1-octene | 12 | 1-isocyanoadamantane | >99 | 81 |
| Example 16 | 1-octene | 12 | t-butyl isocyanide | >99 | >99 |
| Example 17 | 1-octene | 12 | n-butyl isocyanide | >99 | 12 |
| Example 18 | 1-octene | 12 | cyclohexyl isocyanide | >99 | 43 |

(7) Hydrosilylation reaction of α-methylstyrene with 1,1,3,3,3-pentamethyldisiloxane using various cobalt catalysts, 1-isocyanoadamantane ligand, and borane as hydrosilylation promoter

[Chemical Formula 12]

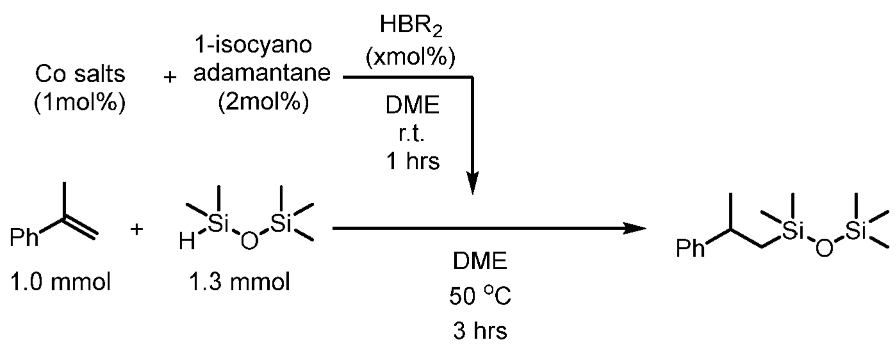


[Example 19] Hydrosilylation reaction using cobalt acetate as cobalt catalyst and 9-BBN as promoter

A reactor was charged with 2 mg (0.01 mmol) of cobalt acetate, 3 mg (0.02 mmol) of 1-isocyanoadamantane,

and 0.1 mL of DME, which were dissolved. To the solution, 2 mg (0.01 mmol) of 9-BBN was added, followed by stirring at room temperature for 1 hour. On this occasion, the purple solution turned dark red. Thereafter, 130 μL (1.0 mmol) of α-methylstyrene and 254 μL (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 6.

[Example 20] Hydrosilylation reaction using cobalt benzoate as cobalt catalyst and 9-BBN as promoter

Reaction was carried out by the same procedure as in Example 19 aside from using 3 mg (0.01 mmol) of cobalt benzoate instead of cobalt acetate. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 6.

[Example 21] Hydrosilylation reaction using cobalt chloride as cobalt catalyst and 9-BBN as promoter

Reaction was carried out by the same procedure as in Example 19 aside from using 1 mg (0.01 mmol) of cobalt chloride instead of cobalt acetate. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 6.

[Example 22] Hydrosilylation reaction using bisacetylacetonatocobalt as cobalt catalyst and 9-BBN as promoter

Reaction was carried out by the same procedure as in Example 19 aside from using 3 mg (0.01 mmol) of bisacetylacetonatocobalt (abbreviated as Co(acac)z, hereinafter) instead of cobalt acetate. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 6.

[Example 23] Hydrosilylation reaction using cobalt diisopropoxide as cobalt catalyst and HBpin as promoter

A reactor was charged with 2 mg (0.01 mmol) of cobalt diisopropoxide (abbreviated as $Co(O^iPr)_2$, hereinafter), 3 mg (0.02 mmol) of 1-isocyanoadamantane, and 0.1 mL of DME, which were dissolved. To the solution, 5 mg (0.04 mmol) of HBpin was added, followed by stirring at room temperature for 1 hour. On this occasion, the purple solution turned dark yellow. Thereafter, 130 μL (1.0 mmol) of α-methylstyrene and 254 μL (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.96 ppm indicative of the signal assigned to methylene protons adjoining the silyl group in the desired product was observed, and the yield was determined. The results are shown in Table 6.

[Table 6]

| | Cobalt catalyst | Borane | x (mol%) | Conversion (%) | Yield (%) |
|---|---|---|---|---|---|
| Example 19 | cobalt acetate | 9-BBN | 1 | 20 | 20 |
| Example 20 | cobalt benzoate | 9-BBN | 1 | 33 | 33 |
| Example 21 | cobalt chloride | 9-BBN | 1 | 2 | 2 |
| Example 22 | $Co(acac)_2$ | 9-BBN | 1 | 7 | 7 |
| Example 23 | $Co(O^iPr)_2$ | HBpin | 4 | >99 | >99 |

(8) Hydrosilylation reaction of styrene with 1,1,3,3,3-pentamethyldisiloxane using iron pivalate, 1-isocyanoadamantane, and hydrosilane as hydrosilylation promoter

[Chemical Formula 13]

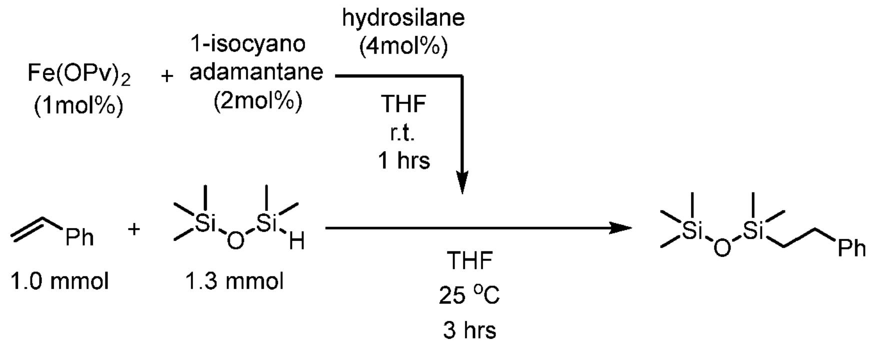


[Example 24] Hydrosilylation reaction using trimethoxysilane as promoter

A reactor was charged with 3 mg (0.01 mmol) of iron pivalate in Synthesis Example 1, 3 mg (0.02 mmol) of 1-isocyanoadamantane, and 0.1 mL of THF, which were dissolved. To the solution, 5 mg (0.04 mmol) of trimethoxysilane was added, followed by stirring at room temperature for 1 hour. On this occasion, the yellow solution turned reddish brown. Thereafter, 115 μL (1.0 mmol) of styrene and 254 μL (1.3 mmol) of 1,1,3,3,3-pentamethyldisiloxane were added to the solution, which was stirred at 25°C for 3 hours. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 7.

[Example 25] Hydrosilylation reaction using triethoxysilane as promoter

Reaction was carried out by the same procedure as in Example 24 aside from using 7 mg (0.04 mmol) of triethoxysilane instead of trimethoxysilane. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 7.

[Example 26] Hydrosilylation reaction using dimethoxymethylsilane as promoter

Reaction was carried out by the same procedure as in Example 24 aside from using 4 mg (0.04 mmol) of dimethoxymethylsilane instead of trimethoxysilane. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 7.

[Example 27] Hydrosilylation reaction using diethoxymethylsilane as promoter

Reaction was carried out by the same procedure as in Example 24 aside from using 5 mg (0.04 mmol) of diethoxymethylsilane instead of trimethoxysilane. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 7.

[Table 7]

| | Hydrosilane | Conversion (%) | Yield (%) |
|---|---|---|---|
| Example 24 | trimethoxysilane | 37 | 37 |
| Example 25 | triethoxysilane | 81 | 81 |
| Example 26 | dimethoxymethylsilane | >99 | >99 |
| Example 27 | diethoxymethylsilane | >99 | 93 |

(9) Hydrosilylation reaction of $\alpha$-methylstyrene with 1,1,3,3,3-pentamethyldisiloxane using cobalt pivalate, 1-isocyanoadamantane, and hydrosilane as hydrosilylation promoter

[Chemical Formula 14]

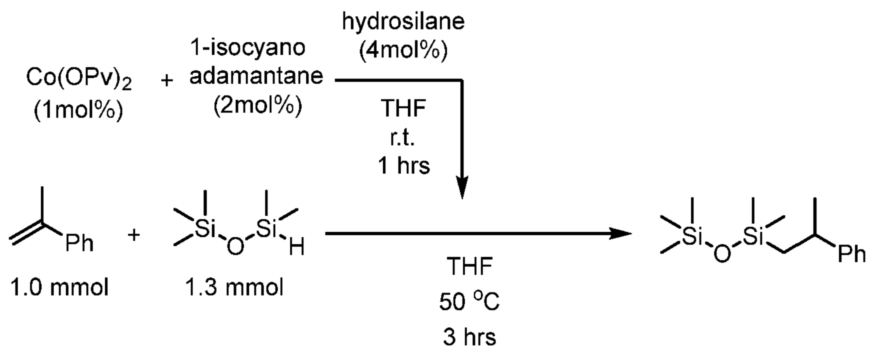


[Example 28] Hydrosilylation reaction using trimethoxysilane as promoter

A reactor was charged with 3 mg (0.01 mmol) of cobalt pivalate in Synthesis Example 2, 3 mg (0.02 mmol) of 1-isocyanoadamantane, and 0.1 mL of THF, which were dissolved. To the solution, 5 mg (0.04 mmol) of trimethoxysilane was added, followed by stirring at room temperature for 1 hour. On this occasion, the purple solution turned blackish yellow. Thereafter, 130 $\mu$L (1.0 mmol) of $\alpha$-methylstyrene and 254 $\mu$L (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.96 ppm indicative of the signal assigned to methylene protons adjoining the silyl group in the desired product was observed, and the yield was determined. The results are shown in Table 8.

[Example 29] Hydrosilylation reaction using triethoxysilane as promoter

Reaction was carried out by the same procedure as in Example 28 aside from using 7 mg (0.04 mmol) of triethoxysilane instead of trimethoxysilane. At the end of reaction, the product was analyzed by $^1$H-NMR spectroscopy to determine its structure and yield. As a result, it was confirmed that the signals assigned to the reactants disappeared completely. Instead, a multiplet at 0.96 ppm indicative of the signal assigned to methylene protons adjoining the silyl group in the desired product was observed, and the yield was determined. The results are shown in Table 8.

[Example 30] Hydrosilylation reaction using dimethoxymethylsilane as promoter

Reaction was carried out by the same procedure as in Example 28 aside from using 4 mg (0.04 mmol) of dimethoxymethylsilane instead of trimethoxysilane. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 8.

[Example 31] Hydrosilylation reaction using diethoxymethylsilane as promoter

Reaction was carried out by the same procedure as in Example 28 aside from using 5 mg (0.04 mmol) of diethoxymethylsilane instead of trimethoxysilane. At the end of reaction, the product was analyzed by $^1$H-NMR spectroscopy to determine its structure and yield. As a result, it was confirmed that the signals assigned to the reactants disappeared completely. Instead, a multiplet at 0.96 ppm indicative of the signal assigned to methylene protons adjoining the silyl group in the desired product was observed, and the yield was determined. The results are shown in Table 8.

[Table 8]

| | Hydrosilane | Conversion (%) | Yield (%) |
|---|---|---|---|
| Example 28 | trimethoxysilane | >99 | >99 |
| Example 29 | triethoxysilane | >99 | >99 |
| Example 30 | dimethoxymethylsilane | 74 | 74 |
| Example 31 | diethoxymethylsilane | >99 | >99 |

(10) Hydrosilylation reaction of styrene with 1,1,3,3,3-pentamethyldisiloxane using iron(II) chloride, 1-isocyanoadamantane, and metal alkoxide or metal amidinate as hydrosilylation promoter

[Chemical Formula 15]

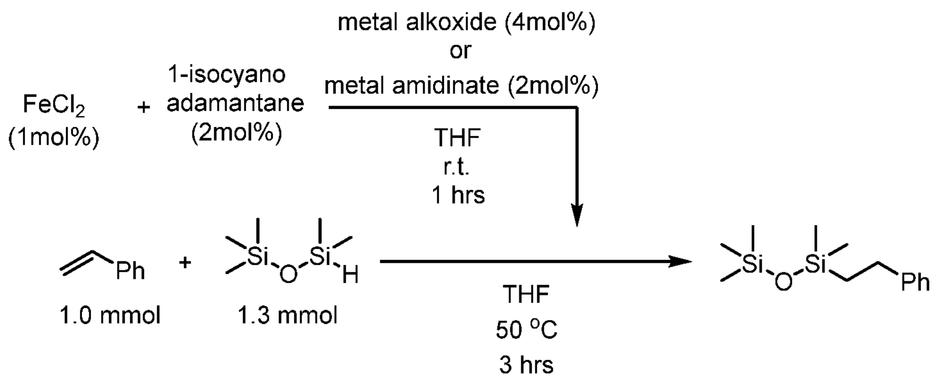


[Example 32] Hydrosilylation reaction using lithium methoxide as promoter

A reactor was charged with 1 mg (0.01 mmol) of $FeCl_2$, 3 mg (0.02 mmol) of 1-isocyanoadamantane, and 0.1 mL of THF, which were dissolved. To the solution, 2 mg (0.04 mmol) of lithium methoxide was added, followed by stirring at room temperature for 1 hour. On this occasion, the clear solution turned yellow. Thereafter, 115 μL (1.0 mmol) of styrene and 254 μL (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 9.

[Example 33] Hydrosilylation reaction using sodium t-butoxide as promoter

Reaction was carried out by the same procedure as in Example 32 aside from using 4 mg (0.04 mmol) of sodium t-butoxide instead of sodium methoxide. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 9.

[Example 34] Hydrosilylation reaction using lithium N,N'-diisopropylacetamidinate as promoter

A 20 mL Schlenk flask was charged with 0.50 g (3.97 mmol) of diisopropylcarbodiimide and 7 mL of $Et_2O$ and cooled down to -78°C. To the solution, 3.4 mL of a 1.14M solution of methyllithium in $Et_2O$ was added dropwise, followed by stirring at room temperature for 1 hour. This was dried under reduced pressure, obtaining lithium N,N'-diisopropylacetamidinate.

A reactor was charged with 1 mg (0.01 mmol) of $FeCl_2$, 3 mg (0.02 mmol) of 1-isocyanoadamantane, and 0.1 mL of THF, which were dissolved. To the solution, 3 mg (0.02 mmol) of lithium N,N'-diisopropylacetamidinate was added, followed by stirring at room temperature for 1 hour. On this occasion, the clear solution turned yellow. Thereafter, 115 μL (1.0 mmol) of styrene and 254 μL (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 9.

[Table 9]

| | Metal alkoxide | Conversion (%) | Yield (%) |
|---|---|---|---|
| Example 32 | lithium methoxide | >99 | 96 |
| Example 33 | sodium t-butoxide | 7 | 7 |
| Example 34 | lithium N,N'-diisopropylacetamidinate | 3 | 3 |

(11) Hydrosilylation reaction of styrene with 1,1,3,3,3-pentamethyldisiloxane using iron(II) chloride, 1-isocyanoadamantane, and hydrosilane and metal carboxylate or metal alkoxide as hydrosilylation promoter

[Chemical Formula 16]

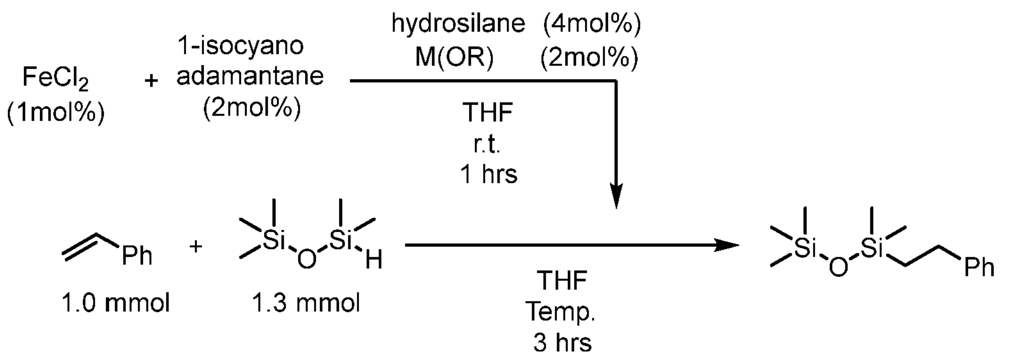


[Example 35] Hydrosilylation reaction using trimethoxysilane and silver acetate as promoter

A reactor was charged with 1 mg (0.01 mmol) of $FeCl_2$, 3 mg (0.02 mmol) of 1-isocyanoadamantane, and 0.1 mL of THF, which were dissolved. To the solution, 3 mg (0.02 mmol) of silver acetate and 5 mg (0.04 mmol) of trimethoxysilane were added, followed by stirring at room temperature for 1 hour. On this occasion, the yellow solution turned dark brown. Thereafter, 115 μL (1.0 mmol) of styrene and 254 μL (1.3 mmol) of 1,1,3,3,3-pentamethyldisiloxane were added to the solution, which was stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 10.

[Example 36] Hydrosilylation reaction using trimethoxysilane and sodium t-butoxide as promoter

Reaction was carried out by the same procedure as in Example 35 aside from using 4 mg (0.04 mmol) of sodium t-butoxide and 5 mg (0.04 mmol) of trimethoxysilane instead of silver acetate and trimethoxysilane. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 10.

[Table 10]

| | Hydrosilane | Metal carboxylate or alkoxide | Reaction temperature (°C) | Conversion (%) | Yield (%) |
|---|---|---|---|---|---|
| Example 35 | trimethoxysilane | silver acetate | 25 | >99 | >99 |
| Example 36 | trimethoxysilane | sodium t-butoxide | 50 | >99 | 96 |

(12) Hydrosilylation reaction in solventless system of $\alpha$-methylstyrene with 1,1,3,3,3-pentamethyldisiloxane using various cobalt catalysts, 1-isocyanoadamantane, and hydrosilane as hydrosilylation promoter

[Chemical Formula 17]

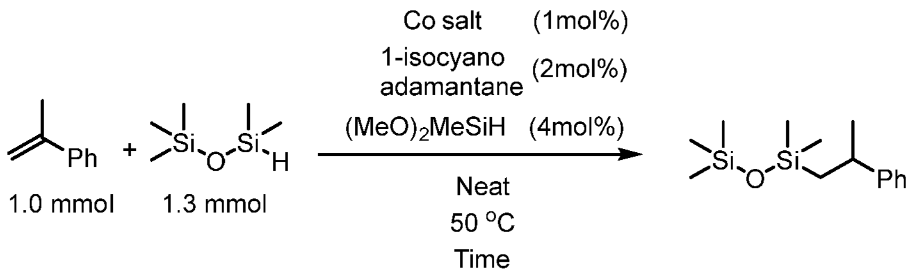


[Example 37] Hydrosilylation reaction using cobalt pivalate as catalyst and dimethoxymethylsilane as promoter

A reactor was charged with 3 mg (0.01 mmol) of cobalt pivalate in Synthesis Example 2, 3 mg (0.02 mmol) of 1-isocyanoadamantane, 130 $\mu$L (1.0 mmol) of $\alpha$-methylstyrene, and 4 mg (0.04 mmol) of dimethoxymethylsilane, which were stirred for several minutes. On this occasion, the pale purple solution turned dark brown. Then 254 $\mu$L (1.3 mmol) of 1,1,3,3,3-pentamethyldisiloxane was added to the solution, which was stirred at 50°C for 3 hours. At the end of reaction, the product was analyzed by $^1$H-NMR spectroscopy to determine its structure and yield. As a result, it was confirmed that the signals assigned to the reactants disappeared completely. Instead, a multiplet near 0.96 ppm indicative of the signal assigned to methylene protons adjoining the silyl group in the desired product was observed, and the yield was determined. The results are shown in Table 11.

[Example 38] Hydrosilylation reaction using cobalt benzoate as catalyst and dimethoxymethylsilane as promoter

Reaction was carried out by the same procedure as in Example 37 aside from using 3 mg (0.01 mmol) of cobalt benzoate instead of cobalt pivalate and extending the reaction time to 6 hours. At the end of reaction, the product was analyzed by $^1$H-NMR spectroscopy to determine its structure and yield. As a result, it was confirmed that the signals assigned to the reactants diminished. Instead, a multiplet near 0.96 ppm indicative of the signal assigned to methylene protons adjoining the silyl group in the desired product was observed, and the yield was determined. The results are shown in Table 11.

[Table 11]

| | Cobalt catalyst | Hydrosilane | Reaction time (hr) | Conversion (%) | Yield (%) |
|---|---|---|---|---|---|
| Example 37 | cobalt pivalate | dimethoxymethylsilane | 3 | >99 | >99 |
| Example 38 | cobalt benzoate | dimethoxymethylsilane | 6 | 78 | 78 |

(13) Hydrosilylation reaction of styrene with 1,1,3,3,3-pentamethyldisiloxane using various iron catalysts, 1-isocyanoadamantane, and Grignard reagent as hydrosilylation promoter

[Chemical Formula 18]

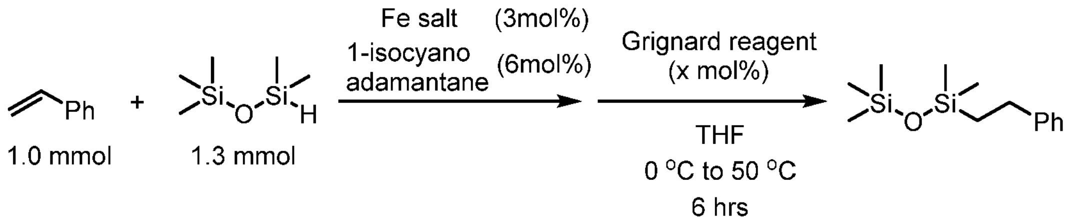


[Example 39] Hydrosilylation reaction using FeCh as iron catalyst and ethylmagnesium bromide as promoter

A 20 mL Schlenk flask was charged with 4 mg (0.03 mmol) of $FeCl_2$, 10 mg (0.06 mmol) of 1-isocyanoadamantane, 115 $\mu$L (1.0 mmol) of styrene, and 254 $\mu$L (1.3 mmol) of 1,1,3,3,3-pentamethyldisiloxane and cooled to 0°C. Then 60 $\mu$L (0.06 mmol) of a 1.0M solution of ethylmagnesium bromide (abbreviated as EtMgBr, hereinafter) in THF was added dropwise to the solution, which was stirred at 50°C for 6 hours. On this occasion, the clear solution turned brown. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 12.

[Example 40] Hydrosilylation reaction using $FeBr_2$ as iron catalyst and EtMgBr as promoter

Reaction was carried out by the same procedure as in Example 39 aside from using 6 mg (0.03 mmol) of $FeBr_2$ instead of FeCh. At the end of reaction, the product was analyzed by $^1$H-NMR spectroscopy to determine its structure and yield. As a result, it was confirmed that the signals assigned to the reactants disappeared completely. Instead, a multiplet near 0.89 ppm indicative of the signal assigned to methylene protons adjoining the silyl group in the desired product was observed, and the yield was determined. The results are shown in Table 12.

[Example 41] Hydrosilylation reaction using $Fe(OAc)_2$ as iron catalyst and EtMgBr as promoter

Reaction was carried out by the same procedure as in Example 39 aside from using 5 mg (0.03 mmol) of $Fe(OAc)_2$ instead of FeCh. At the end of reaction, the product was analyzed by $^1$H-NMR spectroscopy to determine its structure and yield. As a result, it was confirmed that the signals assigned to the reactants disappeared completely. Instead, a multiplet near 0.89 ppm indicative of the signal assigned to methylene protons adjoining the silyl group in the desired product was observed, and the yield was determined. The results are shown in Table 12.

[Example 42] Hydrosilylation reaction using $Fe(acac)_2$ as iron catalyst and EtMgBr as promoter

Reaction was carried out by the same procedure as in Example 39 aside from using 8 mg (0.03 mmol) of $Fe(acac)_2$ instead of FeCh. At the end of reaction, the product was analyzed by $^1$H-NMR spectroscopy to determine its structure and yield. As a result, it was confirmed that the signals assigned to the reactants disappeared completely. Instead, a multiplet near 0.89 ppm indicative of the signal assigned to methylene protons adjoining the silyl group in the desired product was observed, and the yield was determined. The results are shown in Table 12.

[Example 43] Hydrosilylation reaction using $FeCl_3$ as iron catalyst and EtMgBr as promoter

Reaction was carried out by the same procedure as in Example 39 aside from using 5 mg (0.03 mmol) of $FeCl_3$ instead of FeCh and 90 μL (0.09 mmol) of a 1.0M solution of EtMgBr in THF. At the end of reaction, the product was analyzed by $^1$H-NMR spectroscopy to determine its structure and yield. As a result, it was confirmed that the signals assigned to the reactants disappeared completely. Instead, a multiplet near 0.89 ppm indicative of the signal assigned to methylene protons adjoining the silyl group in the desired product was observed, and the yield was determined. The results are shown in Table 12.

[Example 44] Hydrosilylation reaction using $Fe(acac)_3$ as iron catalyst and EtMgBr as promoter

Reaction was carried out by the same procedure as in Example 39 aside from using 11 mg (0.03 mmol) of $Fe(acac)_3$ instead of FeCh and 90 μL (0.09 mmol) of a 1.0M solution of EtMgBr in THF. At the end of reaction, the product was analyzed by $^1$H-NMR spectroscopy to determine its structure and yield. As a result, it was confirmed that the signals assigned to the reactants disappeared completely. Instead, a multiplet near 0.89 ppm indicative of the signal assigned to methylene protons adjoining the silyl group in the desired product was observed, and the yield was determined. The results are shown in Table 12.

[Example 45] Hydrosilylation reaction using iron N,N-dimethyldithiocarbamate as iron catalyst and EtMgBr as promoter

Reaction was carried out by the same procedure as in Example 39 aside from using 12 mg (0.03 mmol) of iron N,N-dimethyldithiocarbamate (abbreviated as Ferbam, hereinafter) instead of FeCh. At the end of reaction, the product was analyzed by $^1$H-NMR spectroscopy to determine its structure and yield. As a result, it was confirmed that the signals assigned to the reactants disappeared completely. Instead, a multiplet near 0.89 ppm indicative of the signal assigned to methylene protons adjoining the silyl group in the desired product was observed, and the yield was determined. The results are shown in Table 12.

[Table 12]

| | Iron catalyst | Grignard reagent | x (mol%) | Conversion (%) | Yield (%) |
|---|---|---|---|---|---|
| Example 39 | $FeCl_2$ | EtMgBr | 6 | >99 | 94 |
| Example 40 | $FeBr_2$ | EtMgBr | 6 | >99 | 96 |
| Example 41 | $Fe(OAc)_2$ | EtMgBr | 6 | >99 | 94 |
| Example 42 | $Fe(acac)_2$ | EtMgBr | 6 | >99 | 96 |
| Example 43 | $FeCl_3$ | EtMgBr | 9 | >99 | 95 |
| Example 44 | $Fe(acac)_3$ | EtMgBr | 9 | >99 | 95 |
| Example 45 | Ferbam | EtMgBr | 9 | >99 | 97 |

(14) Hydrosilylation reaction of α-methylstyrene with 1,1,3,3,3-pentamethyldisiloxane using various cobalt catalysts, 1-isocyanoadamantane, and organic Grignard reagent as hydrosilylation promoter

[Chemical Formula 19]

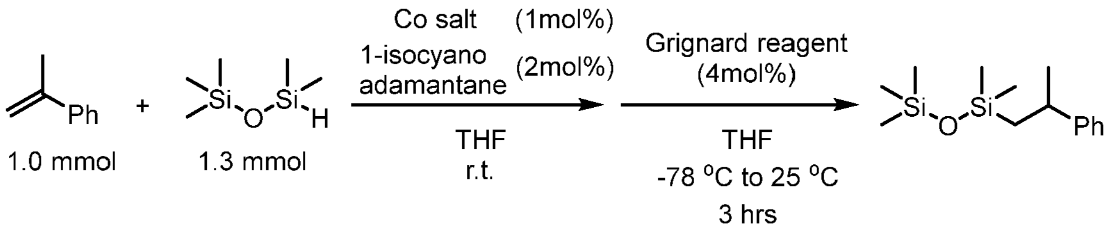


[Example 46] Hydrosilylation reaction using CoCh as cobalt catalyst and EtMgBr as promoter

A 20 mL Schlenk flask was charged with 1 mg (0.01 mmol) of $CoCl_2$, 3 mg (0.02 mmol) of 1-isocyanoadamantane, 0.01 mL of THF, 130 μL (1.0 mmol) of α-methylstyrene, and 254 μL (1.3 mmol) of 1,1,3,3,3-pentamethyldisiloxane and cooled down to -78°C. Then 40 μL (0.04 mmol) of a 1.0M solution of EtMgBr in THF was added dropwise to the solution, which was stirred at 25°C for 3 hours. On this occasion, the clear solution turned dark brown. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 13.

[Example 47] Hydrosilylation reaction using cobalt pivalate as cobalt catalyst and EtMgBr as promoter

Reaction was carried out by the same procedure as in Example 46 aside from using 3 mg (0.01 mmol) of cobalt pivalate in Synthesis Example 2 instead of $CoCl_2$. At the end of reaction, the product was analyzed by $^1$H-NMR spectroscopy to determine its structure and yield. As a result, it was confirmed that the signals assigned to the reactants disappeared completely. Instead, a multiplet near 0.96 ppm indicative of the signal assigned to methylene protons adjoining the silyl group in the desired product was observed, and the yield was determined. The results are shown in Table 13.

[Example 48] Hydrosilylation reaction using $Co(acac)_2$ as cobalt catalyst and EtMgBr as promoter

Reaction was carried out by the same procedure as in Example 46 aside from using 3 mg (0.01 mmol) of $Co(acac)_2$ instead of $CoCl_2$. At the end of reaction, the product was analyzed by $^1$H-NMR spectroscopy to determine its structure and yield. As a result, it was confirmed that the signals assigned to the reactants diminished. Instead, a multiplet near 0.96 ppm indicative of the signal assigned to methylene protons adjoining the silyl group in the desired product was observed, and the yield was determined. The results are shown in Table 13.

[Table 13]

| | Cobalt catalyst | Grignard reagent | Conversion (%) | Yield (%) |
|---|---|---|---|---|
| Example 46 | $CoCl_2$ | EtMgBr | 52 | 51 |
| Example 47 | cobalt pivalate | EtMgBr | 99 | 98 |
| Example 48 | $Co(acac)_2$ | EtMgBr | 39 | 37 |

(15) Hydrosilylation reaction of styrene with 1,1,3,3,3-pentamethyldisiloxane using manganese catalyst, 1-isocyanoadamantane, and organic Grignard reagent as hydrosilylation promoter

[Chemical Formula 20]

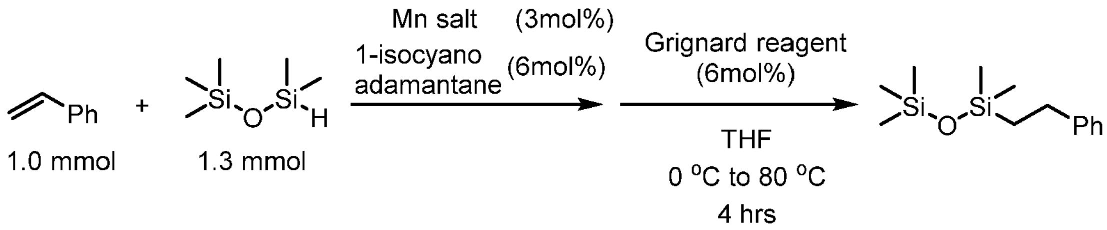


[Example 49] Hydrosilylation reaction using manganese chloride as manganese catalyst and EtMgBr as promoter

A 20 mL Schlenk flask was charged with 4 mg (0.03 mmol) of manganese chloride, 10 mg (0.06 mmol) of 1-isocyanoadamantane, 115 μL (1.0 mmol) of styrene, and 254 μL (1.3 mmol) of 1,1,3,3,3-pentamethyldisiloxane and cooled to 0°C. Then 60 μL (0.06 mmol) of a 1.0M solution of EtMgBr in THF was added dropwise to the solution, which was stirred at 80°C for 4 hours. On this occasion, the clear solution turned pale brown. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 14.

[Example 50] Hydrosilylation reaction using manganese acetate as manganese catalyst and EtMgBr as promoter

Reaction was carried out by the same procedure as in Example 49 aside from using 5 mg (0.03 mmol) of manganese acetate instead of manganese chloride. At the end of reaction, the product was analyzed by $^1$H-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 14.

[Table 14]

| | Manganese catalyst | Grignard reagent | Conversion (%) | Yield (%) |
|---|---|---|---|---|
| Example 49 | manganese chloride | EtMgBr | 7 | 7 |
| Example 50 | manganese acetate | EtMgBr | 19 | 19 |

(16) Hydrosilylation reaction of styrene with 1,1,3,3,3-pentamethyldisiloxane using iron catalyst, 1-isocyanoadamantane, and organic aluminum reagent as hydrosilylation promoter

[Chemical Formula 21]

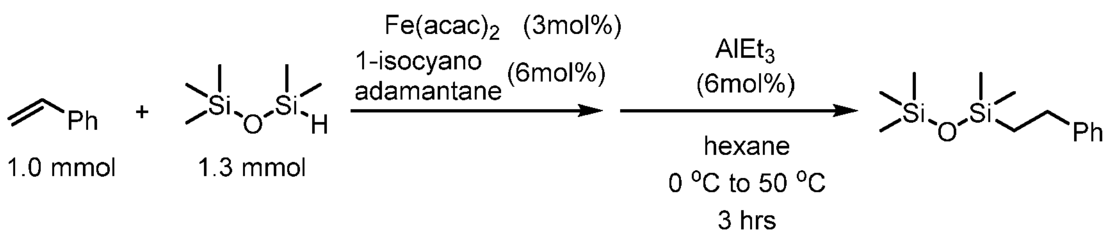

[Example 51] Hydrosilylation reaction using triethylaluminum as promoter

A 20 mL Schlenk flask was charged with 8 mg (0.03 mmol) of $Fe(acac)_2$, 10 mg (0.06 mmol) of 1-isocyanoadamantane, 115 μL (1.0 mmol) of styrene, and 254 μL (1.3 mmol) of 1,1,3,3,3-pentamethyldisiloxane and cooled to 0°C. Then 60 μL (0.06 mmol) of a 1.0M solution of triethylaluminum in hexane was added dropwise to the solution, which was stirred at 80°C for 4 hours. On this occasion, the red solution turned pale brown.

At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The results are shown in Table 15.

[Table 15]

| | Iron catalyst | Organic aluminum reagent | Conversion (%) | Yield (%) |
|---|---|---|---|---|
| Example 51 | $Fe(acac)_2$ | triethylaluminum | >99 | 98 |

(17) Hydrosilylation reaction of styrene with 1,1,3,3,3-pentamethyldisiloxane using iron pivalate, 1-isocyanoadamantane, and various hydrosilylation promoters

[Chemical Formula 22]

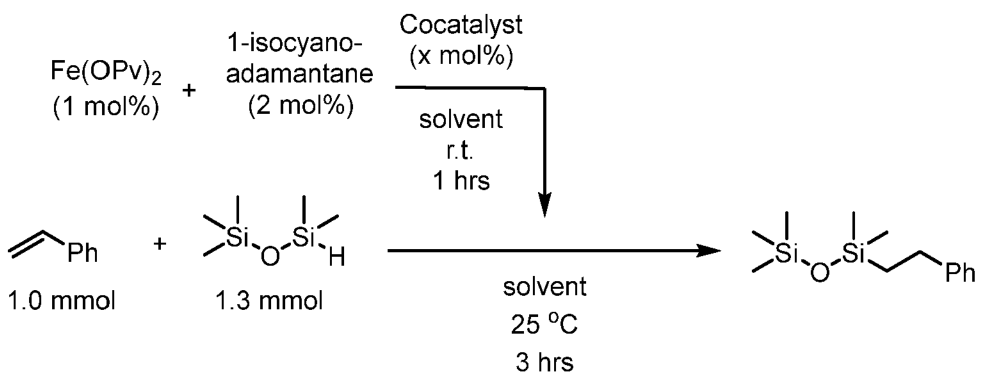


[Example 52] Hydrosilylation reaction using methyllithium as promoter

A reactor was charged with 3 mg (0.01 mmol) of iron pivalate in Synthesis Example 1, 3 mg (0.02 mmol) of 1-isocyanoadamantane, and 0.06 mL of THF and cooled down to -78°C. Then 38 μL (0.04 mmol) of a 1.06M solution of methyllithium (abbreviated as MeLi, hereinafter) in $Et_2O$ was added dropwise to the solution, which was stirred at room temperature for 1 hour. On this occasion, the yellow solution turned dark brown. Then 115 μL (1.0 mmol) of styrene and 254 μL (1.3 mmol) of 1,1,3,3,3-pentamethyldisiloxane were added to the solution, which was stirred at 25°C for 3 hours. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 16.

[Example 53] Hydrosilylation reaction using diethylzinc as promoter

Reaction was carried out by the same procedure as in Example 52 aside from using 19 μL (0.02 mmol) of a 1.07M solution of diethylzinc (abbreviated as $Et_2Zn$, hereinafter) in hexane instead of methyllithium. At the end of reaction, the product was analyzed by $^1$H-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The

results are shown in Table 16.

[Example 54] Hydrosilylation reaction using lithium triethylborohydride as promoter

Reaction was carried out by the same procedure as in Example 52 aside from using 40 μL (0.04 mmol) of a 1.0M solution of lithium triethylborohydride (abbreviated as LiTEBH, hereinafter) in THF instead of methyllithium. At the end of reaction, the product was analyzed by $^1$H-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 16.

[Example 55] Hydrosilylation reaction using sodium borohydride as promoter

Reaction was carried out by the same procedure as in Example 52 aside from using 2 mg (0.04 mmol) of sodium borohydride ($NaBH_4$) instead of methyllithium and adding 0.10 mL of THF. At the end of reaction, the product was analyzed by $^1$H-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 16.

[Example 56] Hydrosilylation reaction using diisobutylaluminum hydride as promoter

Reaction was carried out by the same procedure as in Example 52 aside from using 40 μL (0.04 mmol) of a 1.0M solution of diisobutylaluminum hydride (abbreviated as DIBAL, hereinafter) in toluene instead of methyllithium. At the end of reaction, the product was analyzed by $^1$H-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 16.

[Example 57] Hydrosilylation reaction using lithium aluminum hydride as promoter

Reaction was carried out by the same procedure as in Example 52 aside from using 40 μL (0.04 mmol) of a 1.0M solution of lithium aluminum hydride (abbreviated as LAH, hereinafter) in THF instead of methyllithium. At the end of reaction, the product was analyzed by $^1$H-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 16.

[Table 16]

| | Promoter | x (mol%) | Solvent | Conversion (%) | Yield (%) |
|---|---|---|---|---|---|
| Example 52 | MeLi | 4 | THF + $Et_2O$ | 8 | 8 |
| Example 53 | $Et_2Zn$ | 2 | THF + hexane | 3 | 3 |
| Example 54 | LiTEBH | 4 | THF | 5 | 5 |
| Example 55 | $NaBH_4$ | 4 | THF | 10 | 10 |
| Example 56 | DIBAL | 4 | THF + toluene | 3 | 3 |
| Example 57 | LAH | 4 | THF | 6 | 5 |

(18) Hydrosilylation reaction of styrene with 1,1,3,3,3-pentamethyldisiloxane using cobalt chloride, 1-isocyanoadamantane, and magnesium as hydrosilylation promoter

[Chemical Formula 23]

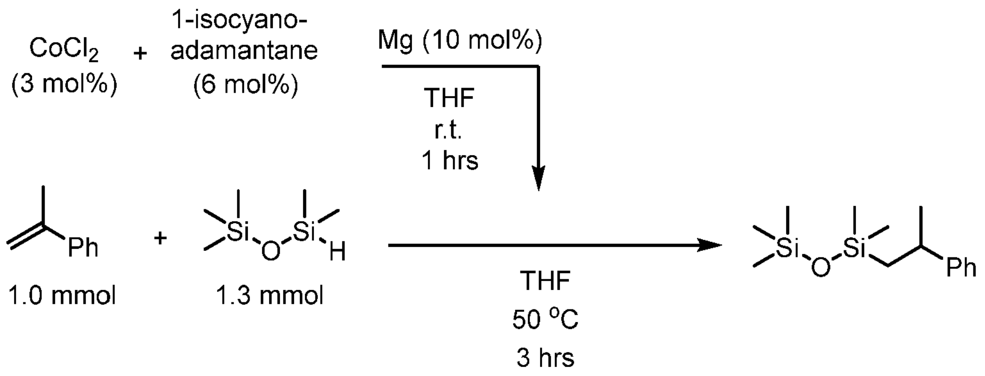


[Example 58] Hydrosilylation reaction using cobalt chloride as cobalt catalyst and magnesium as promoter

A reactor was charged with 4 mg (0.03 mmol) of cobalt chloride, 10 mg (0.06 mmol) of 1-isocyanoadamantane, 0.1 mL of THF, and 2 mg (0.10 mmol) of magnesium, which were stirred at room temperature for 1 hour. Then 130 μL (1.0 mmol) of α-methylstyrene and 254 μL (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 17.

[Table 17]

| | Metal catalyst | Promoter | Conversion (%) | Yield (%) |
|---|---|---|---|---|
| Example 58 | cobalt chloride | magnesium | 50 | 50 |

(19) Hydrosilylation reaction of alkene with 1,1,3,3,3-pentamethyldisiloxane using metal salt, 1-isocyanoadamantane, and various hydrosilylation promoters

[Chemical Formula 24]

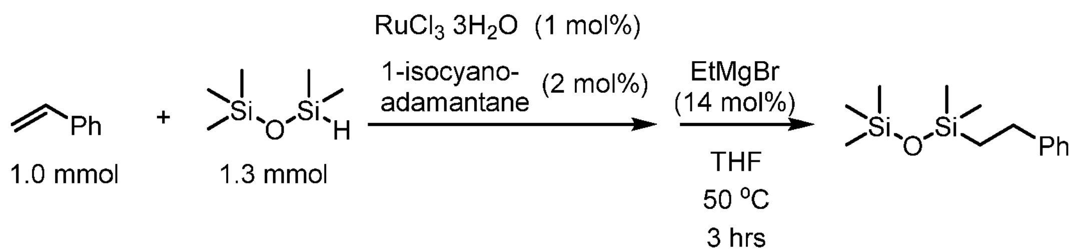


[Example 59] Hydrosilylation reaction using ruthenium chloride trihydrate as catalyst and EtMgBr as promoter

A 20 mL Schlenk flask was charged with 2 mg (0.01 mmol) of ruthenium chloride trihydrate, 3 mg (0.02 mmol) of 1-isocyanoadamantane, 115 μL (1.0 mmol) of styrene, and 254 μL (1.3 mmol) of 1,1,3,3,3-pentamethyldisiloxane and cooled to 0°C. Then 140 μL (0.14 mmol) of a 1.0M solution of EtMgBr in THF was added to the solution, which was stirred at 50°C for 3 hours. On this occasion, the clear solution turned dark brown. At the end of reaction, the product was analyzed by $^1$H-NMR spectroscopy to determine its structure and yield. As a result, it was confirmed that the signals assigned to the reactants disappeared completely. Instead, a multiplet at 0.89 ppm indicative of the signal assigned to methylene protons adjoining the silyl group in the desired product was observed, and the yield was determined. The

results are shown in Table 18.

[Comparative Example 3] Hydrosilylation reaction in the absence of promoter

A 20 mL Schlenk flask was charged with 2 mg (0.01 mmol) of ruthenium chloride trihydrate, 3 mg (0.02 mmol) of 1-isocyanoadamantane, 115 μL (1.0 mmol) of styrene, and 254 μL (1.3 mmol) of 1,1,3,3,3-pentamethyldisiloxane, which were stirred at 50°C for 3 hours. At the end of reaction, the product was analyzed by $^1$H-NMR spectroscopy to determine its structure and yield. As a result, it was confirmed that only the signals assigned to the reactants were observed, i.e., no reaction took place.

[Table 18]

| | Metal catalyst | Promoter | Conversion (%) | Yield (%) |
|---|---|---|---|---|
| Example 59 | ruthenium chloride trihydrate | EtMgBr | >99 | 26 |
| Comparative Example 3 | ruthenium chloride trihydrate | - | 0 | 0 |

[Chemical Formula 25]

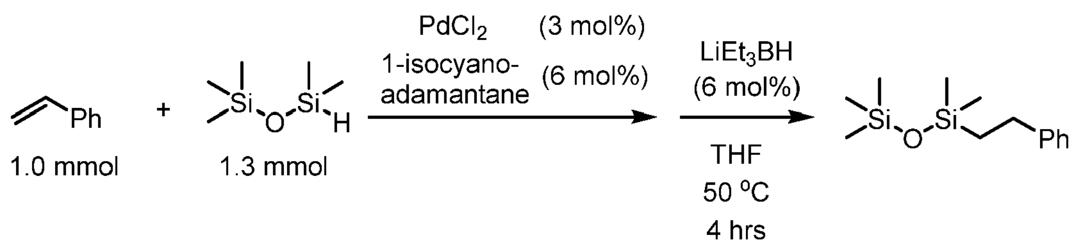


[Example 60] Hydrosilylation reaction using palladium chloride as catalyst and LiTEBH as promoter

A 20 mL Schlenk flask was charged with 5 mg (0.03 mmol) of palladium chloride, 10 mg (0.06 mmol) of 1-isocyanoadamantane, 115 μL (1.0 mmol) of styrene, and 254 μL (1.3 mmol) of 1,1,3,3,3-pentamethyldisiloxane and cooled to 0°C. Then 60 μL (0.06 mmol) of a 1.0M solution of LiTEBH in THF was added to the solution, which was stirred at 50°C for 4 hours. On this occasion, the clear solution turned black. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 19.

[Comparative Example 4] Hydrosilylation reaction in the absence of promoter

Reaction was carried out by the same procedure as in Example 60 aside from omitting the steps of cooling to 0°C and adding LiTEBH. At the end of reaction, the product was analyzed by $^1$H-NMR spectroscopy to determine its structure and yield. As a result, it was confirmed that only the signals assigned to the reactants were observed, i.e., no reaction took place.

[Table 19]

| | Metal catalyst | Promoter | Conversion (%) | Yield (%) |
|---|---|---|---|---|
| Example 60 | palladium chloride | LiTEBH | 28 | 5 |
| Comparative Example 4 | palladium chloride | - | 0 | 0 |

[Chemical Formula 26]

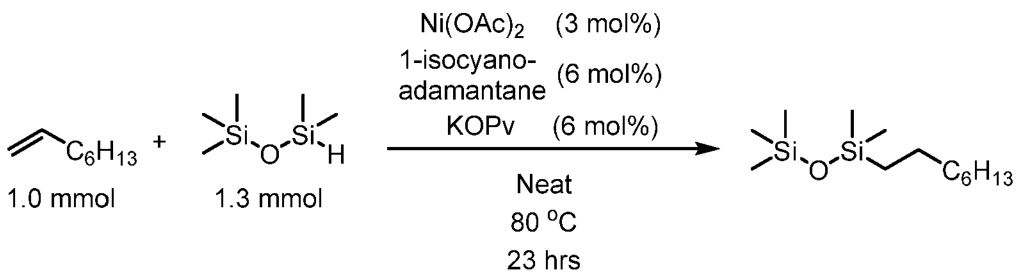


[Example 61] Hydrosilylation reaction using nickel acetate as catalyst and potassium pivalate as promoter

A reactor was charged with 5 mg (0.03 mmol) of nickel acetate, 10 mg (0.06 mmol) of 1-isocyanoadamantane, 115 μL (1.0 mmol) of styrene, 254 μL (1.3 mmol) of 1,1,3,3,3-pentamethyldisiloxane, and 8 mg (0.06 mmol) of potassium pivalate, which were stirred at 80°C for 23 hours. At the end of reaction, the product was analyzed by $^1$H-NMR spectroscopy to determine its structure and yield. As a result, it was confirmed that the signals assigned to the reactants diminished. Instead, a multiplet at 0.50 ppm indicative of the signal assigned to methylene protons adjoining the silyl group in the desired product was observed, and the yield was determined. The results are shown in Table 20.

[Comparative Example 5] Hydrosilylation reaction in the absence of promoter

Reaction was carried out by the same procedure as in Example 61 aside from omitting potassium pivalate. At the end of reaction, the product was analyzed by $^1$H-NMR spectroscopy to determine its structure and yield. As a result, it was confirmed that only the signals assigned to the reactants were observed, i.e., no reaction took place.

[Table 20]

| | Metal catalyst | Promoter | Conversion (%) | Yield (%) |
|---|---|---|---|---|
| Example 61 | nickel acetate | potassium pivalate | 88 | 48 |
| Comparative Example 5 | nickel acetate | - | 0 | 0 |

[Chemical Formula 27]

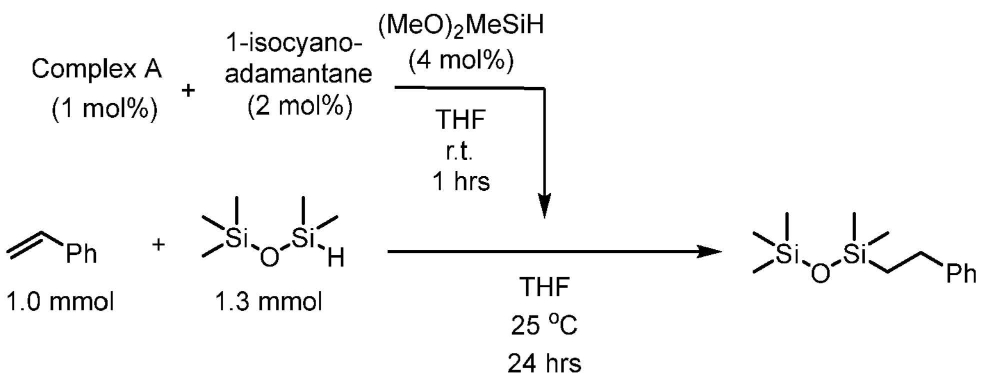


[Example 62] Hydrosilylation reaction using Iron complex A as catalyst and dimethoxymethylsilane as promoter

A reactor was charged with 7 mg (0.01 mmol) of Iron complex A in Synthesis Example 3, 3 mg (0.02 mmol) of 1-isocyanoadamantane, and 0.1 mL of THF, which were dissolved. Then 5 μL (0.04 mmol) of dimethoxymethylsilane was added to the solution, which was stirred at room temperature for 1 hour. Then 115 μL (1.0 mmol) of styrene and

254 μL (1.3 mmol) of 1,1,3,3,3-pentamethyldisiloxane were added to the solution, which was stirred at 25°C for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.50 ppm indicative of the signal assigned to methylene protons adjoining the silyl group in the desired product was observed, and the yield was determined. The results are shown in Table 21.

[Comparative Example 6] Hydrosilylation reaction in the absence of promoter

Reaction was carried out by the same procedure as in Example 62 aside from omitting dimethoxymethylsilane. At the end of reaction, the product was analyzed by $^1$H-NMR spectroscopy to determine its structure and yield. As a result, it was confirmed that only the signals assigned to the reactants were observed, i.e., no reaction took place.

[Table 21]

| | Metal catalyst | Promoter | Conversion (%) | Yield (%) |
|---|---|---|---|---|
| Example 62 | Iron complex A | dimethoxymethylsilane | >99 | >99 |
| Comparative Example 6 | Iron complex A | - | 0 | 0 |

[Chemical Formula 28]

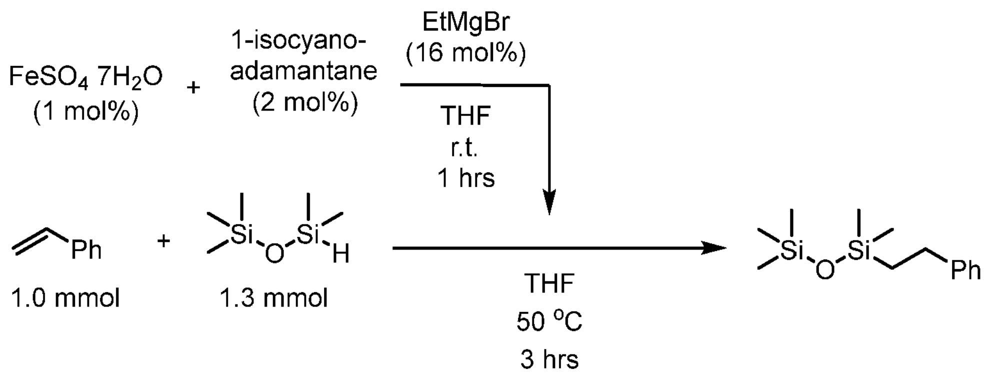


[Example 63] Hydrosilylation reaction using iron sulfate heptahydrate as catalyst and EtMgBr as promoter

A 20 mL Schlenk flask was charged with 3 mg (0.01 mmol) of iron sulfate heptahydrate, 3 mg (0.02 mmol) of 1-isocyanoadamantane, 0.1 mL of THF, 115 μL (1.0 mmol) of styrene, and 254 μL (1.3 mmol) of 1,1,3,3,3-pentamethyldisiloxane and cooled to 0°C. Then 160 μL (0.16 mmol) of a 1.0M solution of EtMgBr in THF was added to the solution, which was stirred at 50°C for 3 hours. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 22.

[Table 22]

| | Metal catalyst | Promoter | Conversion (%) | Yield (%) |
|---|---|---|---|---|
| Example 63 | iron sulfate heptahydrate | EtMgBr | 1 | 1 |

[Chemical Formula 29]

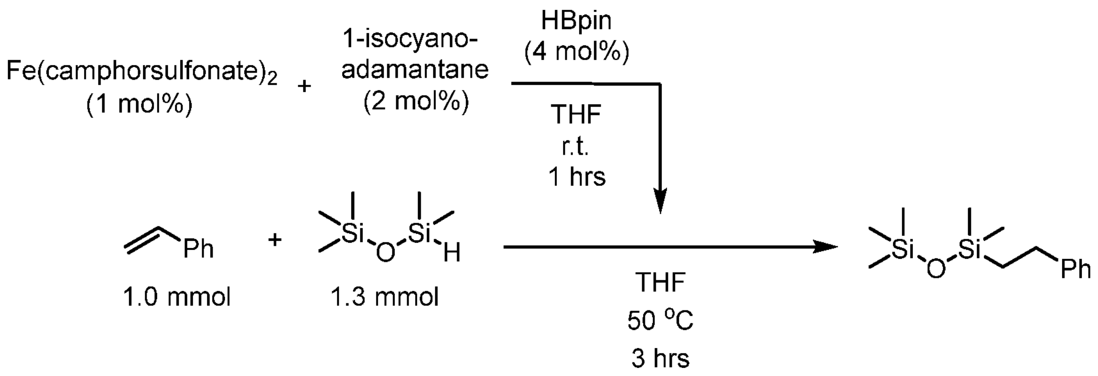


[Example 64] Hydrosilylation reaction using iron camphorsulfonate as catalyst and HBpin as promoter

A reactor was charged with 5 mg (0.01 mmol) of iron camphorsulfonate in Synthesis Example 4, 3 mg (0.02 mmol) of 1-isocyanoadamantane, 0.1 mL of THF, and 5 mg (0.04 mmol) of HBpin, which were stirred at room temperature for 1 hour. Then 115 μL (1.0 mmol) of styrene and 254 μL (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants diminished. Instead, a multiplet at 0.89 ppm indicative of the signal assigned to methylene protons adjoining the silyl group in the desired product was observed, and the yield was determined. The results are shown in Table 23.

[Table 23]

| | Metal catalyst | Promoter | Conversion (%) | Yield (%) |
|---|---|---|---|---|
| Example 64 | iron camphorsulfonate | HBpin | 4 | 4 |

(20) Hydrosilylation reaction in solventless system of α-methylstyrene with 1,1,3,3,3-pentamethyldisiloxane using cobalt pivalate, various diisocyanide ligands, and pinacol borane as hydrosilylation promoter

[Chemical Formula 30]

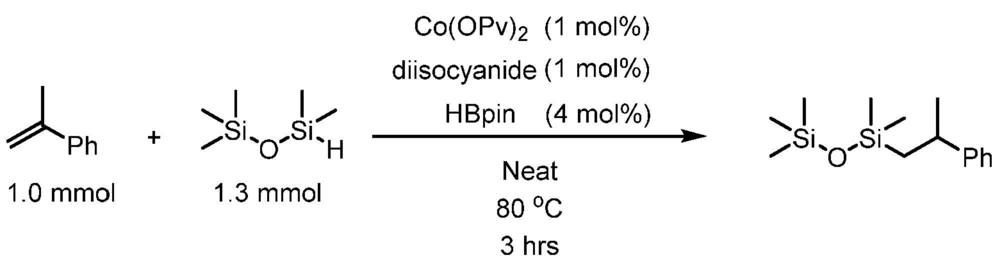


[Reference Example 65] Hydrosilylation reaction using 1,6-diisocyanohexane as diisocyanide ligand

A reactor was charged with 3 mg (0.01 mmol) of cobalt pivalate in Synthesis Example 2, 1 mg (0.01 mmol) of 1,6-diisocyanohexane, 5 mg (0.04 mmol) of HBpin, 131 μL (1.0 mmol) of α-methylstyrene, and 255 μL (1.3 mmol) of 1,1,3,3,3-pentamethyldisiloxane, which were stirred at 80°C for 3 hours. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining

the silyl group in the desired product was observed, and the yield was determined. The results are shown in Table 24.

[Reference Example 66] Hydrosilylation reaction using 1,8-diisocyanooctane as diisocyanide ligand

Reaction was carried out by the same procedure as in Reference Example 65 aside from using 2 mg (0.01 mmol) of 1,8-diisocyanooctane as the diisocyanide ligand. At the end of reaction, the product was analyzed by $^1$H-NMR spectroscopy to determine its structure and yield. As a result, it was confirmed that the signals assigned to the reactants disappeared completely. Instead, a multiplet at 0.96 ppm indicative of the signal assigned to methylene protons adjoining the silyl group in the desired product was observed, and the yield was determined. The results are shown in Table 24.

[Comparative Example 7] Hydrosilylation reaction of Reference Example 65 without using HBpin

Reaction was carried out by the same procedure as in Reference Example 65 aside from omitting HBpin. At the end of reaction, the product was analyzed by $^1$H-NMR spectroscopy to determine its structure and yield. As a result, it was confirmed that only the signals assigned to the reactants were observed, i.e., no reaction took place. The results are shown in Table 24.

[Comparative Example 8] Hydrosilylation reaction of Reference Example 66 without using HBpin

Reaction was carried out by the same procedure as in Reference Example 66 aside from omitting HBpin. At the end of reaction, the product was analyzed by $^1$H-NMR spectroscopy to determine its structure and yield. As a result, it was confirmed that only the signals assigned to the reactants were observed, i.e., no reaction took place. The results are shown in Table 24.

[Table 24]

| | Diisocyanide | Conversion (%) | Yield (%) |
|---|---|---|---|
| Reference Example 65 | 1,6-diisocyanohexane | 11 | 11 |
| Reference Example 66 | 1,8-diisocyanooctane | 8 | 8 |
| Comparative Example 7 | 1,6-diisocyanohexane | 0 | 0 |
| Comparative Example 8 | 1,8-diisocyanooctane | 0 | 0 |

(21) Hydrosilylation reaction of α-methylstyrene with 1,1,3,3,3-pentamethyldisiloxane using Cobalt carboxylate A, 1-isocyanoadamantane, and borane or hydrosilane as hydrosilylation promoter

[Chemical Formula 31]

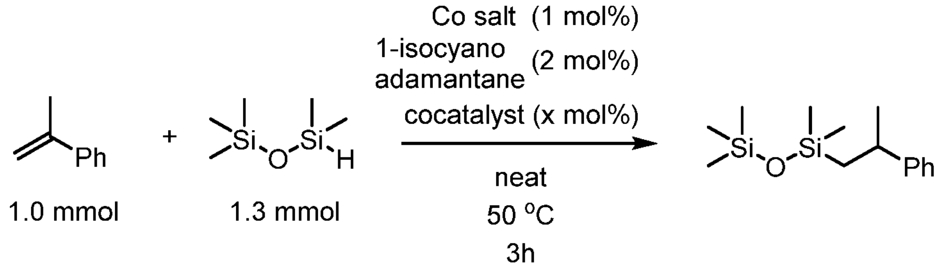


[Example 67] Hydrosilylation reaction using 9-BBN as hydrosilylation promoter

A reactor was charged with 9 mg (0.01 mmol) of Cobalt carboxylate A in Synthesis Example 5, 5 mg (0.03 mmol) of 1-isocyanoadamantane, 2 mg (0.01 mmol) of 9-BBN, 254 μL (1.3 mmol) of 1,1,3,3,3-pentamethyldisiloxane, and 130 μL (1.0 mmol) of a-methylstyrene, which were stirred at 50°C for 3 hours. After cooling, the product was analyzed by $^1$H-NMR spectroscopy to determine its structure and yield. As a result, it was confirmed that the signals assigned to the reactants diminished. Instead, a multiplet near 0.96 ppm indicative of the signal assigned to methylene protons adjoining the silyl group in the desired product was observed, and the yield was determined. The results are shown in

Table 25.

[Example 68] Hydrosilylation reaction using dimethoxymethylsilane as hydrosilylation promoter

Reaction was carried out by the same procedure as in Example 67 aside from using 4 mg (0.04 mmol) of dimethoxymethylsilane instead of 9-BBN. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 25.

[Example 69] Hydrosilylation reaction using diethoxymethylsilane as hydrosilylation promoter

Reaction was carried out by the same procedure as in Example 67 aside from using 5 mg (0.04 mmol) of diethoxymethylsilane instead of 9-BBN. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 25.

[Comparative Example 9] Hydrosilylation reaction without using promoter

Reaction was carried out by the same procedure as in Example 67 aside from omitting 9-BBN. At the end of reaction, the product was analyzed by $^1$H-NMR spectroscopy to determine its structure and yield. As a result, it was confirmed that the signals assigned to the reactants were observed and substantially no signals assigned to the product observed. The results are shown in Table 25.

[Table 25]

| | Promoter | x (mol%) | Conversion (%) | Yield (%) |
|---|---|---|---|---|
| Example 67 | 9-BBN | 1 | 68 | 68 |
| Example 68 | dimethoxymethylsilane | 4 | 75 | 75 |
| Example 69 | diethoxymethylsilane | 4 | 96 | 96 |
| Comparative Example 9 | - | - | 2 | 2 |

(22) Hydrosilylation reaction of styrene with various hydrosilanes using iron pivalate, 1-isocyanoadamantane, and pinacol borane as hydrosilylation promoter

[Chemical Formula 32]

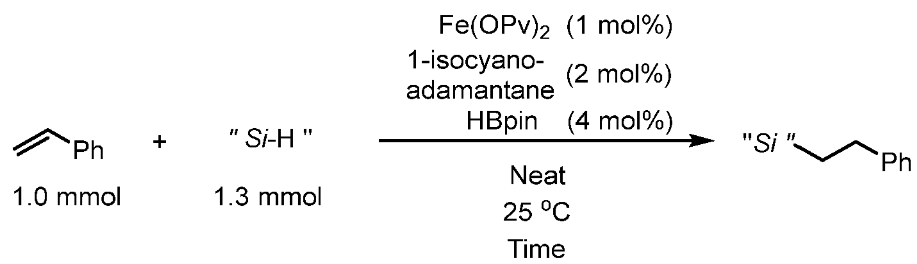


[Example 70] Hydrosilylation reaction with dimethylphenylsilane

A reactor was charged with 3 mg (0.01 mmol) of iron pivalate in Synthesis Example 1, 3 mg (0.02 mmol) of 1-isocyanoadamantane, 5 mg (0.04 mmol) of HBpin, 115 μL (1.0 mmol) of styrene, and 202 μL (1.3 mmol) of dimethylphenylsilane, which were stirred at 25°C for 3 hours. At the end of reaction, the product was analyzed by $^1$H-NMR

spectroscopy to determine its structure and yield. As a result, it was confirmed that the signals assigned to the reactants disappeared completely. Instead, a multiplet at 1.15 ppm indicative of the signal assigned to methylene protons adjoining the silyl group in the desired product was observed, and the yield was determined. The results are shown in Table 26.
$^1$H-NMR (396 MHz, $CDCl_3$) δ:
7.57-7.53 (m, 2H), 7.40-7.36 (m, 3H), 7.30-7.14 (m, 5H), 2.68-2.62 (m, 2H), 1.18-1.11 (m, 2H), 0.30 (s, 6H)

[Example 71] Hydrosilylation reaction with 1,1,1,3,5,5,5-heptamethyltrisiloxane

A reactor was charged with 3 mg (0.01 mmol) of iron pivalate in Synthesis Example 1, 3 mg (0.02 mmol) of 1-isocyanoadamantane, 5 mg (0.04 mmol) of HBpin, 115 μL (1.0 mmol) of styrene, and 353 μL (1.3 mmol) of 1,1,1,3,5,5,5-heptamethyltrisiloxane, which were stirred at 25°C for 24 hours. At the end of reaction, the product was analyzed by $^1$H-NMR spectroscopy to determine its structure and yield. As a result, it was confirmed that the signals assigned to the reactants diminished. Instead, a multiplet at 0.83 ppm indicative of the signal assigned to methylene protons adjoining the silyl group in the desired product was observed, and the yield was determined. The results are shown in Table 26.
$^1$H-NMR (396 MHz, $CDCl_3$) δ:
7.30-7.25 (m, 2H), 7.21-7.14 (m, 3H), 2.66-2.61 (m, 2H), 0.86-0.80 (m, 2H), 0.11 (s, 18H), 0.03 (s, 3H)

[Table 26]

| | Hydrosilane (mmol) | Reaction time (hr) | Conversion (%) | Yield (%) |
|---|---|---|---|---|
| Example 70 | dimethylphenylsilane | 3 | >99 | 95 |
| Example 71 | 1,1,1,3,5,5,5-heptamethyltrisiloxane | 24 | 22 | 10 |

(23) Hydrosilylation reaction of alkene with various hydrosilanes using cobalt pivalate, 1-isocyanoadamantane, and borane as hydrosilylation promoter

[Chemical Formula 33]

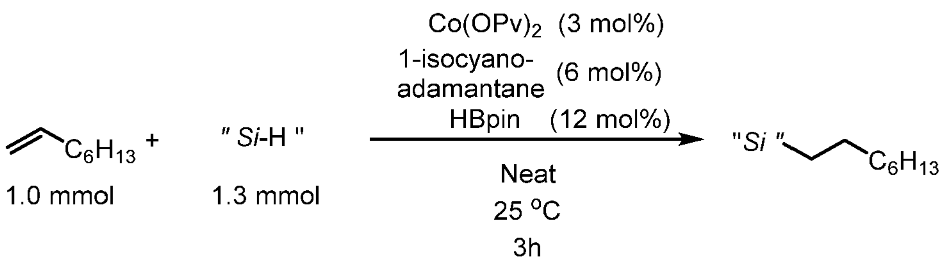


[Example 72] Hydrosilylation reaction with dimethylphenylsilane

A reactor was charged with 8 mg (0.03 mmol) of cobalt pivalate in Synthesis Example 2, 10 mg (0.06 mmol) of 1-isocyanoadamantane, 15 mg (0.12 mmol) of HBpin, 157 μL (1.0 mmol) of 1-octene, and 202 μL (1.3 mmol) of dimethylphenylsilane, which were stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a triplet at 0.73 ppm indicative of the signal assigned to methylene protons adjoining the silyl group in the desired product was observed, and the yield was determined. The results are shown in Table 27.
$^1$H-NMR (396 MHz, $CDCl_3$) δ:
7.57-7.47 (m, 2H), 7.36-7.32 (m, 3H), 1.35-1.16 (br, 12H), 0.87 (t, J=6.8, 3H), 0.73 (t, J=7.7, 2H), 0.25 (s, 6H)

[Example 73] Hydrosilylation reaction with 1,1,1,3,5,5,5-heptamethyltrisiloxane

A reactor was charged with 8 mg (0.03 mmol) of cobalt pivalate in Synthesis Example 2, 10 mg (0.06 mmol) of 1-isocyanoadamantane, 15 mg (0.12 mmol) of HBpin, 157 μL (1.0 mmol) of 1-octene, and 353 μL (1.3 mmol) of

1,1,1,3,5,5,5-heptamethyltrisiloxane, which were stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.46 ppm indicative of the signal assigned to methylene protons adjoining the silyl group in the desired product was observed, and the yield was determined. The results are shown in Table 27.
$^1$H-NMR (396 MHz, $CDCl_3$) δ:
1.35-1.23 (m, 12H), 0.90 (t, J=6.9, 3H), 0.48-0.44 (m, 2H), 0.10 (s, 18H), 0.01 (s, 3H)

[Example 74] Hydrosilylation reaction with triethylsilane

A reactor was charged with 8 mg (0.03 mmol) of cobalt pivalate in Synthesis Example 2, 10 mg (0.06 mmol) of 1-isocyanoadamantane, 15 mg (0.12 mmol) of HBpin, 157 μL (1.0 mmol) of 1-octene, and 207 μL (1.3 mmol) of triethylsilane, which were stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a quartet at 0.50 ppm indicative of the signal assigned to methylene protons adjoining the silyl group in the desired product was observed, and the yield was determined. The results are shown in Table 27.
$^1$H-NMR (396 MHz, $CDCl_3$) δ:
1.40-1.17 (m, 12H), 0.93 (t, J=7.7, 9H), 0.89 (t, J=7.7, 3H), 0.50 (q, J=7.7, 8H)

[Example 75] Hydrosilylation reaction with triethoxysilane

A reactor was charged with 8 mg (0.03 mmol) of cobalt pivalate in Synthesis Example 2, 10 mg (0.06 mmol) of 1-isocyanoadamantane, 15 mg (0.12 mmol) of HBpin, 157 μL (1.0 mmol) of 1-octene, and 237 μL (1.3 mmol) of triethoxysilane, which were stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.63 ppm indicative of the signal assigned to methylene protons adjoining the silyl group in the desired product was observed, and the yield was determined. The results are shown in Table 27.
$^1$H-NMR (396 MHz, $CDCl_3$) δ:
3.89-3.77 (m, 6H), 1.43-1.20 (m, 21H), 0.93-0.84 (m, 3H), 0.66-0.61 (m, 2H)

[Table 27]

| | Hydrosilane | Conversion (%) | Yield (%) |
|---|---|---|---|
| Example 72 | dimethylphenylsilane | >99 | >99 |
| Example 73 | 1,1,1,3,5,5,5-heptamethyltrisiloxane | >99 | 79 |
| Example 74 | triethylsilane | >99 | 11 |
| Example 75 | triethoxysilane | >99 | 8 |

[Chemical Formula 34]

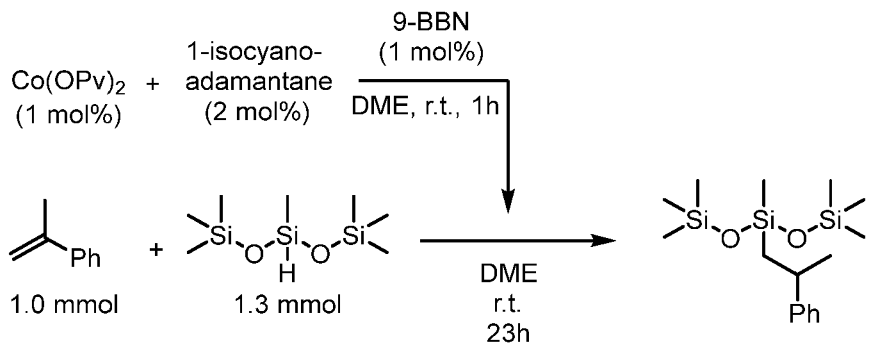


[Example 76] Hydrosilylation reaction with 1,1,1,3,5,5,5-heptamethyltrisiloxane

A reactor was charged with 3 mg (0.01 mmol) of cobalt pivalate in Synthesis Example 2, 3 mg (0.02 mmol) of

1-isocyanoadamantane, 0.1 mL of DME, and 2 mg (0.01 mmol) of 9-BBN, which were stirred at room temperature for 1 hour. Then 130 μL (1.0 mmol) of α-methylstyrene and 353 μL (1.3 mmol) of 1,1,1,3,5,5,5-heptamethyltrisiloxane were added to the solution, which was stirred at room temperature for 23 hours. At the end of reaction, the product was analyzed by $^1$H-NMR spectroscopy to determine its structure and yield. As a result, it was confirmed that the signals assigned to the reactants disappeared completely. Instead, a multiplet at 0.87 ppm indicative of the signal assigned to methylene protons adjoining the silyl group in the desired product was observed, and the yield was determined. The results are shown in Table 28.
$^1$H-NMR (396 MHz, $CDCl_3$) δ:
7.32-7.12 (m, 5H), 2.91 (tq, J=6.8, J=7.3, 1H), 1.27 (d, J=7.3, 3H), 0.94-0.81 (m, 2H), 0.08 (s, 9H), 0.07 (s, 9H), -0.12 (s, 3H)

[Table 28]

| | Hydrosilane | Conversion (%) | Yield (%) |
|---|---|---|---|
| Example 76 | 1,1,1,3,5,5,5-heptamethyltrisiloxane | >99 | >99 |

(24) Hydrosilylation reaction of alkene with dual end hydrosilane-capped polydimethylsiloxane (degree of polymerization 27) using borane or hydrosilane as hydrosilylation promoter

[Chemical Formula 35]

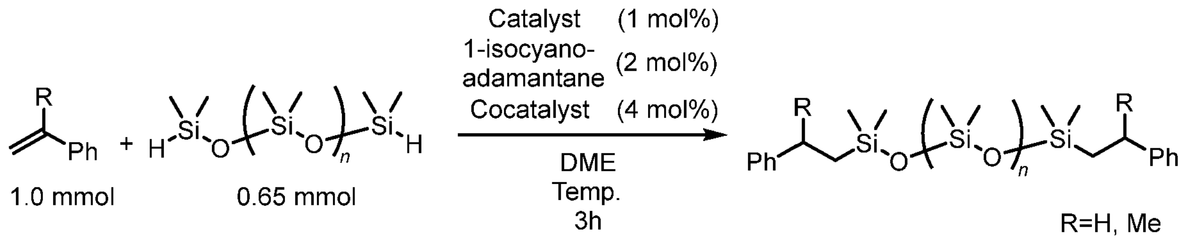


[Example 77] Hydrosilylation reaction of styrene with dual end hydrosilane-capped polydimethylsiloxane (DOP 27) using iron pivalate, 1-isocyanoadamantane, and HBpin as promoter

A reactor was charged with 3 mg (0.01 mmol) of iron pivalate in Synthesis Example 1, 3 mg (0.02 mmol) of 1-isocyanoadamantane, 0.1 mL of DME, and 5 mg (0.04 mmol) of HBpin, which were dissolved. Then 115 μL (1.0 mmol) of styrene and 1.30 g (0.65 mmol) of dual end hydrosilane-capped polydimethylsiloxane (DOP 27) were added to the solution, which was stirred at 50°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.83 ppm indicative of the signal assigned to methylene protons adjoining the silyl group in the desired product was observed, and the yield was determined. The results are shown in Table 29.
$^1$H-NMR (396 MHz, $CDCl_3$) δ:
0.07 (br), 0.88-0.95 (m, 4H), 2.62-2.69 (m, 4H), 7.13-7.33 (m, 10H)

[Example 78] Hydrosilylation reaction of styrene with dual end hydrosilane-capped polydimethylsiloxane (DOP 27) using iron pivalate, 1-isocyanoadamantane, and dimethoxmethylsilane as promoter

A reactor was charged with 3 mg (0.01 mmol) of iron pivalate in Synthesis Example 1, 3 mg (0.02 mmol) of 1-isocyanoadamantane, 0.1 mL of DME, and 4 mg (0.04 mmol) of dimethoxymethylsilane, which were stirred. Then 115 μL (1.0 mmol) of styrene and 1.30 g (0.65 mmol) of dual end hydrosilane-capped polydimethylsiloxane (DOP 27) were added to the solution, which was stirred at 50°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.83 ppm indicative of the signal assigned to methylene protons adjoining the silyl group in the desired product was observed, and the yield was determined. The results are shown in Table 29.

[Example 79] Hydrosilylation reaction of α-methylstyrene with dual end hydrosilane-capped polydimethylsiloxane (DOP 27) using cobalt pivalate, 1-isocyanoadamantane, and HBpin as promoter

A reactor was charged with 3 mg (0.01 mmol) of cobalt pivalate in Synthesis Example 2, 3 mg (0.02 mmol) of 1-isocyanoadamantane, 0.1 mL of DME, and 5 mg (0.04 mmol) of HBpin, which were dissolved. Then 130 μL (1.0 mmol) of α-methylstyrene and 1.30 g (0.65 mmol) of dual end hydrosilane-capped polydimethylsiloxane (DOP 27) were added to the solution, which was stirred at 80°C for 3 hours. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 29.
$^1$H-NMR (396 MHz, $CDCl_3$) δ:
7.30-7.14 (m, 10H), 2.95-2.90 (m, 2H), 1.28 (d, J=6.8, 6H), 1.02-0.90 (m, 4H), 0.07 (br), 0.04 (s), -0.03 (s), -0.06 (s)

[Example 80] Hydrosilylation reaction of α-methylstyrene with dual end hydrosilane-capped polydimethylsiloxane (DOP 27) using cobalt pivalate, 1-isocyanoadamantane, and 9-BBN as promoter

A reactor was charged with 3 mg (0.01 mmol) of cobalt pivalate in Synthesis Example 2, 3 mg (0.02 mmol) of 1-isocyanoadamantane, 0.1 mL of DME, and 2 mg (0.01 mmol) of 9-BBN, which were dissolved. Then 130 μL (1.0 mmol) of α-methylstyrene and 1.30 g (0.65 mmol) of dual end hydrosilane-capped polydimethylsiloxane (DOP 27) were added to the solution, which was stirred at 80°C for 3 hours. At the end of reaction, the product was analyzed by $^1$H-NMR spectroscopy to determine its structure and yield. As a result, it was confirmed that the signals assigned to the reactants diminished. Instead, a multiplet at 0.96 ppm indicative of the signal assigned to methylene protons adjoining the silyl group in the desired product was observed, and the yield was determined. The results are shown in Table 29.

[Example 81] Hydrosilylation reaction of α-methylstyrene with dual end hydrosilane-capped polydimethylsiloxane (DOP 27) using cobalt pivalate, 1-isocyanoadamantane, and dimethoxymethylsilane as promoter

A reactor was charged with 3 mg (0.01 mmol) of cobalt pivalate in Synthesis Example 2, 3 mg (0.02 mmol) of 1-isocyanoadamantane, 0.1 mL of DME, and 4 mg (0.04 mmol) of dimethoxymethylsilane, which were stirred. Then 130 μL (1.0 mmol) of α-methylstyrene and 1.30 g (0.65 mmol) of dual end hydrosilane-capped polydimethylsiloxane (DOP 27) were added to the solution, which was stirred at 80°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.96 ppm indicative of the signal assigned to methylene protons adjoining the silyl group in the desired product was observed, and the yield was determined. The results are shown in Table 29.

[Comparative Example 10] Hydrosilylation reaction of styrene with dual end hydrosilane-capped polydimethylsiloxane (DOP 27) using iron pivalate and 1-isocyanoadamantane, but not promoter

A reactor was charged with 3 mg (0.01 mmol) of iron pivalate in Synthesis Example 1, 3 mg (0.02 mmol) of 1-isocyanoadamantane, 115 μL (1.0 mmol) of styrene, and 1.30 g (0.65 mmol) of hydrosilane-endcapped polydimethylsiloxane (DOP 27), which were stirred at 50°C for 3 hours. At the end of reaction, the product was analyzed by $^1$H-NMR spectroscopy to determine its structure and yield. As a result, only the signals assigned to the reactants were observed. The results are shown in Table 29.

[Comparative Example 11] Hydrosilylation reaction with dual end hydrosilane-capped polydimethylsiloxane (DOP 27) without using promoter

A reactor was charged with 3 mg (0.01 mmol) of cobalt pivalate in Synthesis Example 2, 3 mg (0.02 mmol) of 1-isocyanoadamantane, 130 μL (1.0 mmol) of α-methylstyrene, and 1.30 g (0.65 mmol) of dual end hydrosilane-capped polydimethylsiloxane (DOP 27), which were stirred at 80°C for 3 hours. At the end of reaction, the product was analyzed by $^1$H-NMR spectroscopy to determine its structure and yield. As a result, only the signals assigned to the reactants were observed. The results are shown in Table 29.

[Table 29]

| | Catalyst | Alkene | Promoter | Reaction temperature (°C) | Conversion (%) | Yield (%) |
|---|---|---|---|---|---|---|
| Example 77 | Fe $(OPv)_2$ | styrene | HBpin | 50 | >99 | >99 |
| Example 78 | Fe $(OPv)_2$ | styrene | dimethoxymethylsilane | 50 | >99 | >99 |
| Example 79 | Co $(OPv)_2$ | α-methylstyrene | HBpin | 80 | 51 | 51 |
| Example 80 | Co $(OPv)_2$ | α-methylstyrene | 9-BBN | 80 | >99 | >99 |
| Example 81 | Co $(OPv)_2$ | α-methylstyrene | dimethoxymethylsilane | 80 | >99 | >99 |
| Comparative Example 10 | Fe $(OPv)_2$ | styrene | - | 50 | 0 | 0 |
| Comparative Example 11 | Co $(OPv)_2$ | α-methylstyrene | - | 80 | 0 | 0 |

(25) Hydrosilylation reaction of allyl glycidyl ether with 1,1,3,3,3-pentamethylsiloxane using cobalt pivalate, 1-isocyanoadamantane, and hydrosilane as hydrosilylation promoter

[Chemical Formula 36]

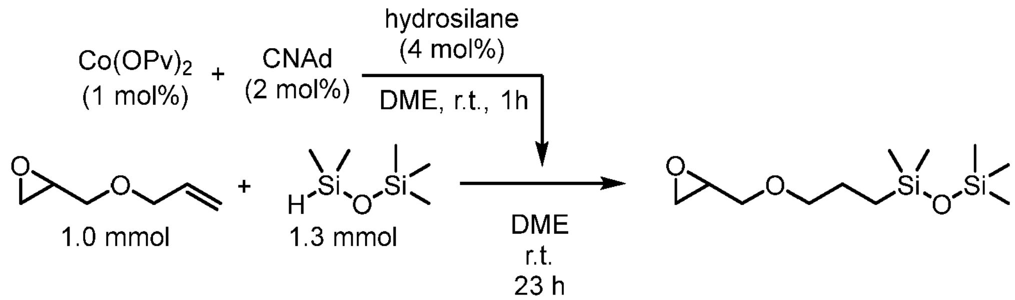


[Example 82] Hydrosilylation reaction using diethoxymethylsilane as promoter

A reactor was charged with 2 mg (0.01 mmol) of cobalt pivalate in Synthesis Example 2, 3 mg (0.02 mmol) of 1-isocyanoadamantane, and 0.1 mL of DME, which were dissolved. Then 5 mg (0.04 mmol) of diethoxymethylsilane was added to the solution, which was stirred at room temperature for 1 hour. On this occasion, the purple solution turned blackish yellow. Then, 118 μL (1.0 mmol) of allyl glycidyl ether and 254 μL (1.3 mmol) of 1,1,3,3,3-pentamethyldisiloxane were added to the solution, which was stirred at room temperature for 23 hours. At the end of reaction, the product was analyzed by $^1$H-NMR spectroscopy to determine its structure and yield. As a result, it was confirmed that the signals assigned to the reactants disappeared completely. Instead, a multiplet at 0.51 ppm indicative of the signal assigned to methylene protons adjoining the silyl group in the desired product was observed, and the yield was determined. The results are shown in Table 30.
$^1$H-NMR (396 MHz, $CDCl_3$) δ:
3.72-3.69 (m, 1H), 3.51-3.38 (m, 3H), 3.18-3.13 (m, 1H), 2.80 (t, J=4.8, 1H), 2.62-2.60 (m, 1H), 1.61 (quin, J=7.7, 2H), 0.53-0.49 (m, 2H), 0.06 (s, 9H), 0.06 (s, 6H)

[Comparative Example 12] Hydrosilylation reaction without using promoter

A reactor was charged with 2 mg (0.01 mmol) of cobalt pivalate in Synthesis Example 2, 3 mg (0.02 mmol) of 1-isocyanoadamantane, and 0.1 mL of DME, which were dissolved. Then, 118 μL (1.0 mmol) of allyl glycidyl ether and 254 μL (1.3 mmol) of 1,1,3,3,3-pentamethyldisiloxane were added to the solution, which was stirred at room temperature for 23 hours. At the end of reaction, the product was analyzed by $^1$H-NMR spectroscopy to determine its structure and yield. As a result, only the signals assigned to the reactants were observed. The results are shown in Table 30.

[Table 30]

| | Promoter | Conversion (%) | Yield (%) |
|---|---|---|---|
| Example 82 | diethoxymethylsilane | >99 | >99 |
| Comparative Example 12 | - | 0 | 0 |

(26) Hydrosilylation reaction of alkene with 1,1,3,3,3-pentamethyldisiloxane using iron pivalate, 1-isocyanoadamantane, and diethoxymethylsilane as hydrosilylation promoter

[Chemical Formula 37]

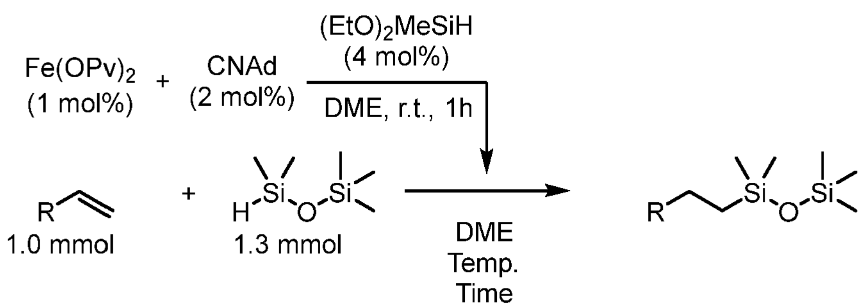


[Example 83] Hydrosilylation reaction of allyl glycidyl ether using diethoxymethylsilane as promoter

A reactor was charged with 2 mg (0.01 mmol) of iron pivalate in Synthesis Example 1, 3 mg (0.02 mmol) of 1-isocyanoadamantane, and 0.1 mL of DME, which were dissolved. Then 5 mg (0.04 mmol) of diethoxymethylsilane was added to the solution, which was stirred at room temperature for 1 hour. On this occasion, the yellow solution turned orange. Then, 118 μL (1.0 mmol) of allyl glycidyl ether and 254 μL (1.3 mmol) of 1,1,3,3,3-pentamethyldisiloxane were added to the solution, which was stirred at 50°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 0.51 ppm indicative of the signal assigned to methylene protons adjoining the silyl group in the desired product was observed, and the yield was determined. The results are shown in Table 31.

[Example 84] Hydrosilylation reaction of N,N-diethylallylamine using diethoxymethylsilane as promoter

A reactor was charged with 2 mg (0.01 mmol) of iron pivalate in Synthesis Example 1, 3 mg (0.02 mmol) of 1-isocyanoadamantane, and 0.1 mL of DME, which were dissolved. Then 5 mg (0.04 mmol) of diethoxymethylsilane was added to the solution, which was stirred at room temperature for 1 hour. On this occasion, the orange solution turned red. Then, 113 mg (1.0 mmol) of N,N-diethylallylamine and 254 μL (1.3 mmol) of 1,1,3,3,3-pentamethyldisiloxane were added to the solution, which was stirred at 50°C for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.46 ppm indicative of the signal assigned to methylene protons adjoining the silyl group in the desired product was observed, and the yield was determined. The results are shown in Table 31.
$^1$H-NMR (396 MHz, $CDCl_3$) δ:

2.46-2.42 (m, 2H), 2.54-2.51 (m, 4H), 1.50-1.43 (m, 2H), 1.02 (t, J=5.8, 6H), 0.47-0.44 (m, 2H), 0.06 (s, 15H)

[Example 85] Hydrosilylation reaction of N-allylaniline using diethoxymethylsilane as promoter

A reactor was charged with 2 mg (0.01 mmol) of iron pivalate in Synthesis Example 1, 3 mg (0.02 mmol) of 1-isocyanoadamantane, and 0.1 mL of DME, which were dissolved. Then 5 mg (0.04 mmol) of diethoxymethylsilane was added to the solution, which was stirred at room temperature for 1 hour. On this occasion, the orange solution turned red. Then, 133 mg (1.0 mmol) of N-allylaniline and 254 $\mu$L (1.3 mmol) of 1,1,3,3,3-pentamethyldisiloxane were added to the solution, which was stirred at 25°C for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.59 ppm indicative of the signal assigned to methylene protons adjoining the silyl group in the desired product was observed, and the yield was determined. The results are shown in Table 31.

$^1$H-NMR (396 MHz, $CDCl_3$) $\delta$:

7.17 (t, J=7.7, 2H), 6.68 (t, J=7.7, 1H), 6.60 (d, J=7.7, 2H), 3.67 (br, 1H), 3.10 (q, J=5.8, 2H), 1.67-1.60 (m, 2H), 0.61-0.57 (m, 2H), 0.07 (s, 15H)

$^{13}$C-NMR (99 MHz, $CDCl_3$) $\delta$: 148.4, 129.2, 117.0, 112.7, 47.0, 23.4, 15.7, 2.0, 0.3

$^{29}$Si-NMR (119 MHz, $CDCl_3$) $\delta$: 7.67, 7.48

[Example 86] Hydrosilylation reaction of 9-vinylcarbazole using diethoxymethylsilane as promoter

A reactor was charged with 2 mg (0.01 mmol) of iron pivalate in Synthesis Example 1, 3 mg (0.02 mmol) of 1-isocyanoadamantane, and 0.1 mL of DME, which were dissolved. Then 5 mg (0.04 mmol) of diethoxymethylsilane was added to the solution, which was stirred at room temperature for 1 hour. On this occasion, the orange solution turned red. Then, 193 mg (1.0 mmol) of 9-vinylcarbazole and 254 $\mu$L (1.3 mmol) of 1,1,3,3,3-pentamethyldisiloxane were added to the solution, which was stirred at 25°C for 3 hours. At the end of reaction, the product was analyzed by $^1$H-NMR spectroscopy to determine its structure and yield. As a result, it was confirmed that the signals assigned to the reactants disappeared completely. Instead, a multiplet at 1.14 ppm indicative of the signal assigned to methylene protons adjoining the silyl group in the desired product was observed, and the yield was determined. The results are shown in Table 31.
$^1$H-NMR (396 MHz, $CDCl_3$) $\delta$:
8.11 (t, J=7.7, 2H), 7.47 (t, J=7.7, 2H), 7.39 (d, J=7.7, 2H), 7.23 (t, J=7.7, 2H), 4.41-4.36 (m, 2H), 1.14-1.19 (m, 2H), 0.17 (s, 6H), 0.16 (s, 9H)

[Table 31]

| | Alkene | Reaction temperature (°C) | Reaction time (hr) | Conversion (%) | Yield (%) |
|---|---|---|---|---|---|
| Example 83 | allyl glycidyl ether | 50 | 3 | 67 | 40 |
| Example 84 | N,N-diethylallylamine | 50 | 24 | 88 | 6 |
| Example 85 | N-allylaniline | 25 | 24 | >99 | 97 |
| Example 86 | N-vinylcarbazole | 25 | 3 | >99 | >99 |

[Chemical Formula 38]

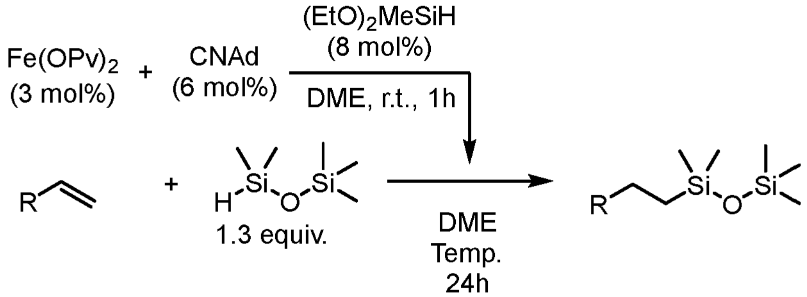


[Example 87] Hydrosilylation reaction of N,N-dimethylallylamine using diethoxymethylsilane as promoter

A reactor was charged with 8 mg (0.03 mmol) of iron pivalate in Synthesis Example 1, 10 mg (0.06 mmol) of 1-isocyanoadamantane, and 0.1 mL of DME, which were dissolved. Then 11 mg (0.08 mmol) of diethoxymethylsilane was added to the solution, which was stirred at room temperature for 1 hour. On this occasion, the orange solution turned red. Then, 118 μL (1.0 mmol) of N,N-dimethylallylamine and 254 μL (1.3 mmol) of 1,1,3,3,3-pentamethyldisiloxane were added to the solution, which was stirred at 80°C for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.48 ppm indicative of the signal assigned to methylene protons adjoining the silyl group in the desired product was observed, and the yield was determined. The results are shown in Table 32.
$^1$H-NMR (396 MHz, $CDCl_3$) δ:
2.42-2.38 (m, 2H), 2.38 (s, 6H), 1.52-1.46 (m, 2H), 0.50-0.46 (m, 2H), 0.06 (s, 15H)

[Example 88] Hydrosilylation reaction of 3-(2-methoxyethoxy)-1-propene using diethoxymethylsilane as promoter

A reactor was charged with 8 mg (0.03 mmol) of iron pivalate in Synthesis Example 1, 10 mg (0.06 mmol) of 1-isocyanoadamantane, and 0.1 mL of DME, which were dissolved. Then 11 mg (0.08 mmol) of diethoxymethylsilane was added to the solution, which was stirred at room temperature for 1 hour. On this occasion, the orange solution turned red. Then, 116 mg (1.0 mmol) of 3-(2-methoxyethoxy)-1-propene and 254 μL (1.3 mmol) of 1,1,3,3,3-pentamethyldisiloxane were added to the solution, which was stirred at room temperature for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.49 ppm indicative of the signal assigned to methylene protons adjoining the silyl group in the desired product was observed, and the yield was determined. The results are shown in Table 32.

$^1$H-NMR (396 MHz, $CDCl_3$) δ:

3.60-3.53 (m, 4H), 3.45-3.41 (m, 2H), 3.39 (s, 3H), 1.66-1.58 (m, 2H), 0.49-0.52 (m, 2H), 0.06 (s, 9H), 0.05 (s, 6H)

$^{13}$C-NMR (99 MHz, $CDCl_3$) δ: 74.3, 72.0, 69.9, 59.1, 23.4, 14.2, 1.9, 0.2

$^{29}$Si-NMR (119 MHz, $CDCl_3$) δ: 7.63, 7.36

[Example 89] Hydrosilylation reaction of $CH_2=CHCH_2-(OCH_2CH_2)_8-OMe$ using diethoxymethylsilane as promoter

A reactor was charged with 8 mg (0.03 mmol) of iron pivalate in Synthesis Example 1, 10 mg (0.06 mmol) of 1-isocyanoadamantane, and 0.1 mL of DME, which were dissolved. Then 11 mg (0.08 mmol) of diethoxymethylsilane was added to the solution, which was stirred at room temperature for 1 hour. On this occasion, the orange solution turned red. A 1/3 portion of the solution was taken out, and 43 mg (0.10 mmol) of $CH_2=CHCH_2-(OCH_2CH_2)_8-OMe$ and 19 mg (0.13 mmol) of 1,1,3,3,3-pentamethyldisiloxane were added to that portion, which was stirred at room temperature for 24 hours. At the end of reaction, the product was analyzed by $^1$H-NMR spectroscopy to determine its structure and yield.

As a result, it was confirmed that the signals assigned to the reactants disappeared completely. Instead, a multiplet at 0.49 ppm indicative of the signal assigned to methylene protons adjoining the silyl group in the desired product was observed, and the yield was determined. The results are shown in Table 32.
$^1$H-NMR (396 MHz, $CDCl_3$) $\delta$:
3.66-3.60 (br, 24H), 3.60-3.56 (m, 2H), 3.55-3.53 (m, 2H), 3.41-3.37 (m, 5H), 1.65-1.53 (m, 2H), 0.52-0.46 (m, 2H), 0.05 (s, 9H), 0.04 (s, 6H)

[Table 32]

| | Alkene | Reaction temperature (°C) | Conversion (%) | Yield (%) |
|---|---|---|---|---|
| Example 87 | N,N-dimethylallylamine | 80 | >99 | 7 |
| Example 88 | 3-(2-methoxyethoxy)-1-propene | room temperature | 67 | 42 |
| Example 89 | $CH_2$=$CHCH_2$-$(OCH_2CH_2)_8$-OMe | room temperature | 89 | 62 |

(27) Hydrosilylation reaction of alkene with 1,1,1,3,3-pentamethyldisiloxane using cobalt pivalate, 1-isocyanoadamantane, and triethoxysilane as hydrosilylation promoter

[Chemical Formula 39]

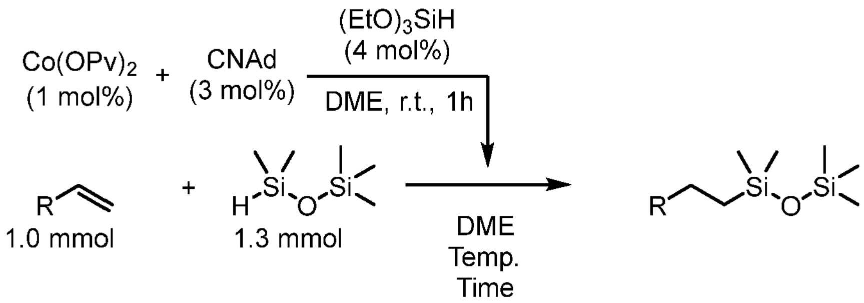


[Example 90] Hydrosilylation reaction of N,N-dimethylallylamine using triethoxysilane as promoter

A reactor was charged with 2 mg (0.01 mmol) of cobalt pivalate in Synthesis Example 2, 5 mg (0.03 mmol) of 1-isocyanoadamantane, and 0.1 mL of DME, which were dissolved. Then 7 mg (0.04 mmol) of triethoxysilane was added to the solution, which was stirred at room temperature for 1 hour. On this occasion, the blue solution turned dark yellow. Then, 118 $\mu$L (1.0 mmol) of N,N-dimethylallylamine and 254 $\mu$L (1.3 mmol) of 1,1,3,3,3-pentamethyldisiloxane were added to the solution, which was stirred at 80°C for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.48 ppm indicative of the signal assigned to methylene protons adjoining the silyl group in the desired product was observed, and the yield was determined. The results are shown in Table 33.

[Table 33]

| | Alkene | Reaction temp. (°C) | Reaction time (hr) | Conversion (%) | Yield (%) |
|---|---|---|---|---|---|
| Example 90 | N,N-dimethylallylamine | 80 | 24 | >99 | 17 |

[Chemical Formula 40]

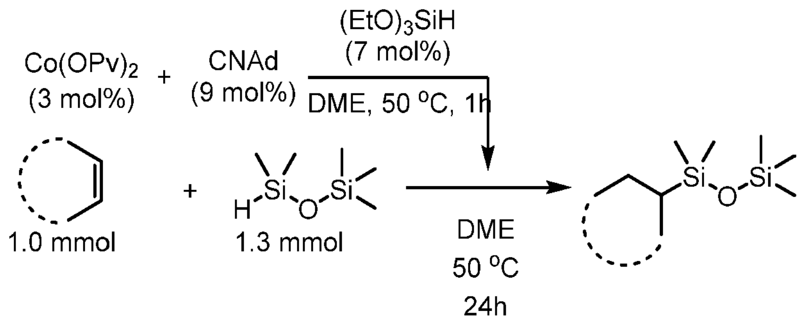


[Example 91] Hydrosilylation reaction of cyclopentene using triethoxysilane as promoter

A reactor was charged with 8 mg (0.03 mmol) of cobalt pivalate in Synthesis Example 2, 15 mg (0.09 mmol) of 1-isocyanoadamantane, and 25 μL of DME, which were dissolved. Then 12 mg (0.07 mmol) of triethoxysilane was added to the solution, which was stirred at 50°C for 1 hour. On this occasion, the blue solution turned dark yellow. Then, 68 mg (1.0 mmol) of cyclopentene and 254 μL (1.3 mmol) of 1,1,3,3,3-pentamethyldisiloxane were added to the solution, which was stirred at 50°C for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.85 ppm indicative of the signal assigned to methylene protons adjoining the silyl group in the desired product was observed, and the yield was determined. The results are shown in Table 34.
$^1$H-NMR (396 MHz, $CDCl_3$) δ:
1.75-1.67 (m, 2H), 1.58-1.45 (m, 4H), 1.34-1.25 (m, 2H), 0.90-0.81 (m, 1H), 0.06 (s, 9H), 0.01 (s, 6H)

[Example 92] Hydrosilylation reaction of cyclohexene using triethoxysilane as promoter

A reactor was charged with 8 mg (0.03 mmol) of cobalt pivalate in Synthesis Example 2, 15 mg (0.09 mmol) of 1-isocyanoadamantane, and 50 μL of DME, which were dissolved. Then 12 mg (0.07 mmol) of triethoxysilane was added to the solution, which was stirred at 50°C for 1 hour. On this occasion, the blue solution turned dark yellow. Then, 82 mg (1.0 mmol) of cyclohexene and 254 μL (1.3 mmol) of 1,1,3,3,3-pentamethyldisiloxane were added to the solution, which was stirred at 50°C for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.54 ppm indicative of the signal assigned to methylene protons adjoining the silyl group in the desired product was observed, and the yield was determined. The results are shown in Table 34.
$^1$H-NMR (396 MHz, $CDCl_3$) δ:
1.72-1.66 (m, 5H), 1.22-1.05 (m, 5H), 0.58-0.50 (m, 1H), 0.06 (s, 9H), 0.01 (s, 6H)

[Table 34]

| | Alkene | Reaction temperature (°C) | Reaction time (hr) | Conversion (%) | Yield (%) |
|---|---|---|---|---|---|
| Example 91 | cyclopentene | 50 | 24 | 97 | 95 |
| Example 92 | cyclohexene | 50 | 24 | 55 | 54 |

(28) Hydrosilylation reaction of α-methylstyrene with 1,1,1,3,3-pentamethyldisiloxane using cobalt carboxylate, 1-isocyanoadamantane, and hydrosilane as hydrosilylation promoter

[Chemical Formula 41]

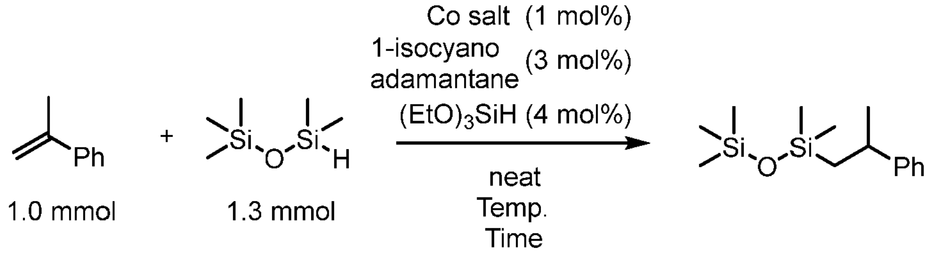


[Example 93] Hydrosilylation reaction using Cobalt carboxylate B as catalyst

A reactor was charged with 7 mg (0.01 mmol) of Cobalt carboxylate B in Synthesis Example 6, 5 mg (0.03 mmol) of 1-isocyanoadamantane, 7 mg (0.04 mmol) of $(EtO)_3SiH$, 254 μL (1.3 mmol) of 1,1,3,3,3-pentamethyldisiloxane, and 130 μL (1.0 mmol) of α-methylstyrene, which were stirred at 80°C for 24 hours. After cooling, the product was analyzed by $^1$H-NMR spectroscopy to determine its structure and yield. As a result, it was confirmed that the signals assigned to the reactants diminished. Instead, a multiplet near 0.96 ppm indicative of the signal assigned to methylene protons adjoining the silyl group in the desired product was observed, and the yield was determined. The results are shown in Table 35.

[Example 94] Hydrosilylation reaction using Cobalt carboxylate D as catalyst

A reactor was charged with 6 mg (0.01 mmol) of Cobalt carboxylate D in Synthesis Example 8, 5 mg (0.03 mmol) of 1-isocyanoadamantane, 7 mg (0.04 mmol) of $(EtO)_3SiH$, 254 μL (1.3 mmol) of 1,1,3,3,3-pentamethyldisiloxane, and 130 μL (1.0 mmol) of α-methylstyrene, which were stirred at 80°C for 24 hours. After cooling, the product was analyzed by $^1$H-NMR spectroscopy to determine its structure and yield. As a result, it was confirmed that the signals assigned to the reactants diminished. Instead, a multiplet near 0.96 ppm indicative of the signal assigned to methylene protons adjoining the silyl group in the desired product was observed, and the yield was determined. The results are shown in Table 35.

[Example 95] Hydrosilylation reaction using Cobalt carboxylate E as catalyst

A reactor was charged with 6 mg (0.01 mmol) of Cobalt carboxylate E in Synthesis Example 9, 5 mg (0.03 mmol) of 1-isocyanoadamantane, 7 mg (0.04 mmol) of $(EtO)_3SiH$, 254 μL (1.3 mmol) of 1,1,3,3,3-pentamethyldisiloxane, and 130 μL (1.0 mmol) of α-methylstyrene, which were stirred at 50°C for 3 hours. After cooling, the product was analyzed by $^1$H-NMR spectroscopy to determine its structure and yield. As a result, it was confirmed that the signals assigned to the reactants diminished. Instead, a multiplet near 0.96 ppm indicative of the signal assigned to methylene protons adjoining the silyl group in the desired product was observed, and the yield was determined. The results are shown in Table 35.

[Example 96] Hydrosilylation reaction using Cobalt carboxylate F as catalyst

A reactor was charged with 6 mg (0.01 mmol) of Cobalt carboxylate F in Synthesis Example 10, 5 mg (0.03 mmol) of 1-isocyanoadamantane, 7 mg (0.04 mmol) of $(EtO)_3SiH$, 254 μL (1.3 mmol) of 1,1,3,3,3-pentamethyldisiloxane, and 130 μL (1.0 mmol) of α-methylstyrene, which were stirred at 50°C for 3 hours. After cooling, the product was analyzed by $^1$H-NMR spectroscopy to determine its structure and yield. As a result, it was confirmed that the signals assigned to the reactants diminished. Instead, a multiplet near 0.96 ppm indicative of the signal assigned to methylene protons adjoining the silyl group in the desired product was observed, and the yield was determined. The results are shown in Table 35.

[Table 35]

| | Catalyst | Reaction temperature (°C) | Reaction time (hr) | Conversion (%) | Yield (%) |
|---|---|---|---|---|---|
| Example 93 | Cobalt carboxylate B | 80 | 24 | >99 | >99 |
| Example 94 | Cobalt carboxylate D | 80 | 24 | >99 | >99 |
| Example 95 | Cobalt carboxylate E | 50 | 3 | >99 | >99 |

(continued)

| | Catalyst | Reaction temperature (°C) | Reaction time (hr) | Conversion (%) | Yield (%) |
|---|---|---|---|---|---|
| Example 96 | Cobalt carboxylate F | 50 | 3 | >99 | >99 |

[Example 97] Hydrosilylation reaction using Cobalt carboxylate E as catalyst and 2,6-diisopropylphenylisocyanide

A 100 mL three-neck flask was charged with 142 mg (0.25 mmol) of Cobalt carboxylate E in Synthesis Example 9, 281 mg (1.5 mmol) of 2,6-diisopropylphenylisocyanide as isocyanide ligand, 2.5 mL of toluene, and 159 mg (1.5 mmol) of $(MeO)_2MeSiH$ as promoter, which were stirred at room temperature for 1 hour. On this occasion, the solution turned from dark purple to brown. The toluene was fully removed at room temperature and reduced pressure, after which the pressure was restored with argon gas. Thereafter, 14.43 g (65 mmol) of 1,1,1,3,5,5,5-heptamethyltrisiloxane and 5.60 g (50 mmol) of 1-octene were added to the solution, which was stirred at 120°C for 10 hours. After cooling, analysis was made by gas chromatography, from which a reaction rate was computed according to the following formula.

[Mathematical Formula 1]

$$\text{Reaction rate (\%)} = \frac{\text{peak area of target compound}}{\text{(overall peak area - peak area of unreacted hydrosiloxane)}} \times 100$$

The results are shown in Table 36. It was confirmed that on $^{1}$H-NMR and gas chromatography analyses, the retention time of the target compound as isolated by distillation was identical with that of the product separately synthesized using a platinum catalyst. Notably, in the subsequent Examples, the determination of reaction rate by gas chromatography is similarly performed by this procedure.

[Table 36]

| | Catalyst | Isocyanide | Conversion (%) | Reaction rate (%) |
|---|---|---|---|---|
| Example 97 | Cobalt carboxylate E | 2,6-diisopropylphenylisocyanide | >99 | 72 |

(29) Hydrosilylation reaction of styrene with 1,1,1,3,3-pentamethyldisiloxane using iron carboxylate, 1-isocyanoadamantane, and hydrosilane as hydrosilylation promoter

[Chemical Formula 42]

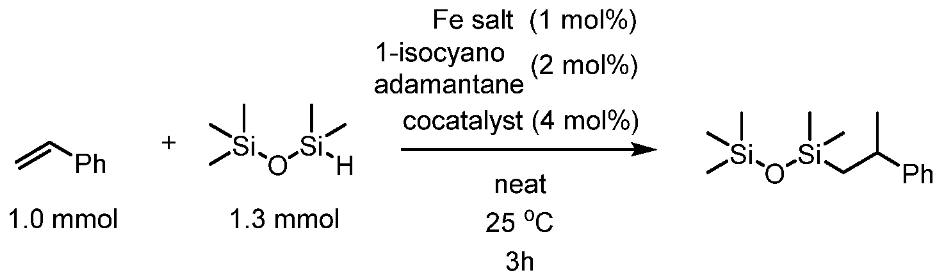


[Example 98] Hydrosilylation reaction using Iron carboxylate A as catalyst

A reactor was charged with 9 mg (0.01 mmol) of Iron carboxylate A in Synthesis Example 11, 5 mg (0.03 mmol) of 1-isocyanoadamantane, 5 mg (0.04 mmol) of $(EtO)_2MeSiH$, 254 μL (1.3 mmol) of 1,1,3,3,3-pentamethyldisiloxane, and 115 μL (1.0 mmol) of styrene, which were stirred at 25°C for 3 hours. After cooling, the product was analyzed by $^{1}$H-NMR spectroscopy to determine its structure and yield. As a result, it was confirmed that the signals assigned to the reactants diminished. Instead, a multiplet near 0.89 ppm indicative of the signal assigned to methylene protons adjoining

the silyl group in the desired product was observed, and the yield was determined. The results are shown in Table 37.

[Example 99] Hydrosilylation reaction using Iron carboxylate B as catalyst

A reactor was charged with 7 mg (0.01 mmol) of Iron carboxylate B in Synthesis Example 12, 5 mg (0.03 mmol) of 1-isocyanoadamantane, 5 mg (0.04 mmol) of $(EtO)_2MeSiH$, 254 μL (1.3 mmol) of 1,1,3,3,3-pentamethyldisiloxane, and 115 μL (1.0 mmol) of styrene, which were stirred at 25°C for 3 hours. After cooling, the product was analyzed by $^1H$-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 37.

[Example 100] Hydrosilylation reaction using Iron carboxylate C as catalyst

A reactor was charged with 13 mg (0.01 mmol) of Iron carboxylate C in Synthesis Example 13, 5 mg (0.03 mmol) of 1-isocyanoadamantane, 5 mg (0.04 mmol) of $(EtO)_2MeSiH$, 254 μL (1.3 mmol) of 1,1,3,3,3-pentamethyldisiloxane, and 115 μL (1.0 mmol) of styrene, which were stirred at 25°C for 3 hours. After cooling, the product was analyzed by $^1H$-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 37.

[Example 101] Hydrosilylation reaction using Iron carboxylate D as catalyst

A reactor was charged with 6 mg (0.01 mmol) of Iron carboxylate D in Synthesis Example 14, 5 mg (0.03 mmol) of 1-isocyanoadamantane, 5 mg (0.04 mmol) of $(EtO)_2MeSiH$, 254 μL (1.3 mmol) of 1,1,3,3,3-pentamethyldisiloxane, and 115 μL (1.0 mmol) of styrene, which were stirred at 50°C for 24 hours. After cooling, the product was analyzed by $^1H$-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 37.

[Example 102] Hydrosilylation reaction using Iron carboxylate E as catalyst

A reactor was charged with 6 mg (0.01 mmol) of Iron carboxylate E in Synthesis Example 15, 5 mg (0.03 mmol) of 1-isocyanoadamantane, 5 mg(0.04 mmol) of $(EtO)_2MeSiH$, 254 μL (1.3 mmol) of 1,1,3,3,3-pentamethyldisiloxane, and 115 μL (1.0 mmol) of styrene, which were stirred at 25°C for 3 hours. After cooling, the product was analyzed by $^1H$-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 37.

[Example 103] Hydrosilylation reaction using iron carboxylate F as catalyst

A reactor was charged with 6 mg (0.01 mmol) of iron carboxylate F in Synthesis Example 16, 5 mg (0.03 mmol) of 1-isocyanoadamantane, 5 mg (0.04 mmol) of $(EtO)_2MeSiH$, 254 μL (1.3 mmol) of 1,1,3,3,3-pentamethyldisiloxane, and 115 μL (1.0 mmol) of styrene, which were stirred at 25°C for 3 hours. After cooling, the product was analyzed by $^1H$-NMR spectroscopy to determine its structure and yield. As a result, it was confirmed that the signals assigned to the reactants diminished. Instead, a multiplet near 0.89 ppm indicative of the signal assigned to methylene protons adjoining the silyl group in the desired product was observed, and the yield was determined. The results are shown in Table 37.

[Table 37]

| | Catalyst | Reaction temperature (°C) | Reaction time (hr) | Conversion (%) | Yield (%) |
|---|---|---|---|---|---|
| Example 98 | Iron carboxylate A | 25 | 3 | >99 | >99 |
| Example 99 | Iron carboxylate B | 25 | 3 | 13 | 5 |
| Example 100 | Iron carboxylate C | 25 | 3 | 12 | 4 |

(continued)

| | Catalyst | Reaction temperature (°C) | Reaction time (hr) | Conversion (%) | Yield (%) |
|---|---|---|---|---|---|
| Example 101 | Iron carboxylate D | 50 | 24 | >99 | >99 |
| Example 102 | Iron carboxylate E | 25 | 3 | 15 | 5 |
| Example 103 | Iron carboxylate F | 25 | 3 | 13 | 10 |

(30) Hydrosilylation reaction of α-methylstyrene with 1,1,1,3,3-pentamethyldisiloxane using cobalt catalyst, isocyanide, and hydrosilane as hydrosilylation promoter

[Chemical Formula 43]

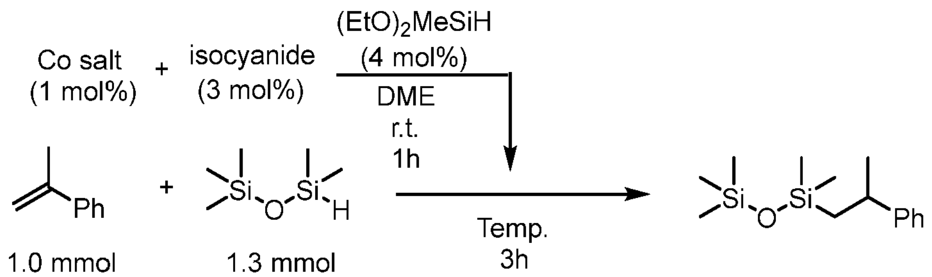


[Reference Example 104] Hydrosilylation reaction using cobalt pivalate as catalyst and Isocyanide L-1

A screw-top vial was charged with 3 mg (0.01 mmol) of cobalt pivalate in Synthesis Example 2 as catalyst, 11 mg (0.03 mmol) of Isocyanide L-1 in Synthesis Example 17 as isocyanide ligand, 0.1 mL of DME, and 5 mg (0.04 mmol) of $(EtO)_2MeSiH$ as promoter, which were stirred at room temperature for 1 hour. On this occasion, the purple solution turned blackish yellow. Then, 254 μL (1.3 mmol) of 1,1,1,3,3-pentamethyldisiloxane as hydrosiloxane and 130 μL (1.0 mmol) of α-methylstyrene were added to the solution, which was stirred at 50°C for 3 hours. After cooling, the product was analyzed by $^1$H-NMR spectroscopy to determine its yield. The results are shown in Table 38.

[Reference Example 105] Hydrosilylation reaction using cobalt pivalate as catalyst and Isocyanide L-2

A screw-top vial was charged with 3 mg (0.01 mmol) of cobalt pivalate in Synthesis Example 2 as catalyst, 14 mg (0.03 mmol) of Isocyanide L-2 in Synthesis Example 18 as isocyanide ligand, 0.1 mL of DME, and 5 mg (0.04 mmol) of $(EtO)_2MeSiH$ as promoter, which were stirred at room temperature for 1 hour. On this occasion, the purple solution turned blackish yellow. Then, 254 μL (1.3 mmol) of 1,1,1,3,3-pentamethyldisiloxane as hydrosiloxane and 130 μL (1.0 mmol) of α-methylstyrene were added to the solution, which was stirred at 50°C for 3 hours. After cooling, the product was analyzed by $^1$H-NMR spectroscopy to determine its yield. The results are shown in Table 38.

[Reference Example 106] Hydrosilylation reaction using cobalt pivalate as catalyst and Isocyanide L-3

A screw-top vial was charged with 3 mg (0.01 mmol) of cobalt pivalate in Synthesis Example 2 as catalyst, 4 mg (0.015 mmol) of Isocyanide L-3 in Synthesis Example 19 as isocyanide ligand, 0.1 mL of DME, and 5 mg (0.04 mmol) of $(EtO)_2MeSiH$ as promoter, which were stirred at room temperature for 1 hour. On this occasion, the purple solution turned blackish yellow. Then, 254 μL (1.3 mmol) of 1,1,1,3,3-pentamethyldisiloxane as hydrosiloxane and 130 μL (1.0 mmol) of α-methylstyrene were added to the solution, which was stirred at 50°C for 3 hours. After cooling, the product was analyzed by $^1$H-NMR spectroscopy to determine its yield. The results are shown in Table 38.

[Reference Example 107] Hydrosilylation reaction using Cobalt carboxylate A as catalyst and Isocyanide L-1

A screw-top vial was charged with 9 mg (0.01 mmol) of Cobalt carboxylate A in Synthesis Example 5 as catalyst, 11 mg (0.03 mmol) of Isocyanide L-1 in Synthesis Example 17 as isocyanide ligand, 0.1 mL of DME, and 5 mg (0.04 mmol) of $(EtO)_2MeSiH$ as promoter, which were stirred at room temperature for 1 hour. On this occasion, the purple solution turned blackish yellow. Then, 254 μL (1.3 mmol) of 1,1,1,3,3-pentamethyldisiloxane as hydrosiloxane and 130 μL (1.0 mmol) of α-methylstyrene were added to the solution, which was stirred at 50°C for 3 hours. After cooling, the product was analyzed by $^1$H-NMR spectroscopy to determine its yield. The results are shown in Table 38.

[Example 108] Hydrosilylation reaction using cobalt pivalate as catalyst and mesityl isocyanide

A screw-top vial was charged with 3 mg (0.01 mmol) of cobalt pivalate in Synthesis Example 2 as catalyst, 4 mg (0.03 mmol) of mesityl isocyanide as isocyanide ligand, 0.1 mL of DME, and 5 mg (0.04 mmol) of $(EtO)_2MeSiH$ as promoter, which were stirred at room temperature for 1 hour. On this occasion, the purple solution turned brown. Then, 254 μL (1.3 mmol) of 1,1,1,3,3-pentamethyldisiloxane as hydrosiloxane and 130 μL (1.0 mmol) of α-methylstyrene were added to the solution, which was stirred at 80°C for 3 hours. After cooling, the product was analyzed by $^1$H-NMR spectroscopy to determine its yield. The results are shown in Table 38.

[Table 38]

| | Catalyst | Isocyanide | Temperature (°C) | Conversion (%) | Yield (%) |
|---|---|---|---|---|---|
| Reference Example 104 | cobalt pivalate | Isocyanide L-1 | 50 | 92 | 92 |
| Reference Example 105 | cobalt pivalate | Isocyanide L-2 | 50 | 55 | 50 |
| Reference Example 106 | cobalt pivalate | Isocyanide L-3 | 50 | 29 | 22 |
| Reference Example 107 | Cobalt carboxylate A | Isocyanide L-1 | 50 | 34 | 34 |
| Example 108 | cobalt pivalate | mesityl isocyanide | 80 | 80 | 80 |

(31) Hydrosilylation reaction of 1-octene with 1,1,1,3,5,5,5-heptamethyltrisiloxane using Cobalt carboxylate E, isocyanide and hydrosilane as hydrosilylation promoter

[Chemical Formula 44]

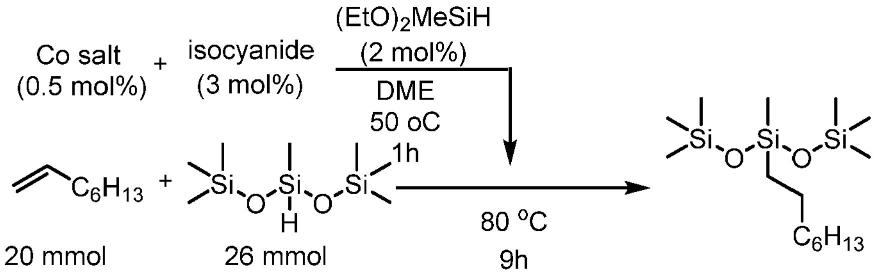


[Example 109] Hydrosilylation reaction using n-octyl isocyanide as isocyanide ligand

A 100 mL three-neck flask was charged with 57 mg (0.10 mmol) of Cobalt carboxylate E in Synthesis Example 9, 80 mg (0.57 mmol) of n-octyl isocyanide as isocyanide ligand, 1.0 mL of DME, and 54 mg (0.40 mmol) of $(EtO)_2MeSiH$ as promoter, which were stirred at 50°C for 1 hour. On this occasion, the purple solution turned yellowish green. Thereafter, 5.78 g (26 mmol) of 1,1,1,3,5,5,5-heptamethyltrisiloxane as hydrosiloxane and 2.28 g (20 mmol) of 1-octene were added to the solution, which was stirred at 80°C for 9 hours. After cooling, the product was analyzed by $^1$H-NMR spectroscopy to determine its yield. The results are shown in Table 39.

[Example 110] Hydrosilylation reaction using 2-ethylhexyl isocyanide as isocyanide ligand

A 100 mL three-neck flask was charged with 57 mg (0.10 mmol) of Cobalt carboxylate E in Synthesis Example 9, 92 mg (0.66 mmol) of 2-ethylhexyl isocyanide as isocyanide ligand, 1.0 mL of DME, and 54 mg (0.40 mmol) of $(EtO)_2MeSiH$ as promoter, which were stirred at 50°C for 1 hour. On this occasion, the purple solution turned yellowish green. Thereafter, 5.78 g (26 mmol) of 1,1,1,3,5,5,5-heptamethyltrisiloxane as hydrosiloxane and 2.28 g (20 mmol) of 1-octene were added to the solution, which was stirred at 80°C for 9 hours. After cooling, the product was analyzed by $^1$H-NMR spectroscopy to determine its yield. The results are shown in Table 39.

[Example 111] Hydrosilylation reaction using stearyl isocyanide as isocyanide ligand

A 100 mL three-neck flask was charged with 57 mg (0.10 mmol) of Cobalt carboxylate E in Synthesis Example 9, 167 mg (0.60 mmol) of stearyl isocyanide as isocyanide ligand, 1.0 mL of DME, and 54 mg (0.40 mmol) of $(EtO)_2MeSiH$ as promoter, which were stirred at 50°C for 1 hour. On this occasion, the purple solution turned yellowish green. Thereafter, 5.81 g (26 mmol) of 1,1,1,3,5,5,5-heptamethyltrisiloxane as hydrosiloxane and 2.24 g (20 mmol) of 1-octene were added to the solution, which was stirred at 80°C for 9 hours. After cooling, the product was analyzed by $^1$H-NMR spectroscopy to determine its yield. The results are shown in Table 39.

[Table 39]

| | Catalyst | Isocyanide | Conversion (%) | Yield (%) |
|---|---|---|---|---|
| Example 109 | Cobalt carboxylate E | n-octyl isocyanide | >99 | 36 |
| Example 110 | Cobalt carboxylate E | 2-ethylhexyl isocyanide | >99 | 42 |
| Example 111 | Cobalt carboxylate E | stearyl isocyanide | >99 | 32 |

(32) Hydrosilylation reaction of styrene with 1,1,1,3,3-pentamethyldisiloxane using iron catalyst, Isocyanide L-1 to L-3, and hydrosilane as hydrosilylation promoter

[Chemical Formula 45]

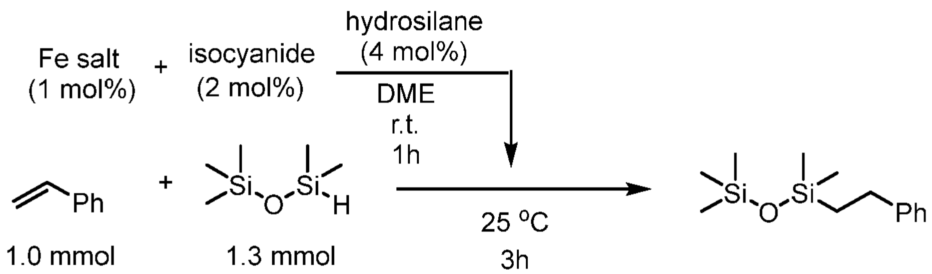


[Reference Example 112] Hydrosilylation reaction using iron pivalate as catalyst and Isocyanide L-1

A reactor was charged with 3 mg (0.01 mmol) of iron pivalate in Synthesis Example 1, 7 mg (0.02 mmol) of Isocyanide L-1 in Synthesis Example 17 as isocyanide ligand, 0.1 mL of DME, and 5 mg (0.04 mmol) of $(EtO)_2MeSiH$ as promoter, which were stirred at room temperature for 1 hour. Thereafter, 254 μL (1.3 mmol) of 1,1,1,3,3-pentamethyldisiloxane as hydrosiloxane and 115 μL (1.0 mmol) of styrene were added to the solution, which was stirred at 25°C for 3 hours. After cooling, the product was analyzed by $^1$H-NMR spectroscopy to determine its yield. The results are shown in Table 40.

[Reference Example 113] Hydrosilylation reaction using iron pivalate as catalyst and Isocyanide L-2

A reactor was charged with 3 mg (0.01 mmol) of iron pivalate in Synthesis Example 1, 9 mg (0.02 mmol) of Isocyanide L-2 in Synthesis Example 18 as isocyanide ligand, 0.1 mL of DME, and 5 mg (0.04 mmol) of $(MeO)_3SiH$ as

promoter, which were stirred at room temperature for 1 hour. Thereafter, 254 μL (1.3 mmol) of 1,1,1,3,3-pentamethyldisiloxane as hydrosiloxane and 115 μL (1.0 mmol) of styrene were added to the solution, which was stirred at 25°C for 3 hours. After cooling, the product was analyzed by $^1$H-NMR spectroscopy to determine its yield. The results are shown in Table 40.

[Reference Example 114] Hydrosilylation reaction using iron pivalate as catalyst and isocyanide L-3

A reactor was charged with 3 mg (0.01 mmol) of iron pivalate in Synthesis Example 1, 3 mg (0.01 mmol) of Isocyanide L-3 in Synthesis Example 19 as isocyanide ligand, 0.1 mL of DME, and 5 mg (0.04 mmol) of $(MeO)_3SiH$ as promoter, which were stirred at room temperature for 1 hour. Thereafter, 254 μL (1.3 mmol) of 1,1,1,3,3-pentamethyldisiloxane as hydrosiloxane and 115 μL (1.0 mmol) of styrene were added to the solution, which was stirred at 25°C for 3 hours. After cooling, the product was analyzed by $^1$H-NMR spectroscopy to determine its yield. The results are shown in Table 40.

[Reference Example 115] Hydrosilylation reaction using Iron carboxylate A as catalyst and Isocyanide L-1

A reactor was charged with 9 mg (0.01 mmol) of Iron carboxylate A in Synthesis Example 11, 7 mg (0.02 mmol) of Isocyanide L-1 in Synthesis Example 17 as isocyanide ligand, 0.1 mL of DME, and 5 mg (0.04 mmol) of $(MeO)_3SiH$ as promoter, which were stirred at room temperature for 1 hour. Thereafter, 254 μL (1.3 mmol) of 1,1,1,3,3-pentamethyldisiloxane as hydrosiloxane and 130 μL (1.0 mmol) of styrene were added to the solution, which was stirred at 25°C for 3 hours. After cooling, the product was analyzed by $^1$H-NMR spectroscopy to determine its yield. The results are shown in Table 40.

[Table 40]

| | Catalyst | Isocyanide | Promoter | Conversion (%) | Yield (%) |
|---|---|---|---|---|---|
| Reference Example 112 | iron pivalate | Isocyanide L-1 | $(EtO)_2MeSiH$ | >99 | >99 |
| Reference Example 113 | iron pivalate | Isocyanide L-2 | $(MeO)_3SiH$ | 67 | 67 |
| Reference Example 114 | iron pivalate | Isocyanide L-3 | $(MeO)_3SiH$ | 11 | 7 |
| Reference Example 115 | Iron carboxylate A | Isocyanide L-1 | $(MeO)_3SiH$ | >99 | >99 |

(33) Hydrosilylation reaction of styrene with 1,1,1,3,5,5,5-heptamethyltrisiloxane using iron pivalate and hydrosilane as hydrosilylation promoter

[Chemical Formula 46]

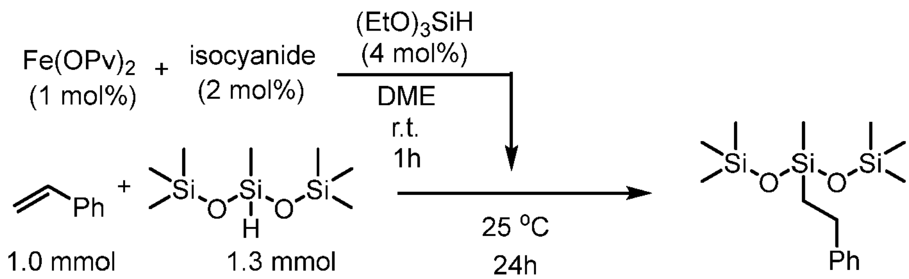


[Reference Example 116] Hydrosilylation reaction using Isocyanide L-1 as isocyanide ligand

A reactor was charged with 3 mg (0.01 mmol) of iron pivalate in Synthesis Example 1, 7 mg (0.02 mmol) of Isocyanide L-1 in Synthesis Example 17 as isocyanide ligand, 0.1 mL of DME, and 7 mg (0.04 mmol) of $(EtO)_3SiH$ as promoter, which were stirred at room temperature for 1 hour. Thereafter, 353 μL (1.3 mmol) of 1,1,1,3,5,5,5-heptamethyltrisiloxane as hydrosiloxane and 115 μL (1.0 mmol) of styrene were added to the solution, which was stirred at 25°C for 24 hours. After cooling, the product was analyzed by $^{1}H$-NMR spectroscopy to determine its yield. The results are shown in Table 41.

[Example 117] Hydrosilylation reaction using n-butyl isocyanide as isocyanide ligand

A reactor was charged with 3 mg (0.01 mmol) of iron pivalate in Synthesis Example 1, 2 μL (0.02 mmol) of n-butyl isocyanide as isocyanide ligand, 0.1 mL of DME, and 7 mg (0.04 mmol) of $(EtO)_3SiH$ as promoter, which were stirred at room temperature for 1 hour. Thereafter, 353 μL (1.3 mmol) of 1,1,1,3,5,5,5-heptamethyltrisiloxane as hydrosiloxane and 115 μL (1.0 mmol) of styrene were added to the solution, which was stirred at 25°C for 24 hours. After cooling, the product was analyzed by $^{1}H$-NMR spectroscopy to determine its yield. The results are shown in Table 41.

[Table 41]

| | Isocyanide | Conversion (%) | Yield (%) |
|---|---|---|---|
| Reference Example 116 | Isocyanide L-1 | >99 | 88 |
| Example 117 | n-butyl isocyanide | >99 | 94 |

(34) Hydrosilylation reaction of styrene with 1,1,3,3,3-pentamethyldisiloxane using iron(II) chloride, 1-isocyanoadamantane, and metal alkoxide as hydrosilylation promoter

[Chemical Formula 47]

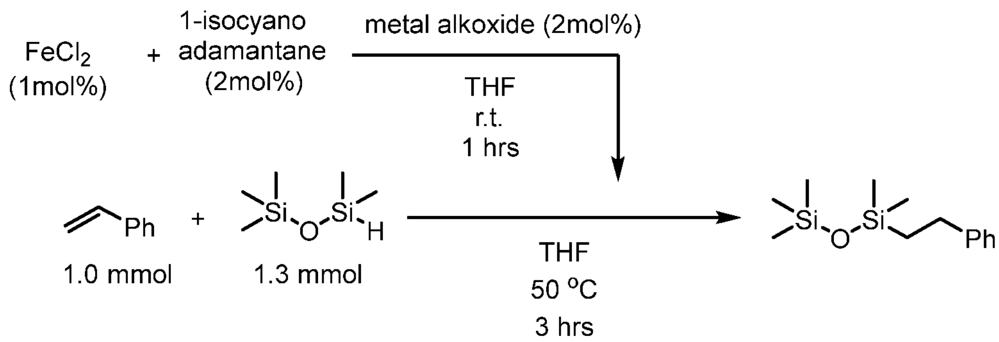


[Example 118] Hydrosilylation reaction using lithium trimethylsiloxide as promoter

A reactor was charged with 1 mg (0.01 mmol) of $FeCl_2$, 3 mg (0.02 mmol) of 1-isocyanoadamantane, and 0.1 mL of THF, which were dissolved. Then 2 mg (0.02 mmol) of lithium trimethylsiloxide was added to the solution, which was stirred at room temperature for 1 hour. On this occasion, the clear solution turned yellow. Thereafter, 115 μL (1.0 mmol) of styrene and 254 μL (1.3 mmol) of 1,1,3,3,3-pentamethyldisiloxane were added to the solution, which was stirred at 50°C for 3 hours. After cooling, the product was analyzed by $^{1}H$-NMR spectroscopy to determine its yield. The results are shown in Table 42.

[Example 119] Hydrosilylation reaction using sodium phenoxide as promoter

A reactor was charged with 1 mg (0.01 mmol) of $FeCl_2$, 3 mg (0.02 mmol) of 1-isocyanoadamantane, and 0.1 mL of THF, which were dissolved. Then 2 mg (0.02 mmol) of sodium phenoxide was added to the solution, which was stirred at room temperature for 1 hour. Thereafter, 115 μL (1.0 mmol) of styrene and 254 μL (1.3 mmol) of 1,1,3,3,3-pentamethyldisiloxane were added to the solution, which was stirred at 50°C for 3 hours. After cooling, the product was analyzed by $^{1}H$-NMR spectroscopy to determine its yield. The results are shown in Table 42.

[Table 42]

| | Metal alkoxide | Conversion (%) | Yield (%) |
|---|---|---|---|
| Example 118 | lithium trimethylsiloxide | 57 | 44 |
| Example 119 | sodium phenoxide | >99 | 98 |

(35) Hydrosilylation reaction of α-methylstyrene with 1,1,3,3,3-pentamethyldisiloxane using cobalt(II) chloride, 1-isocyanoadamantane, and metal alkoxide as hydrosilylation promoter

[Chemical Formula 48]

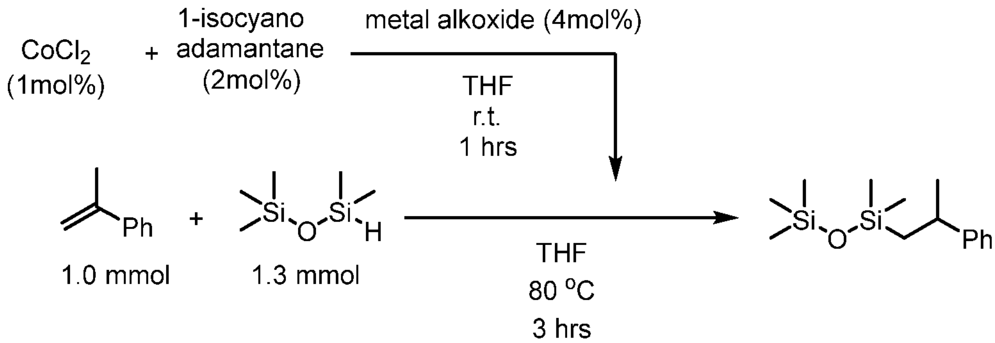


[Example 120] Hydrosilylation reaction using lithium methoxide as promoter

A reactor was charged with 1 mg (0.01 mmol) of $CoCl_2$, 3 mg (0.02 mmol) of 1-isocyanoadamantane, and 0.1 mL of THF, which were dissolved. Then 1 mg (0.02 mmol) of lithium methoxide was added to the solution, which was stirred at room temperature for 1 hour. On this occasion, the green solution turned dark yellow. Thereafter, 130 μL (1.0 mmol) of α-methylstyrene and 254 μL (1.3 mmol) of 1,1,3,3,3-pentamethyldisiloxane were added to the solution, which was stirred at 80°C for 3 hours. After cooling, the product was analyzed by $^1H$-NMR spectroscopy to determine its yield. The results are shown in Table 43.

[Example 121] Hydrosilylation reaction using lithium t-butoxide as promoter

A reactor was charged with 1 mg (0.01 mmol) of $CoCl_2$, 3 mg (0.02 mmol) of 1-isocyanoadamantane, and 0.1 mL of THF, which were dissolved. Then 2 mg (0.02 mmol) of lithium t-butoxide was added to the solution, which was stirred at room temperature for 1 hour. On this occasion, the green solution turned dark yellow. Thereafter, 130 μL (1.0 mmol) of α-methylstyrene and 254 μL (1.3 mmol) of 1,1,3,3,3-pentamethyldisiloxane were added to the solution, which was stirred at 80°C for 3 hours. After cooling, the product was analyzed by $^1H$-NMR spectroscopy to determine its yield. The results are shown in Table 43.

[Example 122] Hydrosilylation reaction using sodium t-butoxide as promoter

A reactor was charged with 1 mg (0.01 mmol) of $CoCl_2$, 3 mg (0.02 mmol) of 1-isocyanoadamantane, and 0.1 mL of THF, which were dissolved. Then 2 mg (0.02 mmol) of sodium t-butoxide was added to the solution, which was stirred at room temperature for 1 hour. On this occasion, the yellow solution turned dark yellow. Thereafter, 130 μL (1.0 mmol) of α-methylstyrene and 254 μL (1.3 mmol) of 1,1,3,3,3-pentamethyldisiloxane were added to the solution, which was stirred at 80°C for 3 hours. After cooling, the product was analyzed by $^1H$-NMR spectroscopy to determine its yield. The results are shown in Table 43.

[Example 123] Hydrosilylation reaction using sodium phenoxide as promoter

A reactor was charged with 1 mg (0.01 mmol) of $CoCl_2$, 3 mg (0.02 mmol) of 1-isocyanoadamantane, and 0.1

mL of THF, which were dissolved. Then 2 mg (0.02 mmol) of sodium phenoxide was added to the solution, which was stirred at room temperature for 1 hour. On this occasion, the green solution turned dark yellow. Thereafter, 130 μL (1.0 mmol) of α-methylstyrene and 254 μL (1.3 mmol) of 1,1,3,3,3-pentamethyldisiloxane were added to the solution, which was stirred at 80°C for 3 hours. After cooling, the product was analyzed by $^1$H-NMR spectroscopy to determine its yield. The results are shown in Table 43.

[Example 124] Hydrosilylation reaction using lithium trimethylsiloxide as promoter

A reactor was charged with 1 mg (0.01 mmol) of $CoCl_2$, 3 mg (0.02 mmol) of 1-isocyanoadamantane, and 0.1 mL of THF, which were dissolved. Then 2 mg (0.02 mmol) of lithium trimethylsiloxide was added to the solution, which was stirred at room temperature for 1 hour. On this occasion, the green solution turned dark yellow. Thereafter, 130 μL (1.0 mmol) of α-methylstyrene and 254 μL (1.3 mmol) of 1,1,3,3,3-pentamethyldisiloxane were added to the solution, which was stirred at 80°C for 3 hours. After cooling, the product was analyzed by $^1$H-NMR spectroscopy to determine its yield. The results are shown in Table 43.

[Table 43]

| | Metal alkoxide | Conversion (%) | Yield (%) |
|---|---|---|---|
| Example 120 | lithium methoxide | 42 | 42 |
| Example 121 | lithium t-butoxide | 78 | 78 |
| Example 122 | sodium t-butoxide | >99 | >99 |
| Example 123 | sodium phenoxide | 95 | 95 |
| Example 124 | lithium trimethylsiloxide | 46 | 46 |

(36) Hydrosilylation reaction of styrene with dual end hydrosilyl-capped polydimethylsiloxane (degree of polymerization 27) using iron catalyst and hydrosilane as hydrosilylation promoter

[Chemical Formula 49]

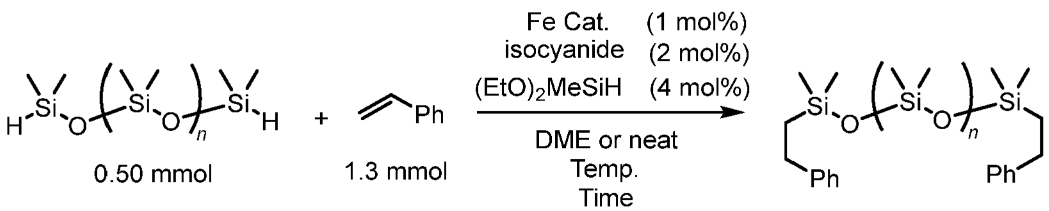


[Example 125] Hydrosilylation reaction using Iron carboxylate F, 1-isocyanoadamantane, and diethoxymethylsilane as promoter

A reactor was charged with 6.2 mg (0.01 mmol) of Iron carboxylate F in Synthesis Example 16, 3 mg (0.02 mmol) of 1-isocyanoadamantane, 0.1 mL of DME, and 5 mg (0.04 mmol) of diethoxymethylsilane, which were stirred at room temperature for 1 hour. Then 115 μL (1.3 mmol) of styrene and 1.07 g (0.50 mmol) of dual end dimethylhydrosilyl-capped dimethylpolysiloxane (DOP 27) were added to the solution, which was stirred at room temperature for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.83 ppm indicative of the signal assigned to methylene protons adjoining the silyl group in the desired product was observed, and the yield was determined. The results are shown in Table 44.

[Reference Example 126] Hydrosilylation reaction using iron pivalate, Isocyanide L-1, and diethoxymethylsilane as promoter

A reactor was charged with 3 mg (0.01 mmol) of iron pivalate in Synthesis Example 1, 7 mg (0.02 mmol) of Isocyanide L-1 in Synthesis Example 17, and 5 mg (0.04 mmol) of diethoxymethylsilane, which were stirred. Then 115 μL (1.3 mmol) of styrene and 1.07 g (0.50 mmol) of dual end dimethylhydrosilyl-capped dimethylpolysiloxane (DOP 27) were added to the solution, which was stirred at 50°C for 3 hours. At the end of reaction, the product was analyzed by $^1$H-NMR spectroscopy to determine its structure and yield. As a result, it was confirmed that the signals assigned to Si-H on the reactant diminished. Instead, a multiplet at 0.83 ppm indicative of the signal assigned to methylene protons adjoining the silyl group in the desired product was observed, and the yield was determined. The results are shown in Table 44.

[Reference Example 127] Hydrosilylation reaction using Iron carboxylate B, Isocyanide L-1, and diethoxymethylsilane as promoter

A reactor was charged with 7 mg (0.01 mmol) of Iron carboxylate B in Synthesis Example 12, 7 mg (0.02 mmol) of Isocyanide L-1, and 5 mg (0.04 mmol) of diethoxymethylsilane, which were stirred. Then 115 μL (1.3 mmol) of styrene and 1.07 g (0.50 mmol) of dual end dimethylhydrosilyl-capped dimethylpolysiloxane (DOP 27) were added to the solution, which was stirred at 50°C for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.83 ppm indicative of the signal assigned to methylene protons adjoining the silyl group in the desired product was observed, and the yield was determined. The results are shown in Table 44.

[Reference Example 128] Hydrosilylation reaction using Iron carboxylate E, Isocyanide L-1, and diethoxymethylsilane as promoter

A reactor was charged with 6 mg (0.01 mmol) of Iron carboxylate E in Synthesis Example 15, 7 mg (0.02 mmol) of Isocyanide L-1, and 5 mg (0.04 mmol) of diethoxymethylsilane, which were stirred. Then 115 μL (1.3 mmol) of styrene and 1.07 g (0.50 mmol) of dual end dimethylhydrosilyl-capped dimethylpolysiloxane (DOP 27) were added to the solution, which was stirred at 50°C for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.83 ppm indicative of the signal assigned to methylene protons adjoining the silyl group in the desired product was observed, and the yield was determined. The results are shown in Table 44.

[Table 44]

| | Catalyst | Isocyanide | Reaction temperature (°C) | Reaction time (hr) | Conversion (%) | Yield (%) |
|---|---|---|---|---|---|---|
| Example 125 | Iron carboxylate F | CNAd | room temperature | 24 | 6 | 6 |
| Reference Example 126 | iron pivalate | Isocyanide L-1 | 50 | 3 | 98 | 98 |
| Reference Example 127 | Iron carboxylate B | Isocyanide L-1 | 50 | 24 | 97 | 92 |
| Reference Example 128 | Iron carboxylate E | Isocyanide L-1 | 50 | 24 | 97 | 92 |

(37) Hydrosilylation reaction of α-methylstyrene with dual end hydrosilyl-capped polydimethylsiloxane (n=27) using cobalt catalyst and hydrosilane as hydrosilylation promoter

[Chemical Formula 50]

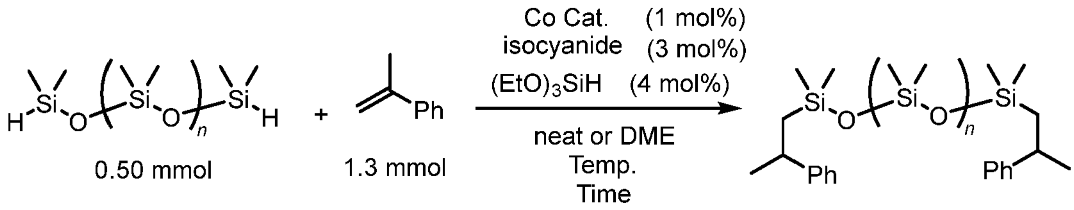


[Example 129] Hydrosilylation reaction using Cobalt carboxylate A, 1-isocyanoadamantane, and triethoxysilane as promoter

A reactor was charged with 9 mg (0.01 mmol) of Cobalt carboxylate A in Synthesis Example 5, 5 mg (0.03 mmol) of 1-isocyanoadamantane, and 7 mg (0.04 mmol) of triethoxysilane, which were stirred. Then 168 $\mu$L (1.3 mmol) of $\alpha$-methylstyrene and 1.07 g (0.50 mmol) of dual end dimethylhydrosilyl-capped dimethylpolysiloxane (DOP 27) were added to the solution, which was stirred at 80°C for 3 hours. At the end of reaction, the product was analyzed by $^1$H-NMR spectroscopy to determine its structure and yield. As a result, it was confirmed that the signals assigned to Si-H on the reactant diminished. Instead, a multiplet at 0.96 ppm indicative of the signal assigned to methylene protons adjoining the silyl group in the desired product was observed, and the yield was determined. The results are shown in Table 45.

[Reference Example 130] Hydrosilylation reaction using cobalt pivalate, Isocyanide L-1, and triethoxysilane as promoter

A reactor was charged with 3 mg (0.01 mmol) of cobalt pivalate in Synthesis Example 2, 11 mg (0.03 mmol) of Isocyanide L-1, and 7 mg (0.04 mmol) of triethoxysilane, which were stirred. Then 168 $\mu$L (1.3 mmol) of $\alpha$-methylstyrene and 1.07 g (0.50 mmol) of dual end dimethylhydrosilyl-capped dimethylpolysiloxane (DOP 27) were added to the solution, which was stirred at 80°C for 3 hours. At the end of reaction, the product was analyzed by $^1$H-NMR spectroscopy to determine its structure and yield. As a result, it was confirmed that the signals assigned to Si-H on the reactant diminished. Instead, a multiplet at 0.96 ppm indicative of the signal assigned to methylene protons adjoining the silyl group in the desired product was observed, and the yield was determined. The results are shown in Table 45.

[Reference Example 131] Hydrosilylation reaction using Cobalt carboxylate A, Isocyanide L-1, and triethoxysilane as promoter

A reactor was charged with 9 mg (0.01 mmol) of Cobalt carboxylate A in Synthesis Example 5, 11 mg (0.03 mmol) of Isocyanide L-1, and 7 mg (0.04 mmol) of triethoxysilane, which were stirred. Then 168 $\mu$L (1.3 mmol) of $\alpha$-methylstyrene and 1.07 g (0.50 mmol) of dual end dimethylhydrosilyl-capped dimethylpolysiloxane (DOP 27) were added to the solution, which was stirred at 80°C for 3 hours. At the end of reaction, the product was analyzed by $^1$H-NMR spectroscopy to determine its structure and yield. As a result, it was confirmed that the signals assigned to Si-H on the reactant diminished. Instead, a multiplet at 0.96 ppm indicative of the signal assigned to methylene protons adjoining the silyl group in the desired product was observed, and the yield was determined. The results are shown in Table 45.

[Example 132] Hydrosilylation reaction using Cobalt carboxylate E, 1-isocyanoadamantane, and triethoxysilane as promoter

A reactor was charged with 6 mg (0.01 mmol) of Cobalt carboxylate E in Synthesis Example 9, 5 mg (0.02 mmol) of 1-isocyanoadamantane, 0.1 mL of DME, and 7 mg (0.04 mmol) of triethoxysilane, which were stirred at room temperature for 1 hour. Then 168 $\mu$L (1.3 mmol) of $\alpha$-methylstyrene and 1.07 g (0.50 mmol) of dual end dimethylhydrosilyl-capped dimethylpolysiloxane (DOP 27) were added to the solution, which was stirred at 50°C for 3 hours. At the end of reaction, the product was analyzed by $^1$H-NMR spectroscopy to determine its structure and yield. As a result, it was confirmed that the signals assigned to Si-H on the reactant diminished. Instead, a multiplet at 0.96 ppm indicative of the signal assigned to methylene protons adjoining the silyl group in the desired product was observed, and the yield was determined. The results are shown in Table 45.

[Table 45]

| | Catalyst | Isocyanide | Reaction temperature (°C) | Reaction time (hr) | Conversion (%) | Yield (%) |
|---|---|---|---|---|---|---|
| Example 129 | Cobalt carboxylate A | CNAd | 80 | 3 | 97 | 97 |
| Reference Example 130 | cobalt pivalate | Isocyanide L-1 | 80 | 3 | 76 | 76 |
| Reference Example 131 | Cobalt carboxylate A | Isocyanide L-1 | 80 | 3 | 78 | 78 |
| Example 132 | Cobalt carboxylate E | CNAd | 50 | 3 | 97 | 97 |

(38) Hydrosilylation reaction of α-methylstyrene with dual end hydrosilyl-capped polydimethylsiloxane (DOP 48 or 65) using cobalt catalyst and hydrosilane as hydrosilylation promoter

[Example 133] Hydrosilylation reaction using Cobalt carboxylate E, 1-isocyanoadamantane, and dimethoxymethylsilane as promoter

A reactor was charged with 6 mg (0.01 mmol) of Cobalt carboxylate E in Synthesis Example 9, 5 mg (0.03 mmol) of 1-isocyanoadamantane, and 5 mg (0.04 mmol) of dimethoxymethylsilane, which were stirred. Then 168 μL (1.3 mmol) of α-methylstyrene and 1.846 g (0.50 mmol) of dual end dimethylhydrosilyl-capped dimethylpolysiloxane (DOP 48) were added to the solution, which was stirred at 80°C for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.96 ppm indicative of the signal assigned to methylene protons adjoining the silyl group in the desired product was observed, and the yield was determined. The results are shown in Table 46.

[Example 134] Hydrosilylation reaction using Cobalt carboxylate E, 1-isocyanoadamantane, and dimethoxymethylsilane as promoter

A reactor was charged with 6 mg (0.01 mmol) of Cobalt carboxylate E in Synthesis Example 9, 5 mg (0.03 mmol) of 1-isocyanoadamantane, and 5 mg (0.04 mmol) of dimethoxymethylsilane, which were stirred. Then 115 μL (1.3 mmol) of α-methylstyrene and 2.48 g (0.50 mmol) of dual end dimethylhydrosilyl-capped dimethylpolysiloxane (DOP 65) were added to the solution, which was stirred at 80°C for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.96 ppm indicative of the signal assigned to methylene protons adjoining the silyl group in the desired product was observed, and the yield was determined. The results are shown in Table 46.

[Table 46]

| | Hydrosilane | Conversion (%) | Yield (%) |
|---|---|---|---|
| Example 133 | dual end hydrosilane-capped polydimethylsiloxane (DOP 48) | >99 | >99 |
| Example 134 | dual end hydrosilane-capped polydimethylsiloxane (DOP 65) | 88 | 88 |

(39) Hydrosilylation reaction of α-methylstyrene with hydromethylsiloxy-containing polydimethylsiloxane using cobalt catalyst and hydrosilane as hydrosilylation promoter

[Chemical Formula 51]

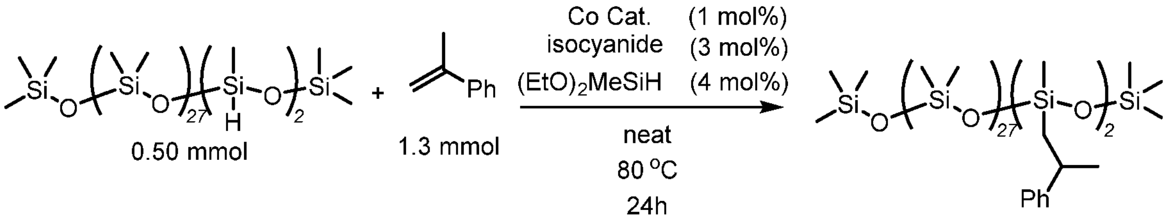


[Example 135] Hydrosilylation reaction using Cobalt carboxylate F, 1-isocyanoadamantane, and diethoxymethylsilane as promoter

A reactor was charged with 6 mg (0.01 mmol) of Cobalt carboxylate F in Synthesis Example 10, 5 mg (0.03 mmol) of 1-isocyanoadamantane, and 5 mg (0.04 mmol) of diethoxymethylsilane, which were stirred. Then 168 $\mu$L (1.3 mmol) of $\alpha$-methylstyrene and 1.14 g (0.50 mmol) of dual end trimethylsilyl-capped poly(dimethylsiloxane-methylhydrosiloxane) copolymer were added to the solution, which was stirred at 80°C for 24 hours. At the end of reaction, the product was analyzed by $^1$H-NMR spectroscopy to determine its structure and yield. As a result, it was confirmed that the signals assigned to the reactants disappeared completely. Instead, a multiplet at 0.93 ppm indicative of the signal assigned to methylene protons adjoining the silyl group in the desired product was observed, and the yield was determined. The results are shown in Table 47.

$^1$H-NMR (396 MHz, $CDCl_3$) $\delta$:

7.30-7.14 (m, 10H), 2.99-2.93 (m, 1H), 1.28 (d, J=7.7, 3H), 0.98-0.87 (m, 2H), 0.07 (br), 0.05 (s), -0.09 (s)

[Reference Example 136] Hydrosilylation reaction using cobalt pivalate, Isocyanide L-1, and diethoxymethylsilane as promoter

A reactor was charged with 3 mg (0.01 mmol) of cobalt pivalate in Synthesis Example 2, 11 mg (0.03 mmol) of Isocyanide L-1, and 5 mg (0.04 mmol) of diethoxymethylsilane, which were stirred. Then 168 $\mu$L (1.3 mmol) of $\alpha$-methylstyrene and 1.14 g (0.50 mmol) of dual end trimethylsilyl-capped poly(dimethylsiloxane-methylhydrosiloxane) copolymer were added to the solution, which was stirred at 80°C for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.93 ppm indicative of the signal assigned to methylene protons adjoining the silyl group in the desired product was observed, and the yield was determined. The results are shown in Table 47.

[Example 137] Hydrosilylation reaction using Cobalt carboxylate A, 1-isocyanoadamantane, and diethoxymethylsilane as promoter

A reactor was charged with 9 mg (0.01 mmol) of Cobalt carboxylate A in Synthesis Example 5, 5 mg (0.03 mmol) of 1-isocyanoadamantane, and 5 mg (0.04 mmol) of diethoxymethylsilane, which were stirred. Then 168 $\mu$L (1.3 mmol) of $\alpha$-methylstyrene and 1.14 g (0.50 mmol) of dual end trimethylsilyl-capped poly(dimethylsiloxane-methylhydrosiloxane) copolymer were added to the solution, which was stirred at 80°C for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.93 ppm indicative of the signal assigned to methylene protons adjoining the silyl group in the desired product was observed, and the yield was determined. The results are shown in Table 47.

[Reference Example 138] Hydrosilylation reaction using Cobalt carboxylate E, isocyanide L-1, and diethoxymethylsilane as promoter

A reactor was charged with 6 mg (0.01 mmol) of Cobalt carboxylate E in Synthesis Example 9, 5 mg (0.03 mmol) of isocyanide L-1, and 5 mg (0.04 mmol) of diethoxymethylsilane, which were stirred. Then 168 $\mu$L (1.3 mmol) of $\alpha$-methylstyrene and 1.14 g (0.50 mmol) of dual end trimethylsilyl-capped poly(dimethylsiloxane-methylhydrosiloxane) copolymer were added to the solution, which was stirred at 80°C for 24 hours. At the end of reaction, the product was analyzed by $^1$H-NMR spectroscopy to determine its structure and yield. As a result, it was confirmed that the signals

assigned to Si-H on the reactant diminished. Instead, a multiplet at 0.93 ppm indicative of the signal assigned to methylene protons adjoining the silyl group in the desired product was observed, and the yield was determined. The results are shown in Table 47.

[Table 47]

| | Catalyst | Isocyanide | Conversion (%) | Yield (%) |
|---|---|---|---|---|
| Example 135 | Cobalt carboxylate F | CNAd | >99 | >99 |
| Reference Example 136 | cobalt pivalate | Isocyanide L-1 | 89 | 89 |
| Example 137 | Cobalt carboxylate A | CNAd | 94 | 94 |
| Reference Example 138 | Cobalt carboxylate E | Isocyanide L-1 | 90 | 90 |

(40) Hydrosilylation reaction of styrene with hydromethylsiloxy-containing polydimethylsiloxane using iron catalyst and hydrosilane as hydrosilylation promoter

[Chemical Formula 52]

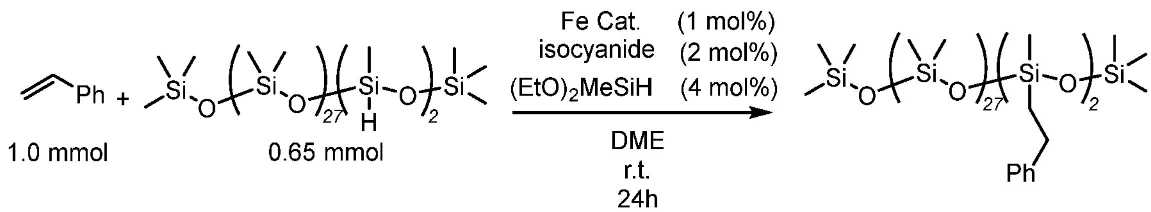


[Reference Example 139] Hydrosilylation reaction using iron pivalate, Isocyanide L-1, and diethoxymethylsilane as promoter

A reactor was charged with 3 mg (0.01 mmol) of iron pivalate in Synthesis Example 1, 7 mg (0.02 mmol) of Isocyanide L-1, 0.1 mL of DME, and 5 mg (0.04 mmol) of diethoxymethylsilane, which were stirred. Then 115 μL (1.0 mmol) of styrene and 1.49 g (0.65 mmol) of dual end trimethylsilyl-capped poly(dimethylsiloxane-methylhydrosiloxane) copolymer were added to the solution, which was stirred at 25°C for 24 hours. At the end of reaction, the product was analyzed by $^1$H-NMR spectroscopy to determine its structure and yield. As a result, it was confirmed that the signals assigned to the reactants diminished. Instead, a multiplet at 0.88 ppm indicative of the signal assigned to methylene protons adjoining the silyl group in the desired product was observed, and the yield was determined. The results are shown in Table 48.

$^1$H-NMR (396 MHz, $CDCl_3$) δ:

7.30-7.14 (m, 10H), 2.63-2.69 (m, 2H), 0.91-0.85 (m, 4H), 0.07 (br), 0.05 (s), -0.08 (s)

[Table 48]

| | Catalyst | Isocyanide | Conversion (%) | Yield (%) |
|---|---|---|---|---|
| Reference Example 139 | iron pivalate | Isocyanide L-1 | 16 | 9 |

(41) Hydrosilylation reaction of allyl glycidyl ether with dual end hydrosilyl-capped polydimethylsiloxane (DOP 27) using cobalt catalyst and hydrosilane as hydrosilylation promoter

[Chemical Formula 53]

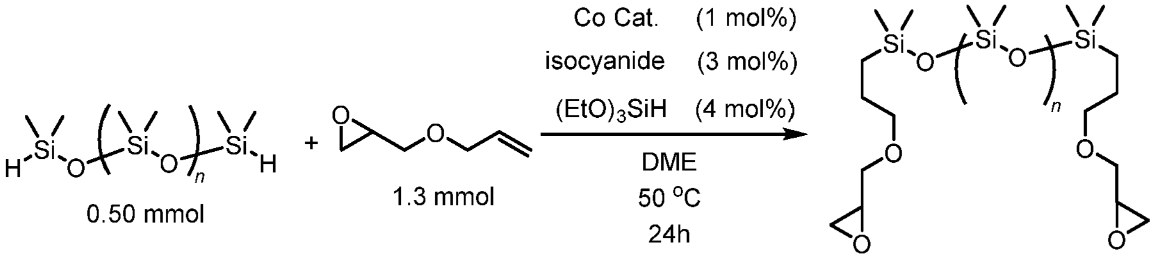


[Example 140] Hydrosilylation reaction using cobalt pivalate, 1-isocyanoadamantane, and diethoxymethylsilane as promoter

A reactor was charged with 3 mg (0.01 mmol) of cobalt pivalate in Synthesis Example 2, 5 mg (0.03 mmol) of 1-isocyanoadamantane, 0.1 mL of DME, and 7 mg (0.04 mmol) of diethoxymethylsilane, which were stirred at room temperature for 1 hour. Then 153 μL (1.3 mmol) of allyl glycidyl ether and 1.07 g (0.50 mmol) of dual end dimethylhydrosilyl-capped dimethylpolysiloxane (DOP 27) as hydrosilane were added to the solution, which was stirred at 50°C for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.54 ppm indicative of the signal assigned to methylene protons adjoining the silyl group in the desired product was observed, and the yield was determined. The results are shown in Table 49.
$^1$H-NMR (396 MHz, $CDCl_3$) δ:
3.70 (m, 1H), 2.95-2.90 (m, 2H), 3.45 (m, 3H), 3.15 (m, 1H), 2.80 (m, 1H), 2.61 (m, 1H), 1.62 (m, 2H), 0.54 (m, 2H), 0.08 (br), 0.05 (s), -0.08 (s)

[Table 49]

| | Catalyst | Isocyanide | Conversion (%) | Yield (%) |
|---|---|---|---|---|
| Example 140 | cobalt pivalate | CNAd | 88 | 88 |

(42) Hydrosilylation reaction of α-methylstyrene with hydromethylsiloxy-containing polydimethylsiloxane using cobalt catalyst and hydrosilane as hydrosilylation promoter

[Chemical Formula 54]

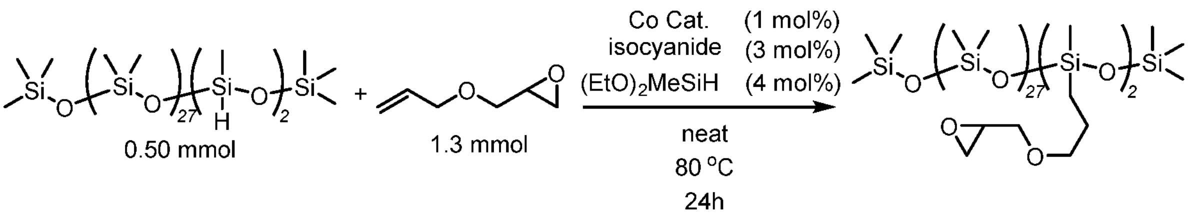


[Reference Example 141] Hydrosilylation reaction using Cobalt carboxylate E, Isocyanide L-1, and diethoxymethylsilane as promoter

A reactor was charged with 6 mg (0.01 mmol) of Cobalt carboxylate E in Synthesis Example 9, 11 mg (0.03 mmol) of Isocyanide L-1, and 5 mg (0.04 mmol) of diethoxymethylsilane, which were stirred at room temperature for 1 hour. Then 151 μL (1.3 mmol) of allyl glycidyl ether and 1.14 g (0.50 mmol) of dual end trimethylsilyl-capped poly(dimethylsiloxane-methylhydrosiloxane) copolymer were added to the solution, which was stirred at 80°C for 24 hours. At the end of reaction, the product was analyzed by $^1$H-NMR spectroscopy to determine its structure and yield. As a result, it was confirmed that the signals assigned to Si-H on the reactant diminished. Instead, a multiplet at 0.54 ppm indicative of the signal assigned to methylene protons adjoining the silyl group in the desired product was observed, and the yield was determined. The results are shown in Table 50.

$^1H$-NMR (396 MHz, $CDCl_3$) δ:
3.70 (m, 1H), 2.95-2.90 (m, 2H), 3.45 (m, 3H), 3.15 (m, 1H), 2.80 (m, 1H), 2.61 (m, 1H), 1.62 (m, 2H), 0.54 (m, 2H), 0.08 (br), 0.05 (s), -0.08 (s)

[Table 50]

| | Catalyst | Isocyanide | Conversion (%) | Yield (%) |
|---|---|---|---|---|
| Reference Example 141 | Cobalt carboxylate E | Isocyanide L-1 | 45 | 45 |

[Example 142] Hydrosilylation reaction using cobalt 2-ethylhexanoate as catalyst

A 100 mL three-neck flask was charged with 86 mg (0.25 mmol) of cobalt 2-ethylhexanoate in Synthesis Example 20 as catalyst, 242 mg (1.5 mmol) of 1-isocyanoadamantane as isocyanide ligand, 2.5 mL of toluene, and 159 mg (1.5 mmol) of $(MeO)_2MeSiH$ as promoter, which were stirred at room temperature for 1 hour. On this occasion, the solution turned from dark purple to brown. The toluene was fully removed at room temperature and reduced pressure, after which the pressure was restored with argon gas. Thereafter, 14.43 g (65 mmol) of 1,1,1,3,5,5,5-heptamethyltrisiloxane and 5.60 g (50 mmol) of 1-octene were added to the solution, which was stirred at 80°C for 10 hours. After cooling, analysis was made by gas chromatography, from which a reaction rate was computed. The results are shown in Table 51.

[Table 51]

| | Catalyst | Isocyanide | Conversion (%) | Reaction rate (%) |
|---|---|---|---|---|
| Example 142 | cobalt 2-ethylhexanoate | 1-isocyanoadamantane | >99 | 86 |

## Claims

**1.** A hydrosilylation reaction catalyst which is prepared from:

(A) at least one metal compound selected from

a neutral metal salt having the formula (1):

$$(M)^{l+}\{(A)^{m-}\}_n \qquad (1)$$

wherein
M, is at least one element selected from manganese, iron, ruthenium, cobalt, nickel and palladium, which compound may be either a mononuclear species consisting of a single transition metal or a polynuclear species consisting of identical or different transition metals, when a compound consisting of an acid and a base is represented by $\{H^+\}_m(A)^{m-}$, A corresponds to the conjugate base $(A)^{m-}$, and where a plurality of A's are included, they may be identical or different, wherein;
$\{H^+\}_m(A)^{m-}$ is selected from hydrogen halide, nitric acid, sulfuric acid, carboxylic acid, dicarboxylic acid, tricarboxylic acid, sulfonic acid, dithiocarbamic acid, aliphatic alcohol, aromatic alcohol, heterocyclic alcohol, organosilanol, primary amine, and secondary amine,
l is an integer of 1 to 8 and equal to the valence number of the transition metal M, m is an integer of 1 to 3, satisfying $l = m\times n$,
an anionic complex having the formula (2):

$$\{(B)^{j+}\}_k(M)^{l+}\{(A)^{m-}\}_{n'} \qquad (2)$$

wherein $(B)^{j+}$ is at least one selected from a lithium ion, sodium ion, potassium ion, tetraalkylammonium ion and tetraalkylphosphonium ion, M and A are as defined in formula (1), j is an integer of 1 to 3, 1 and m are as defined in formula (1), n' is an integer of 2 to 9, satisfying $j\times k + l = m\times n'$, the overall molecule being neutral, and
a cationic complex having the formula (3):

$$(M)^{l+}(L)_p\{(A)^{m-}\}_n \qquad (3)$$

wherein M and A are as defined in formula (1), L is a neutral ligand selected from water, tetrahydrofuran, dimethoxyethane, acetonitrile, pyridine, benzene, toluene, p-cymene, cyclooctane, 1,5-hexadiene, 1,5-cyclooctadiene, norbornadiene, and ammonia, l, m and n are as defined in formula (1), p is an integer of 1 to 6,

(B) at least one ligand selected from isocyanide compounds having the formula (4a):

$$Y^1\text{-}(NC)_q \qquad (4a)$$

wherein $Y^1$ is a $C_1$-$C_{30}$ monovalent hydrocarbon group, q is 1, and

(C) at least one promoter which has a formula selected from the following formulae (8) to (10) and (12) to (14):

$$(M^1)^+\{(G^1)^-\}_1 \qquad (8)$$

wherein $M^1$ is lithium, sodium or potassium, and $G^1$ is hydrogen or a $C_1$-$C_{20}$ monovalent hydrocarbon group, $C_1$-$C_{20}$ alkoxy group, $C_6$-$C_{20}$ aryloxy group, or $C_1$-$C_{20}$ organosiloxy group;

$$(M^2)^{2+}\{(G^2)^-\}_2 \qquad (9)$$

wherein $M^2$ is magnesium or zinc, and $G^2$ is each independently halogen, or a $C_1$-$C_{20}$ monovalent hydrocarbon group;

$$(M^3)^{3+}\{(G^3)^-\}_3 \qquad (10)$$

wherein $M^3$ is boron or aluminium, and $G^3$ is each independently hydrogen, halogen, or a $C_1$-$C_{20}$ monovalent hydrocarbon group, $C_1$-$C_{20}$ alkoxy group, $C_6$-$C_{20}$ aryloxy group;

$$\{(J)^{b+}\}_d\{(M^5)^{a+}\}_e\{(G^5)^-\}_{\{(a\times e)+(b\times d)\}} \qquad (12)$$

wherein $(J)^{b+}$ is lithium ion, sodium ion or potassium ion, $M^5$ is boron or aluminium, and $G^5$ is each independently hydrogen, or a $C_1$-$C_{20}$ monovalent hydrocarbon group, a is an integer of 3, and b, d and e are each independently an integer of 1;

$$(M^6)^{c+}(G^6)^-_c \qquad (13)$$

wherein $M^6$ is lithium, sodium, potassium or silver, and $G^6$ is a group: -O-(CO)-$R^8$, or a group: -N($R^9$)-C($R^9$)=N($R^9$), $R^8$ is a $C_1$-$C_{20}$ monovalent organic group, $R^9$ is each independently a $C_1$-$C_{10}$ monovalent alkyl group or phenyl group, and c is an integer of 1;

$$M^7 \qquad (14)$$

wherein $M^7$ is a zero-valent metal selected from one or more of lithium, sodium, potassium, magnesium and zinc.

**2.** The hydrosilylation reaction catalyst of claim 1 which is prepared in a hydrosilylation reaction system where an unsaturated aliphatic compound and/or a hydrosilane compound or organohydropolysiloxane compound having a Si-H group is present.

**3.** The hydrosilylation reaction catalyst of claim 1 or 2 wherein the metal compound has formula (1).

**4.** The hydrosilylation reaction catalyst of any one of claims 1 to 3 wherein M is at least one element selected from manganese, iron, cobalt, and nickel.

**5.** The hydrosilylation reaction catalyst of any one of claims 1 to 4 wherein in formula (1), m is 1, and A is a halogen atom.

**6.** The hydrosilylation reaction catalyst of any one of claims 1 to 4 wherein in formula (1), m is 1, and A is O-D wherein D is an optionally substituted $C_1$-$C_{20}$ monovalent organic group, wherein the optional substituents may be selected from halogen atoms, alkoxy groups, and amino groups.

7. The hydrosilylation reaction catalyst of any one of claims 1 to 4 wherein in formula (1), m is 1, and A is O-E wherein E is a group having the formula (5):

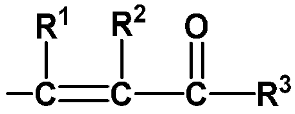 (5)

wherein $R^1$ to $R^3$ are each independently hydrogen or an optionally substituted $C_1$-$C_{20}$ monovalent organic group wherein the optional substituents may be selected from halogen atoms, alkoxy groups, and amino groups.

8. The hydrosilylation reaction catalyst of any one of claims 1 to 4 wherein A has the formula (6):

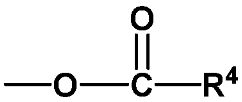 (6)

wherein $R^4$ is an optionally substituted $C_1$-$C_{20}$ monovalent organic group, or a monovalent organic group having the formula (6-1):

$-(Z)_r-R^5$ (6-1)

wherein Z is a $C_1$-$C_{20}$ divalent organic group, r is an integer of 0 or 1, $R^5$ is a silyl or polyorganosiloxane group having the formula (6-2):

$-\{Si(R^6)_2-R^7\}_s-Si(R^6)_t\{[(OSi(R^6)_2)]_u-R^6\}_v$ (6-2)

wherein $R^6$ is each independently a $C_1$-$C_{20}$ alkyl group, $C_1$-$C_{20}$ alkoxy group, $C_6$-$C_{20}$ aryl group, or $C_7$-$C_{20}$ aralkyl group, $R^7$ is a $C_1$-$C_{10}$ divalent hydrocarbon group, s is an integer of 0 or 1, t is an integer of 0 to 3, v is an integer of 0 to 3, satisfying t+v = 3, and u is an integer of 1 to 300, wherein the optional substituents on the $C_1$-$C_{20}$ monovalent organic group are selected from halogen atoms, alkoxy groups, and amino groups.

9. The hydrosilylation reaction catalyst of any one of claims 1 to 4 wherein A has the formula (7):

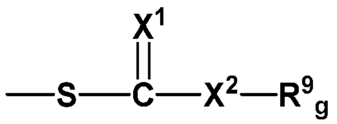 (7)

wherein $X^1$ is an oxygen or sulfur atom, $X^2$ is a carbon, oxygen, sulfur or nitrogen atom, g is equal to 3 when $X^2$ is carbon, equal to 2 when $X^2$ is nitrogen, and equal to 1 when $X^2$ is oxygen or sulfur, $R^9$ is an optionally substituted $C_1$-$C_{20}$ monovalent organic group wherein the optional substituents may be selected from halogen atoms, alkoxy groups, and amino groups.

10. The hydrosilylation reaction catalyst of any one of claims 1 to 9 wherein the promoter is at least one selected from methyllithium, n-butyllithium, phenyllithium, lithium acetylide, lithium hydride, lithium methoxide, sodium methoxide, potassium methoxide, lithium t-butoxide, sodium t-butoxide, potassium t-butoxide, and potassium trimethylsiloxide.

11. The hydrosilylation reaction catalyst of any one of claims 1 to 9 wherein the promoter of formula (9) is at least one selected from methylmagnesium chloride, methylmagnesium bromide, ethylmagnesium chloride, ethylmagnesium bromide, n-butylmagnesium chloride, n-butylmagnesium bromide, phenylmagnesium chloride, phenylmagnesium bromide, dimethylzinc, diethylzinc, diisopropylzinc, and diphenylzinc.

12. The hydrosilylation reaction catalyst of any one of claims 1 to 9 wherein the promoter of formula (10) is at least one selected from diisobutylaluminium hydride, borane, pinacol borane, catechol borane, 9-borabicyclo[3,3,1]nonane, trimethylaluminium, triethylaluminium, triisobutylaluminium, ethylaluminium dichloride, dimethylaluminium chloride, diethylaluminium chloride, isobutylaluminium dichloride, trimethylborane, triethylborane and triphenylborane.

**13.** The hydrosilylation reaction catalyst of any one of claims 1 to 9 wherein the promoter of formula (12) is at least one selected from sodium tetraphenylborate, lithium tetrakis(pentafluorophenyl)borate, lithium tetrakis(3,5-bistrifluoromethylphenyl)borate, sodium tetrakis(3,5-bistrifluoromethylphenyl)borate, lithium borohydride, sodium borohydride, lithium triethylborohydride, lithium tri-sec-butylborohydride, sodium triethylborohydride, sodium tri-sec-butylborohydride, potassium triethylborohydride, potassium tri-sec-butylborohydride, lithium aluminium hydride, and lithium aluminium tri-t-butoxyhydride.

**14.** The hydrosilylation reaction catalyst of any one of claims 1 to 9 wherein the promoter of formula (13) is at least one selected from lithium acetate, sodium acetate, potassium acetate, silver acetate, sodium pivalate, potassium pivalate, lithium N,N'-diisopropylacetamidinate, lithium N,N'-dicyclohexylacetamidinate, lithium N,N'-diisopropylbenzamidinate, and lithium N,N'-dicyclohexylbenzamidinate.

**15.** The hydrosilylation reaction catalyst of any one of claims 1 to 14 wherein the isocyanide compound of formula (4a) is at least one compound selected from mesityl isocyanide, t-butyl isocyanide, 1-isocyanoadamantane, cyclohexyl isocyanide, n-butyl isocyanide and xylyl isocyanide.

**16.** A method for preparing an addition compound comprising effecting hydrosilylation reaction of an unsaturated aliphatic compound with a hydrosilane compound or organohydropolysiloxane compound having a Si-H bond in the presence of the hydrosilylation reaction catalyst of any one of claims 1 to 14.

**17.** The method for preparing an addition compound of claim 16 wherein the unsaturated aliphatic compound is an organopolysiloxane having an alkenyl group.

**18.** Use of a compound as a hydrosilylation reaction catalyst, wherein the compound is prepared from:

(A) at least one metal compound selected from

a neutral metal salt having the formula (1):

$$(M)^{l+}\{(A)^{m-}\}_n \qquad (1)$$

wherein M is at least one element selected from manganese, iron, ruthenium, cobalt, nickel and palladium, which compound may be either a mononuclear species consisting of a single transition metal or a polynuclear species consisting of identical or different transition metals, when a compound consisting of an acid and a base is represented by $\{H^+\}_m(A)^{m-}$, A corresponds to the conjugate base $(A)^{m-}$, and where a plurality of A's are included, they may be identical or different, wherein $\{H^+\}_m(A)^{m-}$ is selected from hydrogen halide, nitric acid, sulfuric acid, carboxylic acid, dicarboxylic acid, tricarboxylic acid, sulfonic acid, dithiocarbamic acid, aliphatic alcohol, aromatic alcohol, heterocyclic alcohol, organosilanol, primary amine and secondary amine, l is an integer of 1 to 8 and equal to the valence number of the transition metal M, m is an integer of 1 to 3, satisfying $l = m\times n$,
an anionic complex having the formula (2):

$$\{(B)^{j+}\}_k(M)^{l+}\{(A)^{m-}\}_{n'} \qquad (2)$$

wherein $(B)^{j+}$ is at least one selected from lithium ion, sodium ion, potassium ion, tetraalkylammonium ion, and tetraalkylphosphonium ion, M and A are as defined in formula (1), j is an integer of 1 to 3, 1 and m are as defined in formula (1), n' is an integer of 2 to 9, satisfying $j\times k + l = m\times n'$, the overall molecule being neutral, and
a cationic complex having the formula (3):

$$(M)^{l+}(L)_p\{(A)^{m-}\}_n \qquad (3)$$

wherein M and A are as defined in formula (1), L is a neutral ligand selected from water, tetrahydrofuran, dimethoxyethane, acetonitrile, pyridine, benzene, toluene, p-cymene, cyclooctane, 1,5-hexadiene, 1,5-cyclooctadiene, norbornadiene, and ammonia, l, m and n are as defined in formula (1), p is an integer of 1 to 6,

(B) at least one ligand selected from isocyanide compounds having the formula (4a):

$$Y^1\text{-}(NC)_q \quad (4a)$$

wherein $Y^1$ is a $C_1$-$C_{30}$ monovalent hydrocarbon group, q is 1, and
(C) at least one promoter having a formula (11),

$$(M^4)^{4+}\{(G^4)^-\}_4 \quad (11)$$

wherein $M^4$ is silicon, and $G^4$ is each independently hydrogen, a $C_1$-$C_{20}$ monovalent hydrocarbon group, $C_1$-$C_{20}$ alkoxy group, or $C_1$-$C_{20}$ organosiloxy group, with the proviso that at least one of four groups $G^4$ is hydrogen, with the proviso that the promoter of the formula (11) is different from a hydrosilane compound used as a substrate of a hydrosilylation reaction.

**19.** The use of claim 18 wherein the promoter of formula (11) is at least one selected from phenylsilane, diphenylsilane, dimethylphenylsilane, ethyldimethylsilane, 1,1,3,3-tetramethyldisiloxane, 1,1,1,3,3-pentamethyldisiloxane, 1,1,1,3,5,5,5-heptamethyltrisiloxane, trimethoxysilane, triethoxysilane, dimethoxymethylsilane, diethoxymethylsilane, and ethoxydimethylsilane.

## Patentansprüche

**1.** Hydrosilylierungsreaktionskatalysator, der aus Folgendem hergestellt ist:

(A) zumindest einer Metallverbindung, ausgewählt aus
einem neutralen Metallsalz, das die Formel (1) aufweist:

$$(M)^{1+}\{(A)^{m-}\}_n \quad (1)$$

worin
M zumindest ein Element, ausgewählt aus Mangan, Eisen, Ruthenium, Cobalt, Nickel und Palladium ist, wobei die Verbindung entweder eine aus einem einzigen Übergangsmetall bestehende einkernige Spezies oder eine aus gleichen oder unterschiedlichen Übergangsmetallen bestehende mehrkernige Spezies sein kann, wobei, wenn eine aus einer Säure und einer Base bestehende Verbindung durch $\{H^+\}_m(A)^{m-}$ dargestellt ist, A der Konjugatbase $(A)^{m-}$entspricht, und wenn eine Vielzahl von A enthalten ist, diese gleich oder unterschiedlich sein können, wobei:

$\{H^+\}_m(A)^{m-}$ aus Halogenwasserstoff, Salpetersäure, Schwefelsäure, Carbonsäure, Dicarbonsäure, Tricarbonsäure, Sulfonsäure, Dithiocarbaminsäure, einem aliphatischen Alkohol, einem aromatischen Alkohol, einem heterozyklischen Alkohol, Organosilanol, einem primären Amin und einem sekundären Amin ausgewählt ist,
l eine ganze Zahl von 1 bis 8 und gleich der Wertigkeitszahl des Übergangsmetalls M ist und m eine ganze Zahl von 1 bis 3 ist, für die gilt: $l = m \times n$;
einem anionischen Komplex, der die Formel (2) aufweist:

$$((B)^{j+})_k(M)^{l+}\{(A)^{m-}\}_{n'} \quad (2)$$

worin $(B)^{j+}$ zumindest eines, ausgewählt aus einem Lithiumion, einem Natriumion, einem Kaliumion, einem Tetraalkylammoniumion und einem Tetraalkylphosphoniumion ist, M und A wie in Formel (1) definiert sind, j eine ganze Zahl von 1 bis 3 ist, l und m wie in Formel (1) definiert sind, n' eine ganze Zahl von 2 bis 9 ist, für die gilt: $j \times k + l = m \times n'$, wobei das Molekül insgesamt neutral ist; und
einem kationischen Komplex, der die Formel (3) aufweist:

$$(M)^{l+}(L)_p\{(A)^{m-}\}_n \quad (3)$$

worin M und A wie in Formel (1) definiert sind, L ein neutraler Ligand ist, der aus Wasser, Tetrahydrofuran, Dimethoxyethan, Acetonitril, Pyridin, Benzol, Toluol, p-Cymol, Cyclooctan, 1,5-Hexadien, 1,5-Cyclooctadien, Norbornadien und Ammoniak ausgewählt ist, l, m und n wie in Formel (1) definiert sind und p eine ganze Zahl von 1 bis 6 ist;

(B) zumindest einem Liganden, ausgewählt aus Isocyanid-Verbindungen der Formel (4a):

$$Y^1\text{-(NC)}_q \qquad (4a)$$

worin $Y^1$ eine einwertige $C_{1\text{-}30}$-Kohlenwasserstoffgruppe ist und q = 1 ist; und
(C) zumindest einem Promotor, der eine Formel aufweist, die aus den folgenden Formeln (8) bis (10) und (12) bis (14) ausgewählt ist:

$$(M^1)^+\{(G^1)^-\}_1 \qquad (8)$$

worin $M^1$ Lithium, Natrium oder Kalium ist und $G^1$ Wasserstoff oder eine einwertige $C_{1\text{-}20}$-Kohlenwasserstoffgruppe, eine $C_{1\text{-}20}$-Alkoxygruppe, eine $C_{6\text{-}20}$-Aryloxygruppe oder eine $C_{1\text{-}20}$-Organosiloxygruppe ist;

$$(M^2)^{2+}\{(G^2)^-\}_2 \qquad (9)$$

worin $M^2$ Magnesium oder Zink ist und $G^2$ jeweils unabhängig Halogen oder eine einwertige $C_{1\text{-}20}$-Kohlenwasserstoffgruppe ist;

$$(M^3)^{3+}\{(G^3)^-\}_3 \qquad (10)$$

worin $M^3$ Bor oder Aluminium ist und $G^3$ jeweils unabhängig Wasserstoff, Halogen oder eine einwertige $C_{1\text{-}20}$-Kohlenwasserstoffgruppe, eine $C_{1\text{-}20}$-Alkoxygruppe oder eine $C_{6\text{-}20}$-Aryloxygruppe ist;

$$\{(J)^{b+}\}_d\{(M^5)^{a+}\}_e\{(G^5)^-\}_{\{(a\times e)+(b\times d)\}} \qquad (12)$$

worin $(J)^{b+}$ ein Lithiumion, ein Natriumion oder ein Kaliumion ist, $M^5$ Bor oder Aluminium ist und $G^5$ jeweils unabhängig Wasserstoff oder eine einwertige $C_{1\text{-}20}$-Kohlenwasserstoffgruppe ist, a die ganze Zahl 3 ist und b, d und e jeweils unabhängig die ganze Zahl 1 sind;

$$(M^6)^{c+}(G^6)^-_c \qquad (13)$$

worin $M^6$ Lithium, Natrium, Kalium oder Silber ist und $G^6$ eine Gruppe -O-(CO)-$R^8$ oder eine Gruppe -N($R^9$)-C($R^9$)=N($R^9$) ist, $R^8$ eine einwertige organische $C_{1\text{-}20}$-Gruppe ist, $R^9$ jeweils unabhängig eine einwertige $C_{1\text{-}10}$-Alkylgruppe oder eine Phenylgruppe ist und c die ganze Zahl 1 ist;

$$M^7 \qquad (14)$$

worin $M^7$ ein nullwertiges Metall ist, das aus einem oder mehreren aus Lithium, Natrium, Kalium, Magnesium und Zink ausgewählt ist.

**2.** Hydrosilylierungsreaktionskatalysator nach Anspruch 1, der in einem Hydrosilylierungsreaktionssystem hergestellt ist, in dem eine ungesättigte aliphatische Verbindung und/oder eine Hydrosilan-Verbindung oder Organohydropolysiloxan-Verbindung mit einer Si-H-Gruppe vorhanden ist/sind.

**3.** Hydrosilylierungsreaktionskatalysator nach Anspruch 1 oder 2, worin die Metallverbindung die Formel (1) aufweist.

**4.** Hydrosilylierungsreaktionskatalysator nach einem der Ansprüche 1 bis 3, worin M zumindest ein Element, ausgewählt aus Mangan, Eisen, Cobalt und Nickel ist.

**5.** Hydrosilylierungsreaktionskatalysator nach einem der Ansprüche 1 bis 4, wobei in Formel (1) m = 1 ist und A ein Halogenatom ist.

**6.** Hydrosilylierungsreaktionskatalysator nach einem der Ansprüche 1 bis 4, wobei in Formel (1) m = 1 ist und A O-D ist, worin D eine gegebenenfalls substituierte, einwertige organische $C_{1\text{-}20}$-Gruppe ist, wobei die optionalen Substituenten aus Halogenatomen, Alkoxygruppen und Aminogruppen ausgewählt sind.

**7.** Hydrosilylierungsreaktionskatalysator nach einem der Ansprüche 1 bis 4, wobei in Formel (1) m = 1 ist und A O-E ist, worin E eine Gruppe ist, welche die Formel (5) aufweist:

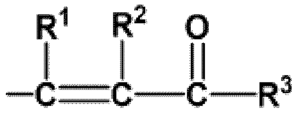 (5)

worin $R^1$ bis $R^3$ jeweils unabhängig Wasserstoff oder eine gegebenenfalls substituierte, einwertige organische $C_{1-20}$-Gruppe sind, wobei die optionalen Substituenten aus Halogenatomen, Alkoxygruppen und Aminogruppen ausgewählt sind.

**8.** Hydrosilylierungsreaktionskatalysator nach einem der Ansprüche 1 bis 4, worin A die Formel (6) aufweist:

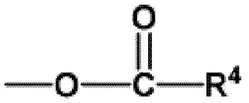 (6)

worin $R^4$ eine gegebenenfalls substituierte, einwertige organische $C_{1-20}$-Gruppe oder eine einwertige organische Gruppe ist, welche die Formel (6-1) aufweist:

$-(Z)_r-R^5$ (6-1)

worin Z eine zweiwertige organische $C_{1-20}$-Gruppe ist, r eine ganze Zahl von 0 oder 1 ist, $R^5$ eine Silyl- oder eine Polyorganosiloxan-Gruppe ist, welche die Formel (6-2) aufweist:

$-\{Si(R^6)_2-R^7\}_s-Si(R^6)_t\{[(OSi(R^6)_2)]_u-R^6\}_v$ (6-2)

worin $R^6$ jeweils unabhängig eine $C_{1-20}$-Alkylgruppe, eine $C_{1-20}$-Alkoxygruppe, eine $C_{6-20}$-Arylgruppe oder eine $C_{7-20}$-Aralklylgruppe ist, $R^7$ eine zweiwertige $C_{1-10}$-Kohlenwasserstoffgruppe ist, s eine ganze Zahl von 0 oder 1 ist, t eine ganze Zahl von 0 bis 3 ist, v eine ganze Zahl von 0 bis 3 ist, für die gilt: t + v = 3, und u eine ganze Zahl von 1 bis 300 ist, wobei die optionalen Substituenten auf der einwertigen organischen $C_{1-20}$-Gruppe aus Halogenatomen, Alkoxygruppen und Aminogruppen ausgewählt sind.

**9.** Hydrosilylierungsreaktionskatalysator nach einem der Ansprüche 1 bis 4, worin A die Formel (7) aufweist:

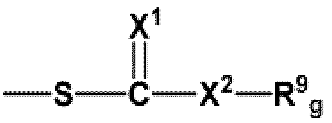 (7)

worin $X^1$ ein Sauerstoff- oder ein Schwefelatom ist, $X^2$ ein Kohlenstoff-, ein Sauerstoff- oder ein Stickstoffatom ist, g = 3 ist, wenn $X^2$ Kohlenstoff ist, g = 2 ist, wenn $X^2$ Stickstoff ist, und g = 1 ist, wenn $X^2$ Sauerstoff oder Schwefel ist, $R^9$ eine gegebenenfalls substituierte, einwertige organische $C_{1-20}$-Gruppe ist, wobei die optionalen Substituenten aus Halogenatomen, Alkoxygruppen und Aminogruppen ausgewählt sind.

**10.** Hydrosilylierungsreaktionskatalysator nach einem der Ansprüche 1 bis 9, wobei der Promotor zumindest einer, ausgewählt aus Methyllithium, n-Butyllithium, Phenyllithium, Lithiumacetylid, Lithiumhydrid, Lithiummethoxid, Natriummethoxid, Kaliummethoxid, Lithiumt-butoxid, Natrium-t-butoxid, Kalium-t-butoxid und Kaliumtrimethylsiloxid ist.

**11.** Hydrosilylierungsreaktionskatalysator nach einem der Ansprüche 1 bis 9, wobei der Promotor der Formel (9) zumindest einer, ausgewählt aus Methylmagnesiumchlorid, Methylmagnesiumbromid, Ethylmagnesiumchlorid, Ethylmagnesiumbromid, n-Butylmagnesiumchlorid, n-Butylmagnesiumbromid, Phenylmagnesiumchlorid, Phenylmagnesiumbromid, Dimethylzink, Diethylzink, Diisopropylzink und Diphenylzink ist.

**12.** Hydrosilylierungsreaktionskatalysator nach einem der Ansprüche 1 bis 9, wobei der Promotor der Formel (10) zumindest einer, ausgewählt aus Diisobutylaluminiumhydrid, Boran, Pinacolboran, Catecholboran, 9-Borabicyclo[3,3,1]nonan, Trimethylaluminium, Triethylaluminium, Triisobutylaluminium, Ethylaluminiumdichlorid, Dimethylaluminiumchlorid, Diethylaluminiumchlorid, Isobutylaluminiumdichlorid, Trimethylboran, Triethylboran und Triphenylboran ist.

**13.** Hydrosilylierungsreaktionskatalysator nach einem der Ansprüche 1 bis 9, wobei der Promotor der Formel (12) zumindest einer, ausgewählt aus Natriumtetraphenylborat, Lithium-tetrakis(pentafluorphenyl)borat, Lithium-tetrakis(3,5-bistrifluormethylphenyl)borat, Natrium-tetrakis(3,5-bistrifluormethylphenyl)borat, Lithiumborhydrid, Natriumborhydrid, Lithiumtriethylborhydrid, Lithiumtri-sec-butylborhydrid, Natriumtriethylborhydrid, Natriumtrisec-butylborhydrid, Kaliumtriethylborhydrid, Kaliumtri-sec-butylborhydrid, Lithiumaluminiumhydrid und Lithiumaluminiumtri-t-butoxyhydrid ist.

**14.** Hydrosilylierungsreaktionskatalysator nach einem der Ansprüche 1 bis 9, wobei der Promotor der Formel (13) zumindest einer, ausgewählt aus Lithiumacetat, Natriumacetat, Kaliumacetat, Silberacetat, Natriumpivalat, Kaliumpivalat, Lithium-N,N'-diisopropylacet-amidinat, Lithium-N,N'-dicyclohexylacetamidinat, Lithium-N,N'-diisopropylbenzamidinat und Lithium-N,N'-dicyclohexylbenzamidinat ist.

**15.** Hydrosilylierungsreaktionskatalysator nach einem der Ansprüche 1 bis 14, wobei die Isocyanid-Verbindung der Formel (4a) zumindest eine Verbindung, ausgewählt aus Mesitylisocyanid, t-Butylisocyanid, 1-Isocyanoadamantan, Cyclohexylisocyanid, n-Butylisocyanid und Xylylisocyanid ist.

**16.** Verfahren zur Herstellung einer Additionsverbindung, welches das Durchführen einer Hydrosilylierungsreaktion einer ungesättigten aliphatischen Verbindung mit einer Hydrosilan-Verbindung oder einer Organohydropolysiloxan-Verbindung mit einer Si-H-Bindung in Gegenwart eines Hydrosilylierungsreaktionskatalysators nach einem der Ansprüche 1 bis 14 umfasst.

**17.** Verfahren zur Herstellung einer Additionsverbindung nach Anspruch 16, wobei die ungesättigte aliphatische Verbindung ein Organopolysiloxan mit einer Alkenylgruppe ist.

**18.** Verwendung einer Verbindung als Hydrosilylierungsreaktionskatalysator, wobei die Verbindung aus Folgendem hergestellt ist:

(A) zumindest einer Metallverbindung, ausgewählt aus

einem neutralen Metallsalz, das die Formel (1) aufweist:

$$(M)^{1+}\{(A)^{m-}\}_n \qquad (1)$$

worin M zumindest ein Element, ausgewählt aus Mangan, Eisen, Ruthenium, Cobalt, Nickel und Palladium ist, wobei die Verbindung entweder eine aus einem einzigen Übergangsmetall bestehende einkernige Spezies oder eine aus gleichen oder unterschiedlichen Übergangsmetallen bestehende mehrkernige Spezies sein kann, wobei, wenn eine aus einer Säure und einer Base bestehende Verbindung durch $\{H^+\}_m(A)^{m-}$ dargestellt ist, A der Konjugatbase $(A)^{m-}$entspricht, und wenn eine Vielzahl von A enthalten ist, diese gleich oder unterschiedlich sein können, wobei $\{H^+\}_m(A)^{m-}$ aus Halogenwasserstoff, Salpetersäure, Schwefelsäure, Carbonsäure, Dicarbonsäure, Tricarbonsäure, Sulfonsäure, Dithiocarbaminsäure, einem aliphatischen Alkohol, einem aromatischen Alkohol, einem heterozyklischen Alkohol, Organosilanol, einem primären Amin und einem sekundären Amin ausgewählt ist, l eine ganze Zahl von 1 bis 8 und gleich der Wertigkeitszahl des Übergangsmetalls M ist und m eine ganze Zahl von 1 bis 3 ist, für die gilt: $l = m \times n$;
einem anionischen Komplex, der die Formel (2) aufweist:

$$\{(B)^{j+})_k(M)^{l+}\{(A)^{m-}\}_{n'} \qquad (2)$$

worin $(B)^{j+}$ zumindest eines, ausgewählt aus einem Lithiumion, einem Natriumion, einem Kaliumion, einem Tetraalkylammoniumion und einem Tetraalkylphosphoniumion ist, M und A wie in Formel (1) definiert sind, j eine ganze Zahl von 1 bis 3 ist, l und m wie in Formel (1) definiert sind, n' eine ganze Zahl von 2 bis 9 ist, für die gilt: $j \times k + l = m \times n'$, wobei das Molekül insgesamt neutral ist; und
einem kationischen Komplex, der die Formel (3) aufweist:

$$(M)^{1+}(L)_p\{(A)^{m-}\}_n \qquad (3)$$

worin M und A wie in Formel (1) definiert sind, L ein neutraler Ligand ist, der aus Wasser, Tetrahydrofuran, Dimethoxyethan, Acetonitril, Pyridin, Benzol, Toluol, p-Cymol, Cyclooctan, 1,5-Hexadien, 1,5-Cyclooctadien, Norbornadien und Ammoniak ausgewählt ist, l, m und n wie in Formel (1) definiert sind und p eine

ganze Zahl von 1 bis 6 ist;

(B) zumindest einem Liganden, ausgewählt aus Isocyanid-Verbindungen der Formel (4a):

$$Y^1\text{-}(NC)_q \qquad (4a)$$

worin $Y^1$ eine einwertige $C_{1-30}$-Kohlenwasserstoffgruppe ist und q = 1 ist; und
(C) zumindest einem Promotor, der die Formel (11) aufweist:

$$(M^4)^{4+}\{(G^4)^-\}_4 \qquad (11)$$

worin $M^4$ Silicium ist und $G^4$ jeweils unabhängig Wasserstoff, eine einwertige $C_{1-20}$-Kohlenwasserstoffgruppe, eine $C_{1-20}$-Alkoxygruppe oder eine $C_{1-20}$-Organosiloxygruppe ist, mit der Maßgabe, dass zumindest eine von vier Gruppen $G^4$ Wasserstoff ist, mit der Maßgabe, dass der Promotor der Formel (11) anders ist als eine Hydrosilan-Verbindung, die als Substrat einer Hydrosilylierungsreaktion eingesetzt wird.

**19.** Verwendung nach Anspruch 18, wobei der Promotor der Formel (11) zumindest einer, ausgewählt aus Phenylsilan, Diphenylsilan, Dimethylphenylsilan, Ethyldimethylsilan, 1,1,3,3-Tetramethyldisiloxan, 1,1,1,3,3-Pentamethyldisiloxan, 1,1,1,3,5,5,5-Heptamethyltrisiloxan, Trimethoxysilan, Triethoxysilan, Dimethoxymethylsilan, Diethoxymethylsilan und Ethoxydimethylsilan ist.

## Revendications

**1.** Catalyseur de réaction d'hydrosilylation qui est préparé à partir de :

(A) au moins un composé métallique choisi parmi
un sel métallique neutre ayant la formule (1) :

$$(M)^{l+}\{(A)^{m-}\}_n \qquad (1)$$

dans laquelle
M, est au moins un élément choisi parmi le manganèse, le fer, le ruthénium, le cobalt, le nickel et le palladium, ledit composé pouvant être soit une espèce mononucléaire constituée d'un métal de transition unique, soit une espèce polynucléaire constituée de métaux de transition identiques ou différents, lorsqu'un composé constitué d'un acide et d'une base est représenté par $\{H^+\}_m(A)^{m-}$, A correspond à la base conjuguée $(A)^{m-}$, et lorsqu'une pluralité de A sont inclus, ceux-ci peuvent être identiques ou différents, où :

$\{H^+\}_m(A)^{m-}$ est choisi parmi un halogénure d'hydrogène, l'acide nitrique, l'acide sulfurique, un acide carboxylique, un acide dicarboxylique, un acide tricarboxylique, un acide sulfonique, un acide dithiocarbamique, un alcool aliphatique, un alcool aromatique, un alcool hétérocyclique, un organosilanol, une amine primaire et une amine secondaire, l est un entier de 1 à 8 et égal au nombre de valence du métal de transition M, m est un entier de 1 à 3, satisfaisant à $l = m \times n$,
un complexe anionique ayant la formule (2) :

$$\{(B)^{j+}\}_k(M)^{l+}\{(A)^{m-}\}_{n'} \qquad (2)$$

dans laquelle (B) A est au moins un ion choisi parmi un ion lithium, un ion sodium, un ion potassium, un ion tétraalkylammonium et un ion tétraalkylphosphonium, M et A sont tels que définis dans la formule (1), j est un entier de 1 à 3, l et m sont tels que définis dans formule (1), n' est un entier de 2 à 9, satisfaisant à $j \times k + l = m \times n'$, la molécule globale étant neutre, et
un complexe cationique ayant la formule (3) :

$$(M)^{l+}(L)_p\{(A)^{m-}\}_n \qquad (3)$$

dans laquelle M et A sont tels que définis dans la formule (1), L est un ligand neutre choisi parmi l'eau, le tétrahydrofurane, le diméthoxyéthane, l'acétonitrile, la pyridine, le benzène, le toluène, le p-cymène, le cyclooctane, le 1,5-hexadiène, le 1,5-cyclooctadiène, le norbornadiène et l'ammoniac, l, m et n sont tels

que définis dans la formule (1), p est un entier de 1 à 6,

(B) au moins un ligand choisi parmi les composés isocyanures ayant la formule (4a) :

$$Y^1\text{-}(NC)_q \qquad (4a)$$

dans laquelle $Y^1$ est un groupe hydrocarboné monovalent en $C_1$-$C_{30}$, q est 1, et

(C) au moins un promoteur qui a une formule choisie parmi les formules (8) à (10) et (12) à (14) suivantes :

$$(M^1)^+\{(G^1)^-\}_1 \qquad (8)$$

dans laquelle $M^1$ est le lithium, le sodium ou le potassium, et $G^1$ est un hydrogène ou un groupe hydrocarboné monovalent en $C_1$-$C_{20}$, un groupe alcoxy en $C_1$-$C_{20}$, un groupe aryloxy en $C_6$-$C_{20}$ ou un groupe organosiloxy en $C_1$-$C_{20}$ ;

$$(M^2)^{2+}\{(G^2)^-\}_2 \qquad (9)$$

dans laquelle $M^2$ est le magnésium ou le zinc, et $G^2$ est, à chaque occurrence, indépendamment un halogène, ou un groupe hydrocarboné monovalent en $C_1$-$C_{20}$ ;

$$(M^3)^{3+}\{(G^3)^-\}_3 \qquad (10)$$

dans laquelle $M^3$ est le bore ou l'aluminium, et $G^3$ représente chacun indépendamment un hydrogène, un halogène ou un groupe hydrocarboné monovalent en $C_1$-$C_{20}$, un groupe alcoxy en $C_1$-$C_{20}$, un groupe aryloxy en $C_6$-$C_{20}$ ;

$$\{(J)^{b+}\}_d\{(M^5)^{a+}\}_e\{(G^5)^-\}_{\{(a\times e)+(b\times d)\}} \qquad (12)$$

dans laquelle $(J)^{b+}$ est un ion lithium, un ion sodium ou un ion potassium, $M^5$ est le bore ou l'aluminium, et $G^5$ est, à chaque occurrence, indépendamment un hydrogène, ou un groupe hydrocarboné monovalent en $C_1$-$C_{20}$, a est un entier égal à 3, et b, d et e sont chacun indépendamment un entier égal à 1 ;

$$(M^6)^{c+}(G^6)^-_c \qquad (13)$$

dans laquelle $M^6$ est le lithium, le sodium, le potassium ou l'argent, et $G^6$ est un groupe : -O-(CO)-$R^8$, ou un groupe : - N($R^9$)-C($R^9$)=N($R^9$), $R^8$ est un groupe organique monovalent en $C_1$-$C_{20}$, $R^9$ est, à chaque occurrence, indépendamment un groupe alkyle monovalent en $C_1$-$C_{10}$ ou un groupe phényle, et c est un entier égal à 1 ;

$$M^7 \qquad (14)$$

dans laquelle $M^7$ est un métal zérovalent choisi parmi un ou plusieurs parmi le lithium, le sodium, le potassium, le magnésium et le zinc.

2. Catalyseur de réaction d'hydrosilylation selon la revendication 1, qui est préparé dans un système de réaction d'hydrosilylation dans lequel un composé aliphatique insaturé et/ou un composé hydrosilane ou un composé organohydropolysiloxane ayant un groupe Si-H est présent.

3. Catalyseur de réaction d'hydrosilylation selon la revendication 1 ou 2, dans lequel le composé métallique a la formule (1).

4. Catalyseur de réaction d'hydrosilylation selon l'une quelconque des revendications 1 à 3, dans lequel M est au moins un élément choisi parmi le manganèse, le fer, le cobalt et le nickel.

5. Catalyseur de réaction d'hydrosilylation selon l'une quelconque des revendications 1 à 4, dans lequel, dans la formule (1), m est 1 et A est un atome d'halogène.

6. Catalyseur de réaction d'hydrosilylation selon l'une quelconque des revendications 1 à 4, dans lequel, dans la formule (1), m est 1 et A est O-D où D est un groupe organique monovalent en $C_1$-$C_{20}$ éventuellement substitué,

dans lequel les substituants éventuels peuvent être choisis parmi des atomes d'halogène, des groupes alcoxy et des groupes amino.

**7.** Catalyseur de réaction d'hydrosilylation selon l'une quelconque des revendications 1 à 4, dans lequel, dans la formule (1), m est 1 et A est O-E où E est un groupe ayant la formule (5) :

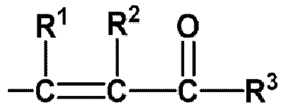

(5)

dans laquelle $R^1$ à $R^3$ sont chacun indépendamment un hydrogène ou un groupe organique monovalent en $C_1$-$C_{20}$ éventuellement substitué dans lequel les substituants éventuels peuvent être choisis parmi des atomes d'halogène, des groupes alcoxy et des groupes amino.

**8.** Catalyseur de réaction d'hydrosilylation selon l'une quelconque des revendications 1 à 4, dans lequel A a la formule (6) :

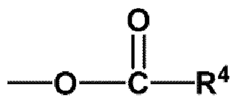

(6)

dans laquelle $R^4$ est un groupe organique monovalent en $C_1$-$C_{20}$ éventuellement substitué, ou un groupe organique monovalent ayant la formule (6-1) :

$$-(Z)_r-R^5 \qquad (6\text{-}1)$$

dans laquelle Z est un groupe organique divalent en $C_1$-$C_{20}$, r est un entier égal à 0 ou 1, $R^5$ est un groupe silyle ou polyorganosiloxane ayant la formule (6-2) :

$$-\{Si(R^6)_2-R^7\}_s-Si(R^6)_t\{[(OSi(R^6)_2)]_u-R^6\}_v \qquad (6\text{-}2)$$

dans laquelle $R^6$ est, à chaque occurrence, indépendamment un groupe alkyle en $C_1$-$C_{20}$, un groupe alcoxy en $C_1$-$C_{20}$, un groupe aryle en $C_6$-$C_{20}$, ou un groupe aralkyle en $C_7$-$C_{20}$, $R^7$ est un groupe hydrocarboné divalent en $C_1$-$C_{10}$, s est un entier de 0 ou 1, t est un entier de 0 à 3, v est un entier de 0 à 3, satisfaisant à t+v = 3, et u est un entier de 1 à 300, dans lequel les substituants éventuels sur le groupe organique monovalent en $C_1$-$C_{20}$ sont choisis parmi des atomes d'halogène, des groupes alcoxy et des groupes amino.

**9.** Catalyseur de réaction d'hydrosilylation selon l'une quelconque des revendications 1 à 4, dans lequel A a la formule (7) :

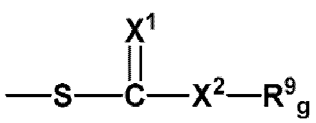

(7)

dans laquelle $X^1$ est un atome d'oxygène ou de soufre, $X^2$ est un atome de carbone, d'oxygène, de soufre ou d'azote, g est égal à 3 lorsque $X^2$ est un carbone, égal à 2 lorsque $X^2$ est un azote, et égal à 1 lorsque $X^2$ est un oxygène ou un soufre, $R^9$ est un groupe organique monovalent en $C_1$-$C_{20}$ éventuellement substitué dans lequel les substituants éventuels peuvent être choisis parmi des atomes d'halogène, des groupes alcoxy et des groupes amino.

**10.** Catalyseur de réaction d'hydrosilylation selon l'une quelconque des revendications 1 à 9, dans lequel le promoteur est au moins l'un choisi parmi le méthyllithium, le n-butyllithium, le phényllithium, l'acétylure de lithium, l'hydrure de lithium, le méthoxyde de lithium, le méthoxyde de sodium, le méthoxyde de potassium, le t-butoxyde de lithium, le t-butoxyde de sodium, le t-butoxyde de potassium et le triméthylsiloxyde de potassium.

**11.** Catalyseur de réaction d'hydrosilylation selon l'une quelconque des revendications 1 à 9, dans lequel le promoteur

de formule (9) est au moins l'un choisi parmi le chlorure de méthylmagnésium, le bromure de méthylmagnésium, le chlorure d'éthylmagnésium, le bromure d'éthylmagnésium, le chlorure de n-butylmagnésium, le bromure de n-butylmagnésium, le chlorure de phénylmagnésium, le bromure de phénylmagnésium, le diméthylzinc, le diéthylzinc, le diisopropylzinc et le diphénylzinc.

**12.** Catalyseur de réaction d'hydrosilylation selon l'une quelconque des revendications 1 à 9, dans lequel le promoteur de formule (10) est au moins l'un choisi parmi l'hydrure de diisobutylaluminium, le borane, le pinacolborane, le catécholborane, le 9-borabicyclo[3,3,1]nonane, le triméthylaluminium, le triéthylaluminium, le triisobutylaluminium, le dichlorure d'éthylaluminium, le chlorure de diméthylaluminium, le chlorure de diéthylaluminium, le dichlorure d'isobutylaluminium, le triméthylborane, le triéthylborane et le triphénylborane.

**13.** Catalyseur de réaction d'hydrosilylation selon l'une quelconque des revendications 1 à 9, dans lequel le promoteur de formule (12) est au moins l'un choisi parmi le tétraphénylborate de sodium, le tétrakis(pentafluorophényl)borate de lithium, le tétrakis(3,5-bistrifluorométhylphényl)borate de lithium, le tétrakis(3,5-bistrifluorométhylphényl)borate de sodium, le borohydrure de lithium, le borohydrure de sodium, le triéthylborohydrure de lithium, le tri-sec-butylborohydrure de lithium, le triéthylborohydrure de sodium, le tri-sec-butylborohydrure de sodium, le triéthylborohydrure de potassium, le tri-sec-butylborohydrure de potassium, l'hydrure de lithium-aluminium et le tri-t-butoxyhydrure de lithium-aluminium.

**14.** Catalyseur de réaction d'hydrosilylation selon l'une quelconque des revendications 1 à 9, dans lequel le promoteur de formule (13) est au moins l'un choisi parmi l'acétate de lithium, l'acétate de sodium, l'acétate de potassium, l'acétate d'argent, le pivalate de sodium, le pivalate de potassium, le N,N'-diisopropylacétamidinate de lithium, le N,N'-dicyclohexylacétamidinate de lithium, le N,N'-diisopropylbenzamidinate de lithium et le N,N'-dicyclohexylbenzamidinate de lithium.

**15.** Catalyseur de réaction d'hydrosilylation selon l'une quelconque des revendications 1 à 14, dans lequel le composé isocyanure de formule (4a) est au moins un composé choisi parmi l'isocyanure de mésityle, l'isocyanure de t-butyle, le 1-isocyanoadamantane, l'isocyanure de cyclohexyle, l'isocyanure de n-butyle et l'isocyanure de xylyle.

**16.** Procédé de préparation d'un composé d'addition comprenant la conduite d'une réaction d'hydrosilylation d'un composé aliphatique insaturé avec un composé hydrosilane ou un composé organohydropolysiloxane ayant une liaison Si-H en présence du catalyseur de réaction d'hydrosilylation selon l'une quelconque des revendications 1 à 14.

**17.** Procédé de préparation d'un composé d'addition selon la revendication 16, dans lequel le composé aliphatique insaturé est un organopolysiloxane comportant un groupe alcényle.

**18.** Utilisation d'un composé en tant que catalyseur de réaction d'hydrosilylation, dans laquelle le composé est préparé à partir de :

(A) au moins un composé métallique choisi parmi
un sel métallique neutre ayant la formule (1) :

$$(M)^{l+}\{(A)^{m-}\}_n \qquad (1)$$

dans laquelle M, est au moins un élément choisi parmi le manganèse, le fer, le ruthénium, le cobalt, le nickel et le palladium, ledit composé pouvant être soit une espèce mononucléaire constituée d'un métal de transition unique, soit une espèce polynucléaire constituée de métaux de transition identiques ou différents, lorsqu'un composé constitué d'un acide et d'une base est représenté par $\{H^+\}_m(A)^{m-}$, A correspond à la base conjuguée $(A)^{m-}$, et lorsqu'une pluralité de A sont inclus, ceux-ci peuvent être identiques ou différents, où $\{H^+\}_m(A)^{m-}$ est choisi parmi un halogénure d'hydrogène, l'acide nitrique, l'acide sulfurique, un acide carboxylique, un acide dicarboxylique, un acide tricarboxylique, un acide sulfonique, un acide dithiocarbamique, un alcool aliphatique, un alcool aromatique, un alcool hétérocyclique, un organosilanol, une amine primaire et une amine secondaire, l est un entier de 1 à 8 et égal au nombre de valence du métal de transition M, m est un entier de 1 à 3, satisfaisant à $l = m \times n$,
un complexe anionique ayant la formule (2) :

$$\{(B)^{j+}\}_k(M)^{l+}\{(A)^{m-}\}_{n'} \qquad (2)$$

dans laquelle $(B)^{j+}$ est au moins un ion choisi parmi un ion lithium, un ion sodium, un ion potassium, un ion tétraalkylammonium et un ion tétraalkylphosphonium, M et A sont tels que définis dans la formule (1), j est un entier de 1 à 3, l et m sont tels que définis dans formule (1), n' est un entier de 2 à 9, satisfaisant à $j \times k+l = m \times n'$, la molécule globale étant neutre, et
un complexe cationique ayant la formule (3) :

$$(M)^{1+}(L)_p\{(A)^{m-}\}_n \qquad (3)$$

dans laquelle M et A sont tels que définis dans la formule (1), L est un ligand neutre choisi parmi l'eau, le tétrahydrofurane, le diméthoxyéthane, l'acétonitrile, la pyridine, le benzène, le toluène, le p-cymène, le cyclooctane, le 1,5-hexadiène, le 1,5-cyclooctadiène, le norbornadiène et l'ammoniac, l, m et n sont tels que définis dans la formule (1), p est un entier de 1 à 6,

(B) au moins un ligand choisi parmi les composés isocyanures ayant la formule (4a) :

$$Y^1\text{-}(NC)_q \qquad (4a)$$

dans laquelle $Y^1$ est un groupe hydrocarboné monovalent en $C_1$-$C_{30}$, q est 1, et
(C) au moins un promoteur ayant la formule (11),

$$(M^4)^{4+}\{(G^4)^-\}_4 \qquad (11)$$

dans laquelle $M^4$ est le silicium, et $G^4$ est, à chaque occurrence, indépendamment un hydrogène, un groupe hydrocarboné monovalent en $C_1$-$C_{20}$, un groupe alcoxy en $C_1$-$C_{20}$ ou un groupe organosiloxy en $C_1$-$C_{20}$, à condition qu'au moins un des quatre groupes $G^4$ soit un hydrogène, à condition que le promoteur de formule (11) soit différent d'un composé hydrosilane utilisé en tant que substrat d'une réaction d'hydrosilylation.

**19.** Utilisation selon la revendication 18, dans laquelle le promoteur de formule (11) est au moins un promoteur choisi parmi le phénylsilane, le diphénylsilane, le diméthylphénylsilane, l'éthyldiméthylsilane, le 1,1,3,3-tétraméthyldisiloxane, le 1,1,1,3,3-pentaméthyldisiloxane, le 1,1,1,3,5,5,5-heptaméthyltrisiloxane, le triméthoxysilane, le triéthoxysilane, le diméthoxyméthylsilane, le diéthoxyméthylsilane et l'éthoxydiméthylsilane.

FIG.1

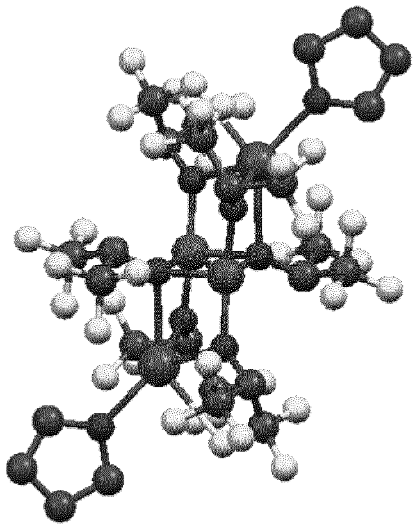

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013081794 A
- WO 2010016416 A
- JP 2012532885 A
- JP 2012532884 A
- JP 2013544824 A
- JP 2014502271 A
- JP 2014503507 A
- JP H06136126 A
- JP H06263780 A
- JP H01315344 A
- JP 3174616 B
- JP H07149780 A
- JP 2001131231 A
- JP 4007467 B
- JP 3599669 B
- JP 3854151 B
- JP 4249702 B
- JP 4934190 B
- JP 5032561 B
- WO 2013043846 A
- WO 2013043783 A
- WO 2013043912 A
- WO 2014021908 A
- WO 2013043785 A
- WO 2013043787 A


### Non-patent literature cited in the description


- **A. N. NESMEYANOV et al.** *Tetrahedron,* 1962, vol. 17, 61
- **M. S. WRIGHTON et al.** *J. Organomet. Chem.,* 1977, vol. 128, 345
- **F. KAKIUCHI et al.** *J. Organomet. Chem.,* 1993, vol. 456, 45
- **H. NAKAZAWA et al.** *J. Am. Chem. Soc.,* 2012, vol. 134, 804
- **H. NAKAZAWA et al.** *Organometallics,* 2012, vol. 31, 3825
- **P. J. CHIRIK et al.** *Organometallics,* 2012, vol. 31, 4886
- **P. J. CHIRIK et al.** *J. Am. Chem. Soc.,* 2004, vol. 126, 13794
- **P. J. CHIRIK et al.** *Science,* 2012, vol. 335, 567
- **A. J. CHALK et al.** *J. Am. Chem. Soc.,* 1965, vol. 87, 1133
- **A. J. CHALK et al.** *J. Am. Chem. Soc.,* 1967, vol. 89, 1640
- **A. J. CHALK et al.** *J. Organomet. Chem.,* 1970, vol. 21, 207
- **B. A. IZMAILOV et al.** *J. Organomet. Chem.,* 1978, vol. 149, 29
- **N. SONODA et al.** *J. Org. Chem.,* 1987, vol. 52, 4864
- **S. MURAI et al.** *Chem. Lett.,* 2000, vol. 14
- **M. S. WRIGHTON et al.** *Inorg. Chem.,* 1980, vol. 19, 3858
- **B. E. GRANT et al.** *J. Am. Chem. Soc.,* 1993, vol. 115, 2151
- **L. DENG et al.** *Angew. Chem. Int. Ed.,* 2013, vol. 52, 10845
- **M. UMENO et al.** *J. Organomet. Chem.,* 1973, vol. 50, 297
- **I. KOWNACKI et al.** *J. Organomet. Chem.,* 2000, vol. 597, 175
- **P. VALERGA et al.** *Dalton Trans.,* 2007, 3000
- **T. D. TILLEY et al.** *Chem. Commun.,* 2012, vol. 48, 7146
- **P. VALERGA et al.** *Organometallics,* 2012, vol. 31, 2175
- **T. A. NILE et al.** *J. Organomet. Chem.,* 1977, vol. 137, 293
- **M. R. BUCHMEISER et al.** *J. Organomet. Chem.,* 2005, vol. 690, 4433
- **X. LI et al.** *J. Organomet. Chem.,* 2011, vol. 696, 2116
- **S. P. NOLAN et al.** *Dalton Trans.,* 2013, vol. 42, 270
- **J. M. WALTERS et al.** *J. Molecular Catalysis,* 1985, vol. 29, 201
- **M. F. LAPPERT et al.** *J. Organomet. Chem.,* 1979, vol. 172, 153
- *J. Cluster, Sci.,* 2005, vol. 16, 331
- *Inorganic Chemistry,* 2007, vol. 46, 3378
- *Organometallics,* 1993, vol. 12, 2414
- *Russ. Chem. Bull.,* 1999, vol. 48, 1751
- *J. Inorg. Nucl. Chem.,* 1966, vol. 28, 2285
- *Organometallics,* 2013, vol. 21, 7153-7162
- *J. Cluster Sci.,* 2005, vol. 16, 331
- *Org. Synth.,* 2013, vol. 90, 358-366
- *Organometallics,* 2004, vol. 23, 3976-3981